(19) Europäisches Patentamt / European Patent Office / Office européen des brevets

(11) **EP 4 223 810 A1**

(12) **EUROPEAN PATENT APPLICATION**
published in accordance with Art. 153(4) EPC

(43) Date of publication:
**09.08.2023 Bulletin 2023/32**

(21) Application number: **21875704.5**

(22) Date of filing: **29.09.2021**

(51) International Patent Classification (IPC):
**C08F 279/02** (2006.01)   **C08J 3/16** (2006.01)
**C08J 3/205** (2006.01)   **C08L 51/00** (2006.01)
**C08L 101/00** (2006.01)   **C08L 63/00** (2006.01)

(52) Cooperative Patent Classification (CPC):
**C08F 279/02; C08J 3/16; C08J 3/205; C08L 51/00;
C08L 63/00; C08L 101/00**

(86) International application number:
**PCT/JP2021/035899**

(87) International publication number:
**WO 2022/071406 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020   JP 2020166054**

(71) Applicant: **Kaneka Corporation**
**Osaka-shi, Osaka 530-8288 (JP)**

(72) Inventors:
• **NAGAOKA, Yu**
**Takasago-shi, Hyogo 676-8688 (JP)**
• **ASHIDA, Tomoaki**
**Takasago-shi, Hyogo 676-8688 (JP)**
• **HYAKUMURA, Keisuke**
**Takasago-shi, Hyogo 676-8688 (JP)**
• **MATSUI, Takuma**
**Takasago-shi, Hyogo 676-8688 (JP)**

(74) Representative: **Vossius & Partner**
**Patentanwälte Rechtsanwälte mbB**
**Siebertstraße 3**
**81675 München (DE)**

(54) **LATEX AND RESIN COMPOSITION, AND METHODS FOR PRODUCING SAME**

(57)   Provided is latex that is useful in a novel technique which (a) has a reduced environmental impact, (b) has excellent dispersibility of fine polymer particles, and (c) enables efficient collection of fine polymer particles from a latex. Specifically, provided is a latex including, by a specific amount, fine polymer particles (A) which have a graft part which is constituted by a polymer that contains a specific structural unit and a resin (B) which has predetermined viscosity, in which the surfaces of the fine polymer particles (A) are covered with the resin (B).

EP 4 223 810 A1

**Description**

Technical Field

The present invention relates to: a latex; a resin composition; a method for producing the latex; and a method for producing the resin composition.

Background Art

Thermosetting resins have various kinds of excellent properties such as high heat resistance and high mechanical strength, and therefore are used in various fields. Out of the thermosetting resins, epoxy resins are used for a wide variety of purposes, as matrix resins for, for example, sealants for electronic circuits, paints, adhesive agents, and fiber-reinforced materials. The epoxy resins have excellent heat resistance, chemical resistance, insulating properties, and the like, but are insufficient in impact resistance which is a characteristic of thermosetting resins. One widely used method to improve the impact resistance of a thermosetting resin is to add an elastomer to the thermosetting resin.

Examples of the elastomer encompass fine polymer particles (for example, fine crosslinked polymer particles). It is easy to simply mix the fine polymer particles and the thermosetting resin (for example, epoxy resin). The fine polymer particles and the thermosetting resin are mixed, for example, in the following manner. Several fine polymer particles each of which has a particle size of less than 1 $\mu$m are collected to prepare a powdery and/or granular material of the fine polymer particles which has a particle size of not less than 1 $\mu$m. Thereafter, the powdery and/or granular material and the thermosetting resin are mechanically mixed. Note that a powdery and/or granular material of fine polymer particles, which is prepared by collecting several fine polymer particles in this manner, is referred to as secondary particles. Note also that fine polymer particles themselves, each of which has a particle size of less than 1 $\mu$m before being processed into a powdery and/or granular material, are referred to as primary particles. By the above mixing method, it is possible to disperse secondary particles of the fine polymer particles in the thermosetting resin. However, it is extremely difficult, at an industrial level, to disperse, in the thermosetting resin, primary particles of the fine polymer particles, each of which has a particle size of less than 1 $\mu$m.

In a case where the secondary particles (powdery and/or granular material) of the fine polymer particles and the thermosetting resin are mechanically mixed as described above to obtain a resin composition, the primary particles of the fine polymer particles remain agglutinating in the resin composition. Therefore, there is a problem that the surface appearance of a cured product obtained by curing the obtained resin composition is extremely poor. Therefore, various production methods have been proposed in each of which the fine polymer particles are dispersed in the form of the primary particles in the thermosetting resin.

Patent Literature 1 discloses a production method in which rubbery polymer particles (A) (fine polymer particles) are dispersed in a polymerizable organic compound (H) (thermosetting resin) with use of a solvent.

Patent Literature 2 discloses a production method in which a crosslinked rubbery copolymer (fine polymer particles) is dispersed in a compound (thermosetting resin) containing an epoxy group, with use of a dehydrated resin but without use of a solvent.

Citation List

[Patent Literature]

[Patent Literature 1]
PCT International Publication No. WO 2005/028546
[Patent Literature 2]
Japanese Patent Application Publication, Tokukaihei, No. 5-339471

Summary of Invention

Technical Problem

However, conventional techniques as described above are not sufficient from the viewpoint of (a) an environmental impact, (b) the dispersibility of fine polymer particles in a resin composition, and/or (c) efficient collection of fine polymer particles from a latex. Therefore, the conventional techniques have room for further improvement.

An embodiment of the present invention has been made in view of the above problems, and an object thereof is to provide a novel technique which (a) has a reduced environmental impact, (b) has excellent dispersibility of fine polymer particles, and (c) enables efficient collection of fine polymer particles from a latex.

Solution to Problem

As a result of diligent research in order to attain the above object, the inventors of the present invention made the following novel finding: In a latex containing fine polymer particles, covering the fine polymer particles with a resin having a specific viscosity makes it possible to efficiently collect the fine polymer particles in a state which is impurities can be easily removed. Furthermore, the inventors of the present invention independently discovered that a resin composition containing the fine polymer particles obtained by such a method exhibits favorable dispersibility when mixed with a matrix resin. Consequently, the inventors of the present invention completed the present invention.

Specifically, a latex in accordance with an embodiment of the present invention is

a latex comprising fine polymer particles (A) and a resin (B), in which:

the fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers;
the resin (B) is, at 25°C, a liquid which has a viscosity of 100 mPa·s to 1,000,000 mPa·s, a semisolid, or a solid;
surfaces of the fine polymer particles (A) are covered with the resin (B);
the fine polymer particles (A) covered with the resin (B) have a volume-average particle size of 1.030 $X\mu$m to 4.000 $X\mu$m,
where X is a volume-average particle size of the fine polymer particles (A) before the fine polymer particles (A) are covered with the resin (B); and
the fine polymer particles (A) are contained in an amount of 50% by weight to 99% by weight and the resin (B) is contained in an amount of 1% by weight to 50% by weight, where 100% by weight represents a total amount of the fine polymer particles (A) and the resin (B).

A resin composition production method in accordance with an embodiment of the present invention includes:

a resin mixing step of mixing a resin (B) with a latex precursor containing fine polymer particles (A);
a shearing step of applying shearing stress to a mixture obtained in the resin mixing step;
a coagulant adding step of adding a coagulant to a mixture obtained in the shearing step; and
a mixing step of mixing a mixture obtained in the coagulant adding step, in which
the mixing step includes a step of mixing the mixture obtained in the coagulant adding step such that a coagulate, which is obtained by separating the mixture obtained in the mixing step into the coagulate and a water component, contains not less than 20% by weight of the fine polymer particles (A) with respect to 100% by weight of the coagulate,
the fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers,
the resin (B) is, at 25°C, a liquid which has a viscosity of 100 mPa·s to 1,000,000 mPa·s, a semisolid, or a solid, and
the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B).

A resin composition production method in accordance with another embodiment of the present invention includes:

a resin mixing step of mixing a resin (B) with a latex precursor containing fine polymer particles (A);
a shearing step of applying shearing stress to a mixture obtained in the resin mixing step;
a coagulate collecting step of collecting a coagulate obtained in the shearing step; and
a rinsing step of rinsing the coagulate obtained in the coagulate collecting step, in which
the rinsing step includes a step of mixing a mixture of the coagulate and rinse water such that, in a post-rinsing coagulate obtained by separating a mixture obtained in the rinsing step into the post-rinsing coagulate and a post-rinsing water component, an amount of sulfur (S) and phosphorus (P) derived from an emulsifying agent are not more than 2000 ppm with respect to a weight of the post-rinsing coagulate,
the fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers,

the resin (B) is, at 25°C, a liquid which has a viscosity of 100 mPa·s to 1,000,000 mPa·s, a semisolid, or a solid, and the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B).

A resin composition in accordance with an embodiment of the present invention includes:

fine polymer particles (A) which have a graft part that is constituted by a polymer that contains, as one or more structural units, one or more structural units derived from at least one type of monomer selected from the group consisting of aromatic vinyl monomers, vinyl cyanide monomers, and (meth)acrylate monomers; and
a resin (B) which is, at 25°C, a liquid that has a viscosity of 100 mPa·s to 1,000,000 mPa·s, a semisolid, or a solid, in which
the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B),
the resin composition substantially does not contain an organic solvent,
the resin composition contains sulfur (S) in an amount of not more than 2000 ppm,
dispersibility of the fine polymer particles (A) in a resin composition W is not more than 0 $\mu$m, when evaluated in accordance with JIS K5101 with use of a grind gauge,
wherein

the resin composition W is prepared such that the fine polymer particles (A) are contained in an amount of 5% by weight and the resin (B) is contained in an amount of 95% by weight, where 100% by weight represents a total amount of the fine polymer particles (A) and the resin (B), and
a standard deviation of a particle size distribution of the fine polymer particles (A) in a solution Z is not more than 0.250,
wherein
the solution Z is prepared by mixing a mixture of 1 part by weight of the resin composition W and 1000 parts by weight of the organic solvent with use of Shaker SA31 (Yamato Scientific Co., Ltd.) at a speed of 10 for 30 minutes, and
the particle size distribution is measured with use of ZETASIZER NANO ZSP (manufactured by Malvern Panalytical Ltd.) and is indicated by a scattering intensity.

Advantageous Effects of Invention

An aspect of the present invention brings about such an effect that: an environmental impact is small; dispersibility of fine polymer particles is excellent; and fine polymer particles can be efficiently collected from a latex.

Description of Embodiments

The following description will discuss embodiments of the present invention. The present invention is not, however, limited to these embodiments. The present invention is not limited to the configurations described below, but may be altered in various ways within the scope of the claims. The present invention also encompasses, in its technical scope, any embodiment or Example derived by combining technical means disclosed in differing embodiments and Examples. Further, it is possible to form a new technical feature by combining the technical means disclosed in the respective embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

[1. Latex]

A latex in accordance with an embodiment of the present invention contains fine polymer particles (A) and a resin (B). The fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers. The resin (B) is, at 25°C, a liquid which has a viscosity of 100 mPa·s to 1,000,000 mPa·s, a semisolid, or a solid. The surfaces of the fine polymer particles (A) are covered with the resin (B). The volume-average particle size of the fine polymer particles (A) covered with the resin (B) is 1.030 X$\mu$m to 4.000 X$\mu$m, where X is a volume-average particle size of the fine polymer particles (A) before the fine polymer particles (A) are covered with the resin (B). The fine polymer particles (A) are contained in an amount of 50% by weight to 99% by weight and the resin (B) is contained in an amount of 1% by weight to 50% by weight, where 100% by weight represents the total amount of the fine polymer particles (A) and the resin (B). It can be said that, in the latex in accordance with an embodiment of the present invention, the fine polymer particles (A) are dispersed in water in a state in which the surfaces of the fine polymer particles (A) are covered the resin (B).

In the present specification, the term "latex" is intended to mean a solution which contains a solvent, the fine polymer particles (A), and a resin (B) and in which the fine polymer particles (A) are present in such a manner as to be dispersed in the solvent. The "latex" can also be referred to as a "suspension of fine polymer particles (A) which contains a resin (B)". A latex, in which the solvent is water, can also called "aqueous latex" or can be referred to as an "aqueous suspension of fine polymer particles (A) which contains a resin (B)". In the solvent in the latex, the fine polymer particles (A) are preferably dispersed in the form of primary particles.

Hereinafter in the present specification, the "latex in accordance with an embodiment of the present invention" may also be simply referred to as "present latex".

The inventors of the present invention independently discovered: (a) that a coagulate containing the fine polymer particles (A) and the resin (B) can be more efficiently collected from a latex containing the fine polymer particles (A) whose surfaces are covered with the resin (B) than from a latex containing the fine polymer particles (A) whose surfaces are not covered with the resin (B); and (b) the coagulate containing a smaller amount of impurities, such as an emulsifying agent, present in the latex can be collected from a latex containing the fine polymer particles (A) whose surfaces are covered with the resin (B) than from a latex containing the fine polymer particles (A) whose surfaces are not covered with the resin (B). The reasons for these facts are inferred as follows, but an embodiment of the present invention is not limited to the following: In a case where the fine polymer particles (A) whose surfaces are not covered with the resin (B) and which are contained in the latex are caused to agglutinate to collect a coagulate containing the fine polymer particles (A), the impurities such as the emulsifying agent present in the latex are encapsulated in the coagulate. The impurities encapsulated in the coagulate can remain encapsulated in the coagulate even after the rinsing step, that is, it is difficult to remove the impurities. In contrast, in a case where the fine polymer particles (A) whose surfaces are covered with the resin (B) and which are contained in the latex (i.e., the present latex) are caused to coagulate together with the resin (B) to obtain a coagulate containing the fine polymer particles (A) and the resin (B), the resin (B) present on the surfaces of the fine polymer particles (A) come into close contact with each other without any gaps therebetween in the coagulate. As a result, the impurities may move to the surface of the coagulate. As a result, the impurities are not encapsulated in the coagulate containing the fine polymer particles (A) and the resin (B). Therefore, by mixing the coagulate with water, it is possible to easily extract the impurities in the coagulate into water (aqueous phase). This makes it possible to efficiently obtain a coagulate which contains the fine polymer particles (A) and the resin (B) and which contains a smaller amount of impurities.

That is, through the state of the present latex, the fine polymer particles (A) can be efficiently collected such that the impurities can be easily removed. In other words, by going through the state of the present latex, it is possible to efficiently obtain a coagulate which contains the fine polymer particles (A) and the resin (B) and which contains a smaller amount of impurities. It can also be said that the coagulate containing the fine polymer particles (A) and the resin (B) is a resin composition. By mixing the resin composition, which is a coagulate containing the fine polymer particles (A) and the resin (B), with the matrix resin described later, it is possible to obtain a resin composition that contains a smaller proportion of the fine polymer particles (A) than the coagulate. Therefore, the present latex can also be referred to as an intermediate product obtained in the process of obtaining the resin composition. In addition, an organic solvent is not required in the process of collecting the fine polymer particles (A) from the present latex. Therefore, the method of collecting the fine polymer particles (A) from the present latex has also an advantage of having a smaller environmental impact. Furthermore, in the coagulate containing the fine polymer particles (A) and the resin (B) obtained from the present latex or in the resin composition containing the coagulate, the fine polymer particles (A) can be dispersed well in the form of primary particles. That is, there is also an advantage that it is possible to efficiently obtain a resin composition which has excellent dispersibility of the fine polymer particles (A) by going through the state of the present latex.

(1-1. Fine polymer particles (A))

The fine polymer particles (A) are fine particles obtained by polymerization. The fine polymer particles (A) have a graft part that is constituted by (that contains) a polymer that contains, as one or more structural units, one or more structural units derived from at least one type of monomer selected from the group consisting of aromatic vinyl monomers, vinyl cyanide monomers, and (meth)acrylate monomers. Provided that the fine polymer particles (A) have a graft part, the other structures are not particularly limited. The fine polymer particles (A) can also be referred to as a graft copolymer.

(Graft part)

In the present specification, a polymer grafted to any polymer is referred to as a graft part. The graft part is (contains) a polymer that contains, as one or more structural units, one or more structural units derived from at least one type of monomer selected from the group consisting of aromatic vinyl monomers, vinyl cyanide monomers, and (meth)acrylate monomers. The graft part has the above feature, and therefore can play various roles. The "various roles" are, for example, (a) improving compatibility between the fine polymer particles (A) and the resin (B), (b) improving compatibility between the fine polymer particles (A) and a thermosetting resin, (c) improving the dispersibility of the fine polymer particles (A) in a thermosetting resin which is a matrix resin with which the resin composition that is the agglutinate containing the fine polymer particles (A) and the resin (B) is mixed, and (d) allowing the fine polymer particles (A) to be dispersed in the form of primary particles in a/the resin composition or in a cured product obtained from the resin composition.

Specific examples of the aromatic vinyl monomers encompass styrene, $\alpha$-methylstyrene, p-methylstyrene, and divinylbenzene.

Specific examples of the vinyl cyanide monomers encompass acrylonitrile and methacrylonitrile.

Specific examples of the (meth)acrylate monomers encompass methyl (meth)acrylate, ethyl (meth)acrylate, butyl (meth)acrylate, hydroxyethyl (meth)acrylate, and hydroxybutyl (meth)acrylate. In the present specification, (meth)acrylate is intended to mean acrylate and/or methacrylate.

The at least one type of monomer selected from the group consisting of aromatic vinyl monomers, vinyl cyanide monomers, and (meth)acrylate monomers may be used alone or in combination of two or more.

The graft part contains a structural unit derived from an aromatic vinyl monomer, a structural unit derived from a vinyl cyanide monomer, and a structural unit derived from a (meth)acrylate monomer, together in an amount of preferably 10% by weight to 95% by weight, more preferably 30% by weight to 92% by weight, even more preferably 50% by weight to 90% by weight, particularly preferably 60% by weight to 87% by weight, most preferably 70% by weight to 85% by weight, with respect to 100% by weight of the graft part.

The graft part preferably contains, as a structural unit, a structural unit derived from a monomer having a reactive group. The monomer having a reactive group is preferably a monomer having at least one type of reactive group selected from the group consisting of an epoxy group, an oxetane group, a hydroxy group, an amino group, an imide group, a carboxylic acid group, a carboxylic anhydride group, a cyclic ester, a cyclic amide, a benzoxazine group, and a cyanate ester group, and is more preferably a monomer having at least one type of reactive group selected from the group consisting of an epoxy group, a hydroxy group, and a carboxylic acid group, and is most preferably a monomer having an epoxy group. According to the above feature, it is possible to (i) chemically bond the graft part of the fine polymer particles (A) and the resin (B) (e.g. thermoplastic resin) in the resin composition and (ii) chemically bond the graft part of the fine polymer particles (A) and a thermosetting resin in the resin composition. Thus, in the resin composition or in a cured product obtained from the resin composition, it is possible to maintain a favorable state of dispersion of the fine polymer particles (A) without causing the fine polymer particles (A) to agglutinate.

Specific examples of the monomer having epoxy group encompass glycidyl-group-containing vinyl monomers such as glycidyl (meth)acrylates, 4-hydroxybutyl (meth)acrylate glycidyl ethers, and allyl glycidyl ethers.

Specific examples of the monomer having hydroxy group encompass (a) hydroxy straight-chain alkyl (meth)acrylates (particularly preferably hydroxy straight chain C1-C6 alkyl(meth)acrylates) such as 2-hydroxyethyl (meth)acrylates, hydroxypropyl (meth)acrylates, and 4-hydroxybutyl (meth)acrylates, (b) caprolactone-modified hydroxy (meth)acrylates, (c) hydroxy branching alkyl (meth)acrylates such as $\alpha$-(hydroxymethyl) methyl acrylates and $\alpha$-(hydroxymethyl) ethyl acrylates, and (d) hydroxyl-group-containing (meth)acrylates such as mono (meth)acrylates of a polyester diol (particularly preferably saturated polyester diol) obtained from a dicarboxylic acid (e.g. phthalic acid) and a dihydric alcohol (e.g. propylene glycol). It should be noted that "straight chain C1-C6 alkyl" is intended to mean a straight-chain alkyl having 1 to 6 carbon atoms.

Specific examples of the monomer having a carboxylic acid group encompass: (a) monocarboxylic acids such as acrylic acid, methacrylic acid, and crotonic acid; and (b) dicarboxylic acids such as maleic acid, fumaric acid, and itaconic acid. Any of the monocarboxylic acids is suitably used as the monomer having carboxylic acid group.

These monomers having reactive group(s) may be used alone or in combination of two or more.

The graft part contains structural unit(s) derived from monomer(s) having reactive group(s) in an amount of preferably 0.5% by weight to 90% by weight, more preferably 1% by weight to 50% by weight, even more preferably 2% by weight to 35% by weight, particularly preferably 3% by weight to 20% by weight, with respect to 100% by weight of the graft part. In a case where the graft part contains the structural unit derived from the monomer(s) having the reactive group(s) in an amount of not less than 0.5% by weight with respect to 100% by weight of the graft part, the resin composition to be obtained can provide a cured product which has enough impact resistance. In a case where the graft part contains the structural unit derived from the reactive group-containing monomer in an amount of not more than 90% by weight with respect to 100% by weight of the graft part, the resin composition to be obtained has advantages that (i) the resin composition can provide a cured product which has sufficient impact resistance and (ii) the resin composition has favorable storage stability.

The structural unit(s) derived from the monomer(s) having reactive group(s) is preferably contained in the graft part, and more preferably contained only in the graft part.

The graft part may contain, as a structural unit, a structural unit derived from a polyfunctional monomer. In a case where the graft part contains the structural unit derived from the polyfunctional monomer, there are the following advantages, for example: (a) it is possible to prevent swelling of the fine polymer particles (A) in the resin composition; (b) since the resin composition has a low viscosity, the resin composition tends to have favorable handleability; and (c) the dispersibility of the fine polymer particles (A) in the thermosetting resin is improved.

In a case where the graft part does not contain the structural unit derived from the polyfunctional monomer, the resin composition to be obtained can provide a cured product which has more excellent toughness and impact resistance, as compared to a case where the graft part contains the structural unit derived from the polyfunctional monomer.

It can also be said that the polyfunctional monomer is a monomer having two or more radical-polymerizable reactive groups in an identical molecule. The radical-polymerizable reactive groups are each preferably a carbon-carbon double bond. Examples of the polyfunctional monomer exclude butadiene and include (meth)acrylates having an ethylenically unsaturated double bond(s), such as allyl alkyl (meth)acrylates and allyl oxyalkyl (meth)acrylates. Examples of a monomer having two (meth)acrylic groups encompass ethylene glycol di(meth)acrylate, butylene glycol di(meth)acrylate, butanediol di(meth)acrylate, hexanediol di(meth)acrylate, cyclohexane dimethanol di(meth)acrylate, and polyethylene glycol di(meth)acrylates. Examples of the polyethylene glycol di(meth)acrylates encompass triethylene glycol di(meth)acrylate, tripropylene glycol di(meth)acrylate, tetraethylene glycol di(meth)acrylate, and polyethylene glycol (600) di(meth)acrylate. Examples of a monomer having three (meth)acrylic groups encompass alkoxylated trimethylolpropane tri(meth)acrylates, glycerol propoxy tri(meth)acrylate, pentaerythritol tri(meth)acrylate, and tris(2-hydroxyethyl)isocyanurate tri(meth)acrylate. Examples of the alkoxylated trimethylolpropane tri(meth)acrylates encompass trimethylolpropane tri(meth)acrylate and trimethylolpropane triethoxy tri(meth)acrylate. Examples of a monomer having four (meth)acrylic groups encompass pentaerythritol tetra(meth)acrylate and ditrimethylolpropane tetra(meth)acrylate. Examples of a monomer having five (meth)acrylic groups encompass dipentaerythritol penta(meth)acrylate. Examples of a monomer having six (meth)acrylic groups encompass ditrimethylolpropane hexa(meth)acrylate. Examples of the polyfunctional monomer also encompass diallyl phthalate, triallyl cyanurate, triallyl isocyanurate, and divinylbenzene. It should be noted that a "radical-polymerizable reactive group" can also be called a "reactive group having radical polymerizability", and is intended to mean a functional group or a bond that can be a starting point of a polymerization reaction by radicals.

Out of the above polyfunctional monomers, examples of a polyfunctional monomer which can be preferably used to form the graft part by polymerization encompass allyl methacrylate, ethylene glycol di(meth)acrylate, butylene glycol di(meth)acrylate, butanediol di(meth)acrylate, hexanediol di(meth)acrylate, cyclohexane dimethanol di(meth)acrylate, and polyethylene glycol di(meth)acrylates. Such polyfunctional monomers may be used alone or in combination of two or more.

The graft part contains structural unit(s) derived from polyfunctional monomer(s) in an amount of preferably 1% by weight to 20% by weight, more preferably 5% by weight to 15% by weight, with respect to 100% by weight of the graft part.

In formation of the graft part by polymerization, the foregoing monomers may be used alone or in combination of two or more. The graft part may contain a structural unit derived from another monomer, in addition to the structural units derived from the above-listed monomers.

The graft part is preferably a polymer grafted to an elastic body (described later).

(Glass transition temperature of graft part)

The graft part has a glass transition temperature of preferably not higher than 190°C, more preferably not higher than 160°C, more preferably not higher than 140°C, more preferably not higher than 120°C, more preferably not higher than 80°C, more preferably not higher than 70°C, more preferably not higher than 60°C, more preferably not higher than 50°C, more preferably not higher than 40°C, more preferably not higher than 30°C, more preferably not higher than 20°C, more preferably not higher than 10°C, more preferably not higher than 0°C, more preferably not higher than -20°C, more preferably not higher than -40°C, more preferably not higher than -45°C, more preferably not higher than -50°C, more preferably not higher than -55°C, more preferably not higher than -60°C, more preferably not higher than -65°C, more preferably not higher than -70°C, more preferably not higher than -75°C, more preferably not higher than -80°C, more preferably not higher than -85°C, more preferably not higher than -90°C, more preferably not higher than -95°C, more preferably not higher than -100°C, more preferably not higher than -105°C, more preferably not higher than -110°C, more preferably not higher than -115°C, even more preferably not higher than -120°C, particularly preferably not higher than -125°C.

The glass transition temperature of the graft part is preferably not lower than 0°C, more preferably not lower than 30°C, more preferably not lower than 50°C, more preferably not lower than 70°C, even more preferably not lower than 90°C, particularly preferably not higher than 110°C.

The Tg of the graft part can be determined by, for example, the composition of the structural unit contained in the graft part. In other words, it is possible to adjust the Tg of the resulting graft part by changing the composition of the monomer used to produce (form by polymerization) the graft part.

The Tg of the graft part can be obtained by carrying out viscoelasticity measurement with use of a planar plate made of fine polymer particles (A). Specifically, the Tg can be measured as follows: (1) a graph of tan δ is obtained by carrying out dynamic viscoelasticity measurement with respect to a planar plate made of the fine polymer particles (A), with use of a dynamic viscoelasticity measurement device (for example, DVA-200, manufactured by IT Keisoku Seigyo Kabushikigaisha) under a tension condition; and (2) in the graph of tan δ thus obtained, the peak temperature of tan δ is regarded as the glass transition temperature. Note, here, that in a case where a plurality of peaks are found in the graph of tan δ, the highest peak temperature is regarded as the glass transition temperature of the graft part.

(Graft rate of graft part)

In an embodiment of the present invention, the fine polymer particles (A) may have a polymer which is identical in composition to the graft part and which is not grafted to a polymer (e.g. elastic body described later). In the present specification, a "polymer that is equal in composition to the graft part but is not grafted to a polymer" may be referred to as "non-grafted polymer". The non-grafted polymer constitutes a part of the fine polymer particles (A) in accordance with an embodiment of the present invention. It can also be said that the non-grafted polymer is a polymer that is not grafted to a polymer, out of polymers produced during formation of the graft part by polymerization.

In the present specification, the proportion of (i) a polymer which is grafted to a polymer to (ii) the polymers produced during the formation of the graft part by polymerization, i.e., the proportion of the graft part, is referred to as a "graft rate". In other words, the graft rate is a value represented by the following expression: (weight of graft part) / {(weight of graft part) + (weight of non-grafted polymer)} × 100.

The graft rate of the graft part is preferably not less than 70%, more preferably not less than 80%, even more preferably not less than 90%. In a case where the graft rate is not less than 70%, there is an advantage that the viscosity of the resin composition does not become too high.

In the present specification, the graft rate is calculated by the following method. First, an aqueous suspension containing the fine polymer particles (A) is obtained. Next, a powdery and/or granular material of the fine polymer particles (A) is obtained from the aqueous suspension. A specific example of a method of obtaining the powdery and/or granular material of the fine polymer particles (A) from the aqueous suspension is a method of obtaining the powdery and/or granular material of the fine polymer particles (A) by (i) causing the fine polymer particles (A) in the aqueous suspension to coagulate, (ii) dehydrating the coagulate thus obtained, and (iii) further drying the coagulate. Next, 2 g of the powdery and/or granular material of the fine polymer particles (A) is dissolved in 50 mL of methyl ethyl ketone (hereinafter also referred to as "MEK"). The MEK solution of the powder thus obtained is separated into a part soluble in MEK (MEK-soluble part) and a part insoluble in MEK (MEK-insoluble part). Specifically, the following (1) through (3) are carried out: (1) The obtained MEK solution of the powder is subjected to centrifugal separation with use of a centrifugal separator (CP60E, manufactured by Hitachi Koki Co., Ltd.) at 30000 rpm for 1 hour, and thereby separated into the MEK-soluble part and the MEK-insoluble part. (2) The obtained MEK-soluble part and MEK are mixed. The resultant MEK mixture is subjected to centrifugal separation with use of the foregoing centrifugal separator at 30000 rpm for 1 hour, and the MEK mixture is separated into the MEK-soluble part and the MEK-insoluble part. (3) The above operation (2) is repeated once (that is, the centrifugal separation is carried out three times total). The above operation produces a concentrated MEK-soluble part. Next, 20 ml of the concentrated MEK-soluble part is mixed with 200 ml of methanol. An aqueous calcium chloride solution in which 0.01 g of calcium chloride is dissolved in water is added to the obtained mixture, and the mixture thus obtained is stirred for 1 hour. After that, the obtained mixture is separated into a methanol-soluble part and a methanol-insoluble part. The weight of the methanol-insoluble part is used as the amount of a free polymer (FP).

The graft rate is calculated with use of the following expression.

$$\text{Graft rate } (\%) = 100 - [(\text{amount of FP})/\{(\text{amount of FP}) + (\text{weight of MEK-insoluble part})\}]/(\text{weight of polymer of graft part}) \times 10000$$

Note that the weight of a polymer other than the graft part is the amount of monomer introduced for formation of the polymer other than the graft part. The polymer other than the graft part is, for example, the elastic body. In a case where the fine polymer particles (A) contain a surface-crosslinked polymer (described later), the polymer other than the graft part includes both the elastic body and the surface-crosslinked polymer. The weight of the polymer of the graft part is the amount of monomer introduced for formation of the polymer of the graft part. In calculation of the graft rate, a method of causing the fine polymer particles (A) to coagulate is not limited to any particular one, and a method in which a solvent is used, a method in which a coagulant is used, a method in which the aqueous suspension is sprayed, or the like can be employed.

(Variations of graft part)

In an embodiment of the present invention, the graft part may be constituted by only one type of graft part which has a structural unit having identical composition. In an embodiment of the present invention, the graft part may be constituted by a plurality of types of graft parts which have structural units different from each other in composition.

A case where the graft part is constituted by a plurality of types of graft parts in an embodiment of the present invention will be described. In this case, the plurality of types of graft parts will be referred to as a graft part$_1$, a graft parts, ... a graft part$_n$ ("n" is an integer of 2 or more). The graft part may include a complex of the graft part$_1$, the graft parts ..., and the graft part$_n$ which are separately formed by polymerization. The graft part may include a polymer obtained by forming the graft part$_1$, the graft part$_2$, ..., and the graft part$_n$ in order by polymerization. Forming a plurality of polymerized parts (graft parts) by polymerization in order in this manner is also referred to as multistage polymerization. A polymer obtained by multistage polymerization of a plurality of types of graft parts is also referred to as a multistage-polymerization graft part. A method of producing a multistage-polymerization graft part will be later described in detail.

In a case where the graft part is constituted by the plurality of types of graft parts, all of the plurality of types of graft parts do not need to be grafted to the elastic body. In a case where the graft part is constituted by a plurality of types of graft parts, it is only necessary that at least part of at least one of the plurality of types of graft parts be grafted to the elastic body. The other of the plurality of types of graft parts (the other types of graft parts) may be grafted to the at least one of the plurality of types of graft parts which is grafted to the elastic body. In a case where the graft part is constituted by the plurality of types of graft parts, the graft part may have a plurality of types of polymers which are identical in composition to the plurality of types of graft parts and which are not grafted to the elastic body (a plurality of types of non-grafted polymers).

The multistage-polymerization graft part constituted by the graft part$_1$, the graft part$_2$, ... the graft part$_n$ will be described. In the multistage-polymerization graft part, the graft part$_n$ can cover at least part of a graft part$_{n-1}$ or the whole of the graft part$_{n-1}$. In the multistage-polymerization graft part, part of the graft part$_n$ may be located inside the graft part$_{n-1}$.

In the multistage-polymerization graft part, the graft parts may form a layer structure. For example, in a case where the multistage-polymerization graft part is constituted by the graft part$_1$, the graft parts, and a graft parts, aspects of the present invention also include an aspect in which the graft part, forms the innermost layer of the graft part, a layer of the graft parts is formed on the outer side of the graft part$_1$, and a layer of the graft parts is formed on the outer side of the layer of the graft parts as the outermost layer. Thus, it can also be said that the multistage-polymerization graft part in which the graft parts form a layer structure is a multilayered graft part. In other words, in an embodiment of the present invention, the graft part may include (a) a complex of plurality of types of graft parts, (b) a multistage-polymerization graft part, and/or (c) a multilayered graft part.

In a case where a polymer (e.g. elastic body described later) and the graft part are formed in this order by polymerization in production of the fine polymer particles (A), at least part of the graft part can cover at least part of the polymer in the resulting fine polymer particles (A). The wording "a polymer and a graft part are formed in this order by polymerization" can be reworded as follows: a polymer and the graft part are subjected to multistage polymerization. It can also be said that the fine polymer particles (A) obtained by multistage polymerization of the polymer and a graft part are a multistage polymer.

In a case where the fine polymer particles (A) are constituted by a multistage polymer, the graft part can cover at least part or the whole of the polymer (e.g. elastic body described later). In a case where the fine polymer particles (A) are constituted by a multistage polymer, part of the graft part may be located inside the polymer. At least part of the graft part preferably covers at least part of the polymer (e.g. elastic body described later). In other words, at least part of the graft part is preferably present on the outermost side of the fine polymer particles (A).

In a case where the fine polymer particles (A) are constituted by a multistage polymer, a polymer (e.g. the elastic body described later) and the graft part may form a layer structure. For example, aspects of the present invention also include an aspect in which the elastic body forms the innermost layer (also referred to as a core layer) and a layer of the graft part is formed on the outer side of the elastic body as the outermost layer (also referred to as a shell layer). It can also be said that a structure in which the elastic body is present as a core layer and the graft part is present as a shell layer is a core-shell structure. It can also be said that the fine polymer particles (A) that contain the elastic body and the graft part which form a layer structure (core-shell structure) are constituted by a multilayered polymer or a core-shell polymer. In other words, in an embodiment of the present invention, the fine polymer particles (A) may be constituted by a multistage polymer and/or a multilayered polymer or a core-shell polymer. Note, however, that the fine polymer particles (A) are not limited to the above feature, provided that the fine polymer particles (A) have the graft part.

(Elastic body)

The fine polymer particles (A) preferably further have the elastic body. The foregoing graft part is preferably a polymer grafted to an elastic body. That is, the fine polymer particles (A) are preferably constituted by a rubber-containing graft copolymer which has the elastic body and the graft part grafted to the elastic body. In a case where the fine polymer particles (A) have an elastic body, that is, in a case where the fine polymer particles (A) are a rubber-containing graft copolymer, there is an advantage that the fine polymer particles (A) can be easily dispersed in the form of primary particles in a resin composition or a cured product thereof. The following description will discuss an embodiment of the present invention while taking as an example a case where the fine polymer particles (A) are constituted by a rubber-containing graft copolymer.

The elastic body preferably contains at least one selected from the group consisting of diene-based rubbers, (meth)acrylate-based rubbers, and organosiloxane-based rubbers. The elastic body may contain natural rubber other than the above described rubber. The elastic body can also be referred to as elastic part(s) or rubber particle(s).

A case where the elastic body includes a diene-based rubber (case A) will be described. In the case A, the resin composition to be obtained can provide a cured product which has excellent toughness and impact resistance. It can be said that a cured product that has excellent toughness and/or excellent impact resistance is a cured product that has excellent durability.

The diene-based rubber is an elastic body containing, as a structural unit, a structural unit derived from a diene-based monomer. The diene-based monomer can also be referred to as a conjugated diene-based monomer. In the case A, the diene-based rubber may contain (i) the structural unit derived from the diene-based monomer in an amount of 50% by weight to 100% by weight and (ii) a structural unit derived from a vinyl-based monomer, which is different from the diene-based monomer and which is copolymerizable with the diene-based monomer, in an amount of 0% by weight to 50% by weight, with respect to 100% by weight of structural units. In the case A, the diene-based rubber may contain, as a structural unit, a structural unit derived from a (meth)acrylate-based monomer in an amount smaller than the amount of the structural unit derived from the diene-based monomer.

Examples of the diene-based monomer encompass 1,3-butadiene, isoprene (also called 2-methyl-1,3-butadiene), and 2-chloro-1,3-butadiene. These diene-based monomers may be used alone or in combination of two or more.

Examples of the vinyl-based monomer which is different from the diene-based monomer and which is copolymerizable with the diene-based monomer (hereinafter also referred to as vinyl-based monomer A) encompass: vinyl arenes such as styrene, α-methylstyrene, monochlorostyrene, and dichlorostyrene; vinyl carboxylic acids such as acrylic acid and methacrylic acid; vinyl cyanides such as acrylonitrile and methacrylonitrile; vinyl halides such as vinyl chloride, vinyl bromide, and chloroprene; vinyl acetate; alkenes such as ethylene, propylene, butylene, and isobutylene; and polyfunctional monomers such as diallylphthalate, triallyl cyanurate, triallyl isocyanurate, and divinylbenzene. These vinyl-based monomers A may be used alone or in combination of two or more. Out of these vinyl-based monomers A, styrene is particularly preferable. Note that, in the diene-based rubber in the case A, the structural unit derived from the vinyl-based monomer A is an optional component. Note that, in the case A, the diene-based rubber may be constituted by only the structural unit derived from the diene-based monomer.

In the case A, the diene-based rubber is preferably (i) butadiene rubber which is constituted by a structural unit derived from 1,3-butadiene (also referred to as polybutadiene rubber) or (ii) butadiene-styrene rubber which is a copolymer of 1,3-butadiene and styrene (also referred to as polystyrene-butadiene). The diene-based rubber is more preferably butadiene rubber. According to the above feature, since the fine polymer particles (A) contain the diene-based rubber, a desired effect can be more brought about. The butadiene-styrene rubber is more preferable in that the butadiene-styrene rubber makes it possible to, by adjustment of a refractive index, increase the transparency of a cured product to be obtained.

A case where the elastic body includes a (meth)acrylate-based rubber (case B) will be described. The case B allows wide-ranging polymer design for the elastic body by combinations of many types of monomers.

The (meth)acrylate-based rubber is an elastic body containing, as a structural unit, a structural unit derived from a (meth)acrylate-based monomer. In the case B, the (meth)acrylate-based rubber may contain (i) the structural unit derived from the (meth)acrylate-based monomer in an amount of 50% by weight to 100% by weight and (ii) a structural unit derived from a vinyl-based monomer, which is different from the (meth)acrylate-based monomer and which is copolymerizable with the (meth)acrylate-based monomer, in an amount of 0% by weight to 50% by weight, with respect to 100% by weight of structural units. In the case B, the (meth)acrylate-based rubber may contain, as a structural unit, a structural unit derived from a diene-based monomer in an amount smaller than the amount of the structural unit derived from the (meth)acrylate-based monomer.

Examples of the (meth)acrylate-based monomer encompass: alkyl (meth)acrylates such as methyl (meth)acrylate, ethyl (meth)acrylate, butyl (meth)acrylate, 2-ethylhexyl (meth)acrylate, octyl (meth)acrylate, dodecyl (meth)acrylate, stearyl (meth)acrylate, and behenyl (meth)acrylate; aromatic ring-containing (meth)acrylates such as phenoxyethyl (meth)acrylate and benzyl (meth)acrylate; hydroxyalkyl (meth)acrylates such as 2-hydroxyethyl (meth)acrylate and 4-hydroxybutyl (meth)acrylate; glycidyl (meth)acrylates such as glycidyl (meth)acrylate and glycidyl alkyl (meth)acrylate; alkoxy alkyl (meth)acrylates; allyl alkyl (meth)acrylates such as allyl (meth)acrylate and allyl alkyl (meth)acrylates; and polyfunctional (meth)acrylates such as monoethylene glycol di(meth)acrylate, triethylene glycol di(meth)acrylate, and tetraethylene glycol di(meth)acrylate. These (meth)acrylate-based monomers may be used alone or in combination of two or more. Out of these (meth)acrylate-based monomers, ethyl (meth)acrylate, butyl (meth)acrylate, and 2-ethylhexyl (meth)acrylate are preferred, and butyl (meth)acrylate is more preferred.

In the case B, the (meth)acrylate-based rubber is preferably at least one selected from the group consisting of ethyl (meth)acrylate rubbers, butyl (meth)acrylate rubbers, and 2-ethylhexyl (meth)acrylate rubbers, and is more preferably a butyl (meth)acrylate rubber. An ethyl (meth)acrylate rubber is a rubber composed of structural units derived from ethyl (meth)acrylate(s), a butyl (meth)acrylate rubber is a rubber composed of structural units derived from butyl (meth)acrylate(s), and a 2-ethylhexyl (meth)acrylate rubber is a rubber composed of structural units derived from 2-ethylhexyl (meth)acrylate(s). According to the configuration, the glass transition temperature (Tg) of the elastic body is low, and therefore fine polymer particles (A) and a resin composition having low Tg are obtained. As a result, (a) a resultant resin composition can provide a cured product having excellent toughness, and (b) it is possible to cause the resin composition to have a lower viscosity.

Examples of the vinyl-based monomer which is different from the (meth)acrylate-based monomer and which is copolymerizable with the (meth)acrylate-based monomer (hereinafter also referred to as vinyl-based monomer B) encompass the monomers listed as the examples of the vinyl-based monomer A. Such vinyl-based monomers B may be used alone or in combination of two or more. Out of such vinyl-based monomers B, styrene is particularly preferable. Note that, in the (meth)acrylate-based rubber in the case B, the structural unit derived from the vinyl-based monomer B is an optional component. Note that, in the case B, the (meth)acrylate-based rubber may be constituted by only the structural unit derived from the (meth)acrylate-based monomer.

A case where the elastic body includes an organosiloxane-based rubber (case C) will be described. In the case C, the resin composition to be obtained can provide a cured product which has sufficient heat resistance and which has excellent impact resistance at low temperatures.

Examples of the organosiloxane-based rubber encompass (a) organosiloxane-based polymers composed of alkyl or aryl disubstituted silyloxy units, such as dimethylsilyloxy, diethylsilyloxy, methylphenylsilyloxy, diphenylsilyloxy, and dimethylsilyloxy-diphenylsilyloxy, and (b) organosiloxane-based polymers composed of alkyl or aryl monosubstituted silyloxy units, such as organohydrogensilyloxy in which some of sidechain alkyls have been substituted with hydrogen atoms. These organosiloxane-based polymers may be used alone or in combination of two or more.

In the present specification, a polymer composed of dimethylsilyloxy unit is referred to as a dimethylsilyloxy rubber, a polymer composed of methylphenylsilyloxy unit is referred to as a methylphenylsilyloxy rubber, and a polymer composed of dimethylsilyloxy unit and diphenylsilyloxy unit is referred to as a dimethylsilyloxy-diphenylsilyloxy rubber. In the case C, the organosiloxane-based rubber is preferably (a) at least one selected from the group consisting of dimethylsilyloxy rubbers, methylphenylsilyloxy rubbers and dimethylsilyloxy-diphenylsilyloxy rubbers, because resultant a resin composition can provide a cured product or molded product which has excellent heat resistance, and is more preferably (b) a dimethylsilyloxy rubber because it can be easily obtained and is economical.

In the case C, it is preferable that the fine polymer particles (A) contain an organosiloxane-based rubber in an amount of not less than 80% by weight, more preferably not less than 90% by weight, with respect to 100% by weight of the elastic body contained in the fine polymer particles (A). According to the above feature, the resin composition to be obtained can provide a cured product which has excellent heat resistance.

The elastic body may further include an elastic body other than the diene-based rubber, the (meth)acrylate-based rubber, and the organosiloxane-based rubber. Examples of the elastic body other than the diene-based rubber, the (meth)acrylate-based rubber, and the organosiloxane-based rubber encompass natural rubber.

In an embodiment of the present invention, the elastic body is preferably at least one selected from the group consisting of butadiene rubbers, butadiene-styrene rubbers, butadiene-(meth)acrylate rubbers, ethyl (meth)acrylate rubbers, butyl (meth)acrylate rubbers, 2-ethylhexyl (meth)acrylate rubbers, dimethylsilyloxy rubbers, methylphenylsilyloxy rubbers, and dimethylsilyloxy-diphenylsilyloxy rubbers, and is more preferably at least one selected from the group consisting of butadiene rubbers, butadiene-styrene rubbers, butyl (meth)acrylate rubbers, and dimethylsilyloxy rubbers.

(Crosslinked structure of elastic body)

The elastic body preferably has a crosslinked structure introduced therein, from the viewpoint of maintenance of stable dispersion of the fine polymer particles (A) in a thermosetting resin. A generally used method may be used to introduce a crosslinked structure into the elastic body. Examples of the generally used method encompass the following. That is, in production of the elastic body, a crosslinking monomer(s), such as a polyfunctional monomer and/or a mercapto group-containing compound, is/are mixed with a monomer which can constitute the elastic body, and the resultant mixture is polymerized. In the present specification, producing a polymer such as the elastic body is also referred to as forming a polymer by polymerization.

A method of introducing a crosslinked structure into an organosiloxane-based rubber includes the following methods: (a) a method that involves using a polyfunctional alkoxysilane compound in combination with another material during formation of the organosiloxane-based rubber by polymerization: (b) a method that involves introducing, into the organosiloxane-based rubber, a reactive group (e.g., (i) mercapto group, (ii) vinyl group having reactivity, and the like), and then adding (a) an organic peroxide, (b) a polymerizable vinyl monomer, or the like to the obtained reaction product to cause a radical reaction; and (c) a method that involves, during formation of the organosiloxane-based rubber by polymerization, mixing a crosslinking monomer(s), such as a polyfunctional monomer and/or a mercapto group-containing compound, together with another material and then carrying out polymerization.

Examples of the polyfunctional monomer encompass the polyfunctional monomers listed as the examples in the section (Graft part).

Examples of the mercapto group-containing compound encompass alkyl group-substituted mercaptan, allyl group-substituted mercaptan, aryl group-substituted mercaptan, hydroxy group-substituted mercaptan, alkoxy group-substituted mercaptan, cyano group-substituted mercaptan, amino group-substituted mercaptan, silyl group-substituted mercaptan, acid radical-substituted mercaptan, halo group-substituted mercaptan, and acyl group-substituted mercaptan. The alkyl group-substituted mercaptan is preferably alkyl group-substituted mercaptan having 1 to 20 carbon atoms of the alkyl group, and is more preferably alkyl group-substituted mercaptan having 1 to 10 carbon atoms of the alkyl group. The aryl group-substituted mercaptan is preferably phenyl group-substituted mercaptan. The alkoxy group-substituted mercaptan is preferably alkoxy group-substituted mercaptan having 1 to 20 carbon atoms of the alkoxy group, and is more preferably alkoxy group-substituted mercaptan having 1 to 10 carbon atoms of the alkoxy group. The acid radical-substituted mercaptan is preferably alkyl group-substituted mercaptan having a carboxyl group and 1 to 10 carbon atoms of the alkyl group or aryl group-substituted mercaptan having a carboxyl group and 1 to 12 carbon atoms of the alkyl group.

(Glass transition temperature of elastic body)

The elastic body has a glass transition temperature of preferably not higher than 80°C, more preferably not higher than 70°C, more preferably not higher than 60°C, more preferably not higher than 50°C, more preferably not higher than 40°C, more preferably not higher than 30°C, more preferably not higher than 20°C, more preferably not higher than 10°C, more preferably not higher than 0°C, more preferably not higher than -20°C, more preferably not higher than -40°C, more preferably not higher than -45°C, more preferably not higher than -50°C, more preferably not higher than -55°C, more preferably not higher than -60°C, more preferably not higher than -65°C, more preferably not higher than -70°C, more preferably not higher than -75°C, more preferably not higher than -80°C, more preferably not higher than -85°C, more preferably not higher than -90°C, more preferably not higher than -95°C, more preferably not higher than -100°C, more preferably not higher than -105°C, more preferably not higher than -110°C, more preferably not higher than -115°C, even more preferably not higher than - 120°C, particularly preferably not higher than -125°C. With this feature, it is possible to obtain fine polymer particles (A) having low Tg and a resin composition having low Tg. As a result, a resin composition can provide a cured product each of which has excellent toughness. According to the above feature, the resin composition can have a lower viscosity. The Tg of the elastic body can be obtained by carrying out viscoelasticity measurement with use of a planar plate made of the fine polymer particles (A). Specifically, the Tg can be measured as follows: (1) a graph of tan $\delta$ is obtained by carrying out dynamic viscoelasticity measurement with respect to a planar plate made of the fine polymer particles (A), with use of a dynamic viscoelasticity measurement device (for example, DVA-200, manufactured by IT Keisoku Seigyo Kabushikigaisha) under a tension condition; and (2) in the graph of tan $\delta$ thus obtained, the peak temperature of tan $\delta$ is regarded as the glass transition temperature. Note, here, that in a case where a plurality of peaks are found in the graph of tan $\delta$, the lowest peak temperature is regarded as the glass transition temperature of the elastic body.

In view of prevention of a decrease in elastic modulus (i.e., a decrease in rigidity) of the resulting cured product, i.e., in view of obtainment of the cured product which has a sufficient elastic modulus (rigidity), the Tg of the elastic body is preferably higher than 0°C, more preferably not lower than 20°C, even more preferably not lower than 50°C, particularly preferably not lower than 80°C, most preferably not lower than 120°C.

The Tg of the elastic body can be determined by, for example, the composition of the structural unit contained in the elastic body. In other words, it is possible to adjust the Tg of the resulting elastic body by changing the composition of the monomer used to produce (form by polymerization) the elastic body.

Note, here, that in a case where only one type of monomer is polymerized to produce a homopolymer, a group of monomers each of which provides a homopolymer having a Tg higher than 0°C will be referred to as a monomer group "a". Note also that in a case where only one type of monomer is polymerized to produce a homopolymer, a group of monomers each of which provides a homopolymer having a Tg lower than 0°C will be referred to as a monomer group "b". Note also that an elastic body containing (i) one or more structural units derived from at least one type of monomer selected from the monomer group "a" in an amount of 50% by weight to 100% by weight (more preferably 65% by weight to 99% by weight) and (ii) one or more structural units derived from at least one type of monomer selected from the monomer group "b" in an amount of 0% by weight to 50% by weight (more preferably 1% by weight to 35% by weight) will be referred to as an elastic body G. The elastic body G has a Tg higher than 0°C. In a case where the elastic body includes the elastic body G, the resin composition to be obtained can provide a cured product which has sufficient rigidity.

Also in a case where the Tg of the elastic body is higher than 0°C, it is preferable that the crosslinked structure be introduced in the elastic body. Examples of a method of introducing the crosslinked structure into the elastic body encompass the above-described methods.

Examples of the monomers which can be included in the monomer group "a" encompass, but are not limited to, unsubstituted vinyl aromatic compounds such as styrene and 2-vinyl naphthalene; vinyl-substituted aromatic compounds such as α-methyl styrene; ring-alkylated vinyl aromatic compounds such as 3-methylstyrene, 4-methylstyrene, 2,4-dimethylstyrene, 2,5-dimethylstyrene, 3,5-dimethylstyrene, and 2,4,6-trimethylstyrene; ring-alkoxylated vinyl aromatic compounds such as 4-methoxystyrene and 4-ethoxystyrene; ring-halogenated vinyl aromatic compounds such as 2-chlorostyrene and 3-chlorostyrene; ring-ester-substituted vinyl aromatic compounds such as 4-acetoxy styrene; ring-hydroxylated vinyl aromatic compounds such as 4-hydroxystyrene; vinyl esters such as vinyl benzoate and vinyl cyclohexanoate; vinyl halides such as vinyl chloride; aromatic monomers such as acenaphthalene and indene; alkyl methacrylates such as methyl methacrylate, ethyl methacrylate, and isopropyl methacrylate; aromatic methacrylates such as phenyl methacrylate; methacrylates such as isobornyl methacrylate and trimethylsilyl methacrylate; methacrylic acid derivative-containing methacryl monomers such as methacrylonitrile; certain types of acrylic acid esters such as isobornyl acrylate and tert-butyl acrylate; and acrylic acid derivative-containing acrylic monomers such as acrylonitrile. Examples of the monomers which can be included in the monomer group "a" further encompass monomers which, by polymerization of only one type of monomers (homopolymerization), can provide a homopolymer having a Tg of not lower than 120°C, such as acrylamide, isopropyl acrylamide, N-vinylpyrrolidone, isobornyl methacrylate, dicyclopentanyl methacrylate, 2-methyl-2-adamanthyl methacrylate, 1-adamanthyl acrylate, and 1-adamanthyl methacrylate. These monomers "a" may be used alone or in combination of two or more.

Examples of monomers "b" encompass ethyl acrylate, butyl acrylate, 2-ethylhexyl acrylate, octyl (meth)acrylate, dodecyl (meth)acrylate, 2-hydroxyethyl acrylate, and 4-hydroxybutyl acrylate. These monomers "b" may be used alone or in combination of two or more. Out of these monomers "b", ethyl acrylate, butyl acrylate, and 2-ethylhexyl acrylate are particularly preferable.

(Volume-average particle size of elastic body)

The elastic body has a volume-average particle size of preferably 0.03 μm to 50.00 μm, more preferably 0.05 μm to 10.00 μm, more preferably 0.08 μm to 2.00 μm, further preferably 0.10 μm to 1.00 μm, even more preferably 0.10 μm to 0.80 μm, particularly preferably 0.10 μm to 0.50 μm. In a case where the volume-average particle size of the elastic body is not less than 0.03 μm, the elastic body which has a desired volume-average particle size can be stably obtained. In a case where the volume-average particle size of the elastic body is not more than 50.00 μm, the resulting cured product or the resulting molded product has favorable heat resistance and impact resistance. The volume-average particle size of the elastic body can be measured with use of, for example, a dynamic light scattering type particle size distribution measurement apparatus using, as a test specimen, an aqueous suspension containing the elastic body. A method of measuring the volume-average particle size of the elastic body will be described later in detail in Examples.

(Proportion of elastic body)

A proportion of the elastic body contained in the fine polymer particles (A) is preferably 40% by weight to 97% by weight, more preferably 60% by weight to 95% by weight, even more preferably 70% by weight to 93% by weight, where 100% by weight represents the entirety of the fine polymer particles (A). In a case where the proportion of the elastic body is not less than 40% by weight, the resulting resin composition can provide the cured product which has excellent toughness and impact resistance. In a case where the proportion of the elastic body is not more than 97% by weight, the fine polymer particles (A) do not easily agglutinate and, therefore, the resin composition does not have a high viscosity, so that the resulting resin composition can be excellent in handling.

(Gel content of elastic body)

The elastic body is preferably one that can swell in an appropriate solvent but is substantially insoluble in the appropriate solvent. The elastic body is preferably insoluble in a thermosetting resin used.

The elastic body has a gel content of preferably not less than 60% by weight, more preferably not less than 80% by weight, even more preferably not less than 90% by weight, particularly preferably not less than 95% by weight. In a case where the gel content of the elastic body falls within the above range, the resin composition to be obtained can provide a cured product which has excellent toughness.

In the present specification, a method of calculating the gel content is as follows. First, an aqueous suspension containing the fine polymer particles (A) is obtained. Next, a powdery and/or granular material of the fine polymer particles (A) is obtained from the aqueous suspension. A method of obtaining the powdery and/or granular material of the fine polymer particles (A) from the aqueous suspension is not limited to any particular one, and examples thereof encompass a method of obtaining the powdery and/or granular material of the fine polymer particles (A) by (i) causing the fine polymer particles (A) in the aqueous suspension to agglutinate, (ii) dehydrating the agglutinate thus obtained, and (iii) further drying the agglutinate(A). Next, 2.0 g of the powdery and/or granular material of the fine polymer particles (A) is dissolved in 50 mL of methyl ethyl ketone (MEK). The MEK solution of the powder thus obtained is separated into a part soluble in MEK (MEK-soluble part) and a part insoluble in MEK (MEK-insoluble part). Specifically, the obtained MEK solution of the powder is subjected to centrifugal separation with use of a centrifugal separator (CP60E, manufactured by Hitachi Koki Co., Ltd.) at 30000 rpm for 1 hour, and thereby separated into the MEK-soluble part and the MEK-insoluble part. Note, here, that three sets of centrifugal separations are carried out in total. The weight of the MEK-soluble part and the weight of the MEK-insoluble part are measured, and then the gel content is calculated with use of the following expression.

$$\text{Gel content (\%)} = \text{(weight of methyl ethyl ketone insoluble part)} / \{\text{(weight of methyl ethyl ketone insoluble part)} + \text{(weight of methyl ethyl ketone soluble part)}\} \times 100$$

(Variations of elastic body)

In an embodiment of the present invention, the "elastic body" of the fine polymer particles (A) may be composed of one type of elastic body which has an identical structural unit composition. In such a case, the "elastic body" of the fine polymer particles (A) may be one selected from the group consisting of diene-based rubbers, (meth)acrylate-based rubbers, and organosiloxane-based rubbers.

In an embodiment of the present invention, the "elastic body" of the fine polymer particles (A) may be composed of a plurality of types of elastic bodies which differ in structural unit composition from each other. In such a case, the "elastic body" of the fine polymer particles (A) may be two or more types selected from the group consisting of diene-based rubbers, (meth)acrylate-based rubbers, and organosiloxane-based rubbers. In such a case, the "elastic body" of the fine polymer particles (A) may be one selected from the group consisting of diene-based rubbers, (meth)acrylate-based rubbers, and organosiloxane-based rubbers. In other words, the "elastic body" of the fine polymer particles (A) may be a plurality of types, which differ in structural unit composition from each other, of the following rubbers: diene-based rubbers, (meth)acrylate-based rubbers, or organosiloxane-based rubbers.

In an embodiment of the present invention, a case where the "elastic body" of the fine polymer particles (A) is composed of a plurality of types of elastic bodies which differ in structural unit composition from each other will be described. In this case, the plurality of types of elastic bodies will be referred to as an elastic $body_1$, an elastic $body_2$, ... and an elastic $body_n$, respectively. Note, here, that "n" is an integer of 2 or more. The "elastic body" of the fine polymer particles (A) may include a complex of the elastic $body_1$, the elastic $body_2$, ..., and the elastic $body_n$ which have been separately formed by polymerization. The "elastic body" of the fine polymer particles (A) may include one elastic body obtained by forming the elastic $body_1$, the elastic $body_2$, ..., and the elastic $body_n$ in order by polymerization. Forming a plurality of elastic bodies (polymers) by polymerization in order in this manner is also referred to as multistage polymerization. One elastic body obtained by multistage polymerization of a plurality of types of elastic bodies is also referred to as a multistage-polymerization elastic body. A method of producing a multistage-polymerization elastic body will be later described in detail.

A multistage-polymerization elastic body constituted by the elastic $body_1$, the elastic $body_2$, ... and the elastic $body_n$ will be described. In the multistage-polymerization elastic body, the elastic $body_n$ can cover at least part of an

elastic body$_{n-1}$ or the whole of the elastic body$_{n-1}$. In the multistage-polymerization elastic body, part of the elastic body$_n$ may be located inside the elastic body$_{n-1}$.

In the multistage-polymerization elastic body, the plurality of elastic bodies may form a layer structure. For example, in a case where the multistage-polymerization elastic body is constituted by the elastic body$_1$, the elastic body$_2$, and an elastic body$_3$, aspects of the present invention also include an aspect in which the elastic body, forms the innermost layer, a layer of the elastic body$_2$ is formed on the outer side of the elastic body$_1$, and a layer of the elastic body$_3$ is formed on the outer side of the layer of the elastic body$_2$ as the outermost layer of the elastic body. Thus, it can also be said that the multistage-polymerization elastic body in which the plurality of elastic bodies form a layer structure is a multilayered elastic body. In other words, in an embodiment of the present invention, the "elastic body" of the fine polymer particles (A) may include (a) a complex of a plurality of types of elastic bodies, (b) a multistage-polymerization elastic body, and/or (c) a multilayered elastic body.

(Surface-crosslinked polymer)

The rubber-containing graft copolymer preferably further has a surface-crosslinked polymer in addition to the elastic body and the graft part grafted to the elastic body. In other words, the fine polymer particles (A) preferably further have a surface-crosslinked polymer in addition to the elastic body and the graft part grafted to the elastic body. An embodiment of the present invention will be described with reference to an example case in which the fine polymer particles (A) (e.g., rubber-containing graft copolymer) further has a surface-crosslinked polymer. In this case, (a) it is possible to make an improvement of an anti-blocking property in the production of the fine polymer particles (A) and (b) the dispersibility of the fine polymer particles (A) in the thermosetting resin is made more favorable. Reasons for these are not limited to any particular ones, but can be inferred as follows. By the surface-crosslinked polymer covering at least part of the elastic body, the exposed area of the elastic body of the fine polymer particles (A) is reduced. Consequently, the elastic body is less likely to adhere to another elastic body, and therefore the dispersibility of the fine polymer particles (A) is improved.

In a case where the fine polymer particles (A) have the surface-crosslinked polymer, the following effects can be further brought about: (a) an effect of reducing the viscosity of the resin composition; (b) an effect of increasing the crosslinking density of the elastic body; and (c) an effect of increasing the graft efficiency of the graft part. Note that the crosslinking density of the elastic body is intended to mean a degree of the number of crosslinked structures in the entirety of the elastic body.

The surface-crosslinked polymer is constituted by a polymer containing, as structural units, (i) a structural unit(s) derived from a polyfunctional monomer(s) in an amount of 30% by weight to 100% by weight and (ii) a structural unit(s) derived from vinyl-based monomer(s), other than the unit(s) derived from polyfunctional monomer(s), in an amount of 0% by weight to 70% by weight, which total 100% by weight.

Examples of the polyfunctional monomer which can be used to form the surface-crosslinked polymer by polymerization encompass polyfunctional monomers identical to the foregoing polyfunctional monomers. Out of such polyfunctional monomers, examples of a polyfunctional monomer which can be preferably used to form the surface-crosslinked polymer by polymerization encompass allyl methacrylate, ethylene glycol di(meth)acrylate, butylene glycol di(meth)acrylate (such as 1,3-butylene glycol dimethacrylate), butanediol di(meth)acrylate, hexanediol di(meth)acrylate, cyclohexane dimethanol di(meth)acrylate, and polyethylene glycol di(meth)acrylates. Such polyfunctional monomers may be used alone or in combination of two or more.

The fine polymer particles (A) may contain the surface-crosslinked polymer which is formed by polymerization independently of formation of the rubber-containing graft copolymer by polymerization, or may contain the surface-crosslinked polymer which is formed together with the rubber-containing graft copolymer by polymerization. The fine polymer particles (A) may be a multistage polymer obtained by forming the elastic body, the surface-crosslinked polymer, and the graft part in this order by multistage polymerization. In any of these aspects, the surface-crosslinked polymer can cover at least part of the elastic body.

The surface-crosslinked polymer can also be regarded as part of the elastic body. In other words, the surface-crosslinked polymer can also be regarded as part of the rubber-containing graft copolymer, and can be said to be a surface cross-linked polymerized part. In a case where the fine polymer particles (A) contain the surface-crosslinked polymer, the graft part may (a) be grafted to the elastic body other than the surface-crosslinked polymer, (b) be grafted to the surface-crosslinked polymer, or (c) be grafted to both the elastic body other than the surface-crosslinked polymer and the surface-crosslinked polymer. In a case where the fine polymer particles (A) contain the surface-crosslinked polymer, the above-described volume-average particle size of the elastic body means the volume-average particle size of the elastic body including the surface-crosslinked polymer.

A case will be described where the fine polymer particles (A) are a multistage polymer obtained by forming the elastic body, the surface-crosslinked polymer, and the graft part in this order by multistage polymerization (case D). In the case D, the surface-crosslinked polymer can cover part of the elastic body or the whole of the elastic body. In the case D, part of the surface-crosslinked polymer may be located inside the elastic body. In the case D, the graft part can cover part of the surface-crosslinked polymer or the whole of the surface-crosslinked polymer. In the case D, part of the graft part may be located inside the surface-crosslinked polymer. In the case D, the elastic body, the surface-crosslinked polymer, and the graft part may form a layer structure. For example, aspects of the present invention also include an aspect in which the elastic body is present as the innermost layer (core layer), a layer of the surface-crosslinked polymer is present on the outer side of the elastic body as an intermediate layer, and a layer of the graft part is present on the outer side of the surface-crosslinked polymer as the outermost layer (shell layer).

(Volume-average particle size (Mv) of fine polymer particles (A))

The volume-average particle size (Mv) of the fine polymer particles (A) is preferably 0.03 $\mu$m to 50.00 $\mu$m, more preferably 0.05 $\mu$m to 10.00 $\mu$m, more preferably 0.08 $\mu$m to 2.00 $\mu$m, further preferably 0.10 $\mu$m to 1.00 $\mu$m, even more preferably 0.10 $\mu$m to 0.80 $\mu$m, particularly preferably 0.10 $\mu$m to 0.50 $\mu$m, because it is possible to obtain a resin composition which has a desired viscosity and which is highly stable. In a case where the volume-average particle size (Mv) of the fine polymer particles (A) falls within the above range, there is also an advantage that the dispersibility of the fine polymer particles (A) in a thermosetting resin is favorable. Note that, in the present specification, the "volume-average particle size (Mv) of the fine polymer particles (A)" means the volume-average particle size of the primary particles of the fine polymer particles (A) unless otherwise mentioned. The volume-average particle size of the fine polymer particles (A) can be measured with use of a dynamic light scattering type particle size distribution measurement apparatus using, as a test specimen, an aqueous latex containing the fine polymer particles (A). The volume-average particle size of the fine polymer particles (A) will be described later in detail in Examples. The volume-average particle size of the fine polymer particles (A) can also be measured by (i) cutting a cured product obtained from the resin composition, (ii) capturing an image of a cut surface with use of an electron microscope or the like, and (iii) using image data thus obtained (captured image). The volume-average particle size of the fine polymer particles (A) in the resin composition can be measured using a device such as ZETASIZER NANO ZSP, on the basis of scattering intensity of, as a test specimen, a solution obtained after the resin composition is dissolved in a certain amount of MEK.

The particle-number-based distribution of the volume-average particle size of the fine polymer particles (A) in the thermosetting resin preferably has a full width at half maximum which is not less than 0.5 times and not more than 1 time the volume-average particle size, because the resin composition which has a low viscosity and is easy to handle is obtained.

(1-2. Method of producing fine polymer particles (A))

The fine polymer particles (A) can be produced as follows: after a polymer is formed by polymerization, the polymer which constitutes the graft part is graft polymerized to the polymer in the presence of the polymer. The following description will discuss an example of a method of producing the fine polymer particles (A), while taking as an example a case where the elastic body is formed by polymerization and then the polymer which constitutes the graft part is graft polymerized to the elastic body in the presence of the elastic body to produce the fine polymer particles (A).

The fine polymer particles (A) can be produced by a known method, for example, a method such as an emulsion polymerization method, a suspension polymerization method, or a microsuspension polymerization method. Specifically, the formation of the elastic body by polymerization in the fine polymer particles (A), the formation of the graft part by polymerization in the fine polymer particles (A) (graft polymerization), and the formation of the surface-crosslinked polymer by polymerization in the fine polymer particles (A) can be each achieved by a known method, for example, a method such as an emulsion polymerization method, a suspension polymerization method, or a microsuspension polymerization method. Out of these methods, the emulsion polymerization method is particularly preferable as the method of producing the fine polymer particles (A). The emulsion polymerization method has the following advantages: it facilitates (a) compositional design of the fine polymer particles (A), (b) industrial production of the fine polymer particles (A), and (c) obtainment of a latex precursor containing the fine polymer particles (A) which can be suitably used to produce the present latex and the present resin composition (described later). A method of producing the elastic body which can be contained in the fine polymer particles (A), a method of producing the graft part which can be contained in the fine polymer particles (A), and a method of producing the surface-crosslinked polymer which can be optionally contained in the fine polymer particles (A) will each be described below.

In the present specification, the term "latex precursor" is intended to mean a solution which does not contain the resin (B), which contains a solvent and the fine polymer particles (A), and in which the fine polymer particles (A) are present in such a manner as to be dispersed in the solvent. The "latex precursor" can also be referred to as a "suspension of the fine polymer particles (A), which does not contain the resin (B)". A latex precursor, in which the solvent is water, can be called "aqueous latex precursor", and can also be referred to as "aqueous suspension of the fine polymer particles (A), which does not contain the resin (B)". In the solvent in the latex precursor, the fine polymer particles (A) are preferably dispersed in the form of primary particles.

(Method of producing elastic body)

A case will be considered where the elastic body includes at least one type selected from the group consisting of diene-based rubbers and (meth)acrylate-based rubbers. In this case, the elastic body can be produced by, for example, a method such as emulsion polymerization, suspension polymerization, or microsuspension polymerization. As the method of producing the elastic body, a method disclosed in, for example, WO 2005/028546 can be used.

A case where the elastic body includes an organosiloxane-based rubber will be described. In this case, the elastic body can be produced by, for example, a method such as emulsion polymerization, suspension polymerization, or microsuspension polymerization. As the method of producing the elastic body, a method disclosed in, for example, WO 2006/070664 can be used.

A case where the "elastic body" of the fine polymer particles (A) is constituted by a plurality of types of elastic bodies (for example, an elastic $body_1$, an elastic $body_2$, ..., an elastic $body_n$) will be described. In this case, a complex which is constituted by the plurality of types of elastic bodies may be produced in the following manner: the elastic $body_1$, the elastic $body_2$, ... and the elastic $body_n$ are each polymerized individually by any of the above-described methods, and then these elastic bodies are mixed and complexed. Alternatively, the elastic $body_1$, the elastic $body_2$, ... and the elastic $body_n$ may be formed in order by multistage polymerization to produce one elastic body which is constituted by the plurality of types of elastic bodies.

The multistage polymerization of the elastic bodies will be described in detail. For example, the multistage-polymerization elastic body can be obtained by carrying out in order the following steps (1) through (4): (1) The elastic $body_1$ is formed by polymerization; (2) next, the elastic $body_2$ is formed by polymerization in the presence of the elastic body, to obtain a two-stage elastic $body_{1+2}$; (3) subsequently, an elastic $body_3$ is formed by polymerization in the presence of the elastic $body_{1+2}$ to obtain a three-stage elastic $body_{1+2+3}$; and (4) after a similar process(es) is/are carried out, the elastic $body_n$ is formed by polymerization in the presence of an elastic $body_{1+2+ \dots +(n-1)}$ to obtain a multistage-polymerization elastic $body_{1+2+ \dots +n}$.

(Method of producing graft part)

The graft part can be formed, for example, by polymerizing, by known radical polymerization, the monomer used to form the graft part. In a case where (a) the elastic body is obtained as an aqueous suspension or (b) a fine polymer particle precursor containing the elastic body and the surface-crosslinked polymer is obtained as an aqueous suspension, the graft part is preferably formed by emulsion polymerization. The graft part can be produced by a method disclosed in, for example, WO 2005/028546.

The method of producing the graft part in a case where the graft part is constituted by a plurality of types of graft parts (for example, a graft $part_1$, a graft $part_2$, ..., a graft $part_n$) will be described. In this case, the graft part (complex) which is constituted by the plurality of types of graft parts may be produced in the following manner: the graft $part_1$, the graft $part_2$, ... and the graft $part_n$ are each formed individually by any of the above-described methods, and then these graft parts are mixed and complexed. Alternatively, in this case, the graft $part_1$, the graft $part_2$, ... the graft $part_n$ may be formed in order by multistage polymerization to produce one graft part which is constituted by the plurality of types of graft parts.

The multistage polymerization of the graft parts will be described in detail. For example, the multistage-polymerization graft part can be obtained by carrying out in order the following steps (1) through (4): (1) The graft $part_1$ is formed by polymerization; (2) next, the graft parts is formed by polymerization in the presence of the graft part, to obtain a two-stage graft $part_{1+2}$; (3) subsequently, a graft parts is formed by polymerization in the presence of the graft $part_{1+2}$ to obtain a three-stage graft $part_{1+2+3}$; and (4) after a similar process(es) is/are carried out, the graft $part_n$ is formed by polymerization in the presence of a graft $part_{1+2+ \dots +(n-1)}$ to obtain a multistage-polymerization graft $part_{1+2+ \dots +n}$.

In a case where the graft part is constituted by the plurality of types of graft parts, the fine polymer particles (A) may be produced as follows: the graft part which is constituted by the plurality of types of graft parts is formed by polymerization, and then these graft parts are graft polymerized to the elastic body. The fine polymer particles (A) may be produced as follows: in the presence of the elastic body, a plurality of types of polymers which constitute the graft part are formed in order by multistage graft polymerization with respect to the elastic body.

(Method of producing surface-crosslinked polymer)

The surface-crosslinked polymer can be formed by polymerizing, by known radical polymerization, the monomer used to form the surface-crosslinked polymer. In a case where the elastic body is obtained as an aqueous suspension, the surface-crosslinked polymer is preferably formed by emulsion polymerization.

In a case where emulsion polymerization is employed as the method of producing the fine polymer particles (A), a known emulsifying agent (dispersion agent) can be used in the production of the fine polymer particles (A).

Examples of the emulsifying agent include anionic emulsifying agents, nonionic emulsifying agents, polyvinyl alcohols, alkyl-substituted celluloses, polyvinylpyrrolidone, polyacrylic acid derivatives, and the like. Examples of the anionic emulsifying agent include sulfur-based emulsifying agents, phosphorus-based emulsifying agents, sarcosine acid-based emulsifying agents, carboxylic acid-based emulsifying agents, and the like. Examples of the sulfur-based emulsifying agent include sodium dodecylbenzenesulfonate (abbreviated as SDBS), and the like. Examples of the phosphorus-based emulsifying agent include sodium polyoxyethylene lauryl ether phosphate and the like.

In a case where emulsion polymerization is employed as the method of producing the fine polymer particles (A), a pyrolytic initiator can be used in the production of the fine polymer particles (A). It is possible to use, as the pyrolytic initiator, a known initiator such as (a) 2,2'-azobisisobutyronitrile, and (b) peroxides such as organic peroxides and inorganic peroxides, for example. Examples of the organic peroxide encompass t-butylperoxy isopropyl carbonate, paramenthane hydroperoxide, cumene hydroperoxide, dicumyl peroxide, t-butyl hydroperoxide, dit-butyl peroxide, and t-hexyl peroxide. Examples of the inorganic peroxide encompass hydrogen peroxide, potassium persulfate, and ammonium persulfate.

In the production of the fine polymer particles (A), a redox initiator can also be used. The redox initiator is an initiator which contains a combination of (a) a peroxide such as an organic peroxide and an inorganic peroxide and (b) a transition metal salt (such as iron (II) sulfate) and/or a reducing agent such as sodium formaldehyde sulfoxylate or glucose. Along with the peroxide and the transition metal salt and/or the reducing agent, a chelating agent such as disodium ethylenediaminetetraacetate, and/or a phosphorus-containing compound such as sodium pyrophosphate, may be further used in combination as necessary.

Using the redox initiator makes it possible to (i) carry out polymerization even at a low temperature at which pyrolysis of the peroxide substantially does not occur and (ii) select a polymerization temperature from a wide range of temperatures. Thus, using the redox initiator is preferable. Out of redox initiators, redox initiators in which organic peroxides such as cumene hydroperoxide, dicumyl peroxide, paramenthane hydroperoxide, and t-butyl hydroperoxide are used as peroxides are preferable. The initiator can be used in an amount within a known range. In a case where the redox initiator is used, the amounts of, for example, the reducing agent used, the transition metal salt used, and the chelating agent used can be within known ranges.

In a case where, in the formation of the elastic body, the graft part, or the surface-crosslinked polymer by polymerization, a polyfunctional monomer is used to introduce a crosslinked structure into the elastic body, the graft part, or the surface-crosslinked polymer, a known chain transfer agent can be used in an amount within a known range. By using the chain transfer agent, it is possible to easily adjust the molecular weight and/or the degree of crosslinking of the resulting elastic body, the resulting graft part, or the resulting surface-crosslinked polymer.

In the production of the fine polymer particles (A), a surfactant can be further used, in addition to the above-described components. The type and the amount of the surfactant used are set within known ranges.

In the production of the fine polymer particles (A), conditions of polymerization such as polymerization temperature, pressure, and deoxygenation can be, as appropriate, conditions within known numerical ranges.

The latex precursor can be obtained by the above method of producing the fine polymer particles (A). That is, the description in (1-2. Method of producing fine polymer particles (A)) can be applied as the description pertaining to the method of producing the latex precursor.

(1-3. Resin (B))

The resin (B) is not particularly limited in its properties, provided that the resin (B) is, at 25°C, (a) a liquid having a viscosity of 100 mPa·s to 1,000,000 mPa·s, (b) a semisolid, or (c) a solid. Note that the wording "the resin (B) has a viscosity of 100 mPa·s to 1,000,000 mPa·s at 25°C" means that "the resin (B) which is at 25°C has a viscosity of 100 mPa·s to 1,000,000 mPa·s".

In a case where the resin (B) is a liquid at 25°C, the viscosity of the resin (B) is preferably not more than 750,000 mPa·s, more preferably not more than 700,000 mPa·s, more preferably not more than 500,000 mPa·s, more preferably not more than 350,000 mPa·s, more preferably not more than 300,000 mPa·s, more preferably not more than 250,000 mPa·s, more preferably not more than 100,000 mPa·s, more preferably not more than 75,000 mPa·s, more preferably not more than 50,000 mPa·s, more preferably not more than 30,000 mPa·s, more preferably not more than 25,000 mPa·s, even more preferably not more than 20,000 mPa·s, and particularly preferably not more than 15,000 mPa·s, at 25°C. According to the above feature, the resin composition has an advantage of having excellent flowability.

The viscosity of the resin (B) is more preferably not less than 200 mPa·s, more preferably not less than 300 mPa·s, more preferably not less than 400 mPa·s, more preferably not less than 500 mPa·s, even more preferably not less than 750 mPa·s, still more preferably not less than 1000 mPa·s, and particularly preferably not less than 1500 mPa·s, at 25°C. This feature brings about an advantage that the resin (B) is not impregnated into the fine polymer particles (A) but can easily enter gaps between the plurality of fine polymer particles (A). Thus, the resin (B) can prevent the fine polymer particles (A) from being fused to each other and, in the latex, can easily cover the fine polymer particles (A). Therefore, it is possible with the resin (B) to prevent the fine polymer particles (A) from being fused to each other, and to obtain a latex that contains a larger amount of fine polymer particles (A) covered with the resin (B).

The viscosity of the resin (B) is more preferably 100 mPa·s to 750,000 mPa·s, more preferably 100 mPa·s to 700,000 mPa·s, more preferably 100 mPa·s to 350,000 mPa·s, more preferably 100 mPa·s to 300,000 mPa·s, more preferably 100 mPa·s to 50,000 mPa·s, even more preferably 100 mPa·s to 30,000 mPa·s, and particularly preferably 100 mPa·s to 15,000 mPa s, at 25°C.

In a case where the resin (B) is a semisolid at 25°C, it can be said that the resin (B) is a semiliquid at 25°C, and it can be said that the resin (B) has a viscosity of more than 1,000,000 mPa·s at 25°C. In a case where the resin (B) is, at 25°C, (a) a semisolid or (b) a solid, the resin composition has an advantage of being less sticky and being easy to handle.

The viscosity of the resin (B) can be measured by a viscometer. A method of measuring the viscosity of the resin (B) will be described later in detail in Examples.

Furthermore, in a case where a matrix resin is a thermosetting resin, the viscosity of the resin (B) at 25°C is preferably not more than a value obtained by adding 50000 mPa·s to the viscosity of the matrix resin (thermosetting resin) at 25°C. From the viewpoint of easiness in uniformly mixing the resin (B) with the matrix resin (thermosetting resin), in a case where the viscosity of the resin (B) at 25°C is not lower than the viscosity of the matrix resin at 25°C, the viscosity of the resin (B) at 25°C is more preferably not more than a value obtained by adding 20000 mPa·s, more preferably not more than a value obtained by adding 10000 mPa·s, even more preferably not more than a value obtained by adding 5000 mPa·s, to the viscosity of the matrix resin (thermosetting resin) at 25°C. From the viewpoint of easiness in uniformly mixing the resin (B) with the matrix resin (thermosetting resin), the viscosity of the resin (B) at 25°C is most preferably identical to the viscosity of the matrix resin at 25°C.

The resin (B) is preferably a resin whose differential scanning calorimetry (DSC) thermogram shows an endothermic peak at 25°C or below, more preferably a resin whose differential scanning calorimetry (DSC) thermogram shows an endothermic peak at 0°C or below.

The resin (B) may be identical to or different from a thermosetting resin which is a matrix resin (described later) with which the resin composition is mixed. As an example, a case will be considered where the resin (B) is of the identical type as that of a thermosetting resin. In this case, the obtained resin composition appears to have merely the matrix resin in addition to the fine polymer particles (A), because it is not possible to distinguish between the matrix resin and the resin (B) in the obtained resin composition. Next, a case will be considered where the resin (B) is of a type different from that of a matrix resin. In this case, it is possible to distinguish between the matrix resin and the resin (B) in the obtained resin composition. In this case, the ultimately obtained resin composition can contain the resin (B) as a resin other than the matrix resin, in addition to the fine polymer particles (A).

The resin (B) can be, for example, a thermosetting resin, a thermoplastic resin, or any combination of a thermosetting resin and a thermoplastic resin. The resin (B) can have an effect of enhancing the dispersibility of the fine polymer particles (A) in a thermosetting resin.

Examples of the thermosetting resin in the resin (B) encompass various thermosetting resins described later in the section of a matrix resin. As the resin (B), the thermosetting resins may be used alone or in combination of two or more.

Examples of the thermoplastic resin in the resin (B) encompass polymers each containing, as one or more structural units, one or more structural units derived from at least one type of monomer selected from the group consisting of aromatic vinyl monomers, vinyl cyanide monomers, and (meth)acrylate monomers. Examples of the thermoplastic resin in the resin (B) also encompass polycarbonate, polyamides, polyesters, polyphenylene ether, polyurethane, and polyvinyl acetate. In the resin (B), the thermoplastic resins may be used alone or in combination of two or more.

In a case where a matrix resin with which the resin composition that is the agglutinate containing the fine polymer particles (A) and the resin (B) is mixed is a thermosetting resin, the resin (B) is preferably of the same type as that of the thermosetting resin which is the matrix resin, because such a resin (B) is less likely to affect various physical properties of the resin composition or a cured product thereof. That is, in a case where a thermosetting resin which is a matrix resin is an epoxy resin, it is preferable that the resin (B) be also an epoxy resin. In a case where the resin (B) is different from a thermosetting resin which is a matrix resin, (a) the resin (B) and the thermosetting resin preferably do not undergo phase separation in the resin composition and (b) the resin (B) is preferably compatible with the thermosetting resin which is the matrix resin.

(Other remarks)

In the present specification, fats and oils as well as fatty acid esters are also included in the resin (B). Examples of the fats and oils which can be suitably used as the resin (B) encompass epoxidized fats and oils such as epoxidized soybean oil and epoxidized linseed oil. Commercially available epoxidized soybean oil can also be used, and examples thereof encompass ADK CIZER O-130P manufactured by ADEKA Co., Ltd. Examples of the fatty acid esters which can be suitably used as the resin (B) encompass epoxidized fatty acid esters such as epoxidized fatty acid butyl, epoxidized fatty acid 2-ethylhexyl, epoxidized fatty acid octyl ester, and epoxidized fatty acid alkyl ester.

The epoxidized fats and oils and the epoxidized fatty acid esters are sometimes referred to as epoxy-based plasticizers. That is, in the present specification, epoxy-based plasticizers are also included in the resin (B). Examples of the epoxy-based plasticizers, other than the epoxidized fats and oils and the epoxidized fatty acid esters, encompass diepoxystearyl epoxyhexahydrophthalate and epoxy hexahydro di(2-ethylhexyl)phthalate.

The above-described thermosetting resins, thermoplastic resins, mixtures of the thermosetting resins and the thermoplastic resins, fats and oils, and fatty acid esters can be each used in admixture with an antioxidant. In the present specification, the antioxidant is regarded as part of the resin (B), as long as the antioxidant is used in admixture with each of the above-described substances. In a case where only the antioxidant is used, the antioxidant is not regarded as the resin (B).

The following description will discuss a case where only an antioxidant is used instead of the resin (B). In this case, the antioxidant is a component which does not contribute to crosslinking. Therefore, a cured product of the resin composition tends to have inferior physical properties. In this case, for example, the cured product may have lower Tg or inferior impact resistance.

The antioxidant is not limited to any particular one. Examples of the antioxidant encompass (a) primary antioxidants such as phenol-based antioxidants, amine-based antioxidants, lactone-based antioxidants, and hydroxylamine-based antioxidants and (b) secondary antioxidants such as sulfur-based antioxidants and phosphorus-based antioxidants.

Examples of the phenol-based antioxidants encompass hindered phenol-based antioxidants. Examples of the hindered phenol-based antioxidants encompass a compound having a hindered phenol structure or a semi-hindered phenol structure in its molecule. Commercially available phenol-based antioxidants can also be used, and examples thereof encompass Irganox 245 (manufactured by BASF Japan Ltd.).

The amine-based antioxidants are not limited to any particular ones, and a wide range of conventionally known amine-based antioxidants can be used. Specific examples of the amine-based antioxidants encompass a 2,2,4-trimethyl-1,2-dihydroquinoline polymer, 6-ethoxy-1,2-dihydro-2,2,4-trimethylquinoline, and a reaction product of diphenylamine and acetone, each of which is an amine-ketone-based compound.

The amine-based antioxidants also encompass aromatic amine compounds. Examples of the aromatic amine compounds encompass naphthylamine-based antioxidants, diphenylamine-based antioxidants, and p-phenylenediamine-based antioxidants.

The lactone-based antioxidants, the hydroxylamine-based antioxidants, and the sulfur-based antioxidants are not limited to any particular ones. A wide range of conventionally known lactone-based antioxidants, hydroxylamine-based antioxidants, and sulfur-based antioxidants can be used.

The phosphorus-based antioxidants are not limited to any particular ones, and a wide range of conventionally known phosphorus-based antioxidants can be used. Phosphoric acid and phosphoric ester, each of which contains active hydrogen, can adversely affect the storage stability of the resultant resin composition, and can adversely affect the heat resistance of the cured product or the molded product provided by the resin composition. Therefore, as the phosphorus-based antioxidants, alkyl phosphite, aryl phosphite, alkyl aryl phosphite compounds, and the like which do not contain phosphoric acid or phosphoric ester in their molecules are preferable.

The antioxidant can be other conventionally known substance. Examples of such an antioxidant encompass various substances described in, for example, "Sanka Boshizai Handobukku (Antioxidant Handbook)" published by Taiseisha (the date of publication of the first edition: October 25, 1976), "Kobunshitenkazai handobukku (Polymeric additive Handbook)" published by CMC Publishing Co., Ltd. (the author and editor: HARUNA, Toru, the date of publication of the first edition: November 7, 2010), and the like.

The resin (B) is preferably at least one selected from the group consisting of the thermosetting resins, mixtures of the thermosetting resins and the antioxidants, the thermoplastic resins, mixtures of the thermoplastic resins and the antioxidants, the fats and oils, mixtures of the fats and oils and the antioxidants, the fatty acid esters, mixtures of the fatty acid esters and the antioxidants, epoxy curing agents, and mixtures of the epoxy curing agents and the antioxidants, more preferably at least one selected from the group consisting of epoxy resins, acrylic polymers, mixtures of the epoxy resins and the antioxidants, mixtures of the acrylic polymers and the antioxidants, and mixtures of the epoxy-based plasticizers and the antioxidants, still more preferably at least one selected from the group consisting of the mixtures of the epoxy resins and the antioxidants, the mixtures of the acrylic polymers and the antioxidants, and the mixtures of the epoxy-based plasticizers and the antioxidants, and particularly preferably the mixtures of the epoxy-based plasticizers and the antioxidants. According to the above feature, the resultant resin composition has advantages that (a) it is possible to provide the cured product or the molded product each of which has excellent heat resistance and (b) the resin (B) can improve the dispersibility of the fine polymer particles (A) in the matrix resin.

(1-4. Amount of fine polymer particles (A) and amount of resin (B))

The total amount of the fine polymer particles (A) and the resin (B) in the present latex is preferably 10.0% by weight to 32.5% by weight, more preferably 10.0% by weight to 32.0% by weight, more preferably 12.0% by weight to 32.0% by weight, more preferably 14.0% by weight to 32.0% by weight, more preferably 15.0% by weight to 32.0% by weight, more preferably 16.0% by weight to 32.0% by weight, more preferably 18.0% by weight to 32.0% by weight, more preferably 20.0% by weight to 32.0% by weight, more preferably 22.0% by weight to 32.0% by weight, and particularly preferably 23.0% by weight to 32.0% by weight, with respect to 100% by weight of the latex. In a case where the total amount of the fine polymer particles (A) and the resin (B) in the present latex falls within the above ranges, it is possible to efficiently collect, from the present latex, a coagulate which contains the fine polymer particles (A) and the resin (B).

The amount of the fine polymer particles (A) in the present latex is preferably 9.5% by weight to 32.0% by weight, more preferably 10.0% by weight to 32.0% by weight, more preferably 12.0% by weight to 32.0% by weight, more preferably 14.0% by weight to 32.0% by weight, more preferably 15.0% by weight to 32.0% by weight, more preferably 16.0% by weight to 32.0% by weight, more preferably 18.0% by weight to 32.0% by weight, more preferably 20.0% by weight to 32.0% by weight, more preferably 22.0% by weight to 32.0% by weight, and particularly preferably 23.0% by weight to 32.0% by weight, with respect to 100% by weight of the latex. In a case where the amount of the fine polymer particles (A) in the present latex falls within the above ranges, it is possible to efficiently collect, from the present latex, a coagulate which contains the fine polymer particles (A) and the resin (B).

The amount of the resin (B) in the present latex is preferably 0.5% by weight to 10.0% by weight, more preferably 1.0% by weight to 7.5% by weight, more preferably 1.5% by weight to 5.0% by weight, and particularly preferably 2.0% by weight to 5.0% by weight, with respect to 100% by weight of the latex. In a case where the amount of the resin (B) in the present latex falls within the above ranges, it is possible to efficiently collect, from the present latex, a coagulate which contains the fine polymer particles (A) and the resin (B).

The proportion between the fine polymer particles (A) and the resin (B) in the present latex is such that the fine polymer particles (A) account for 50% by weight to 99% by weight and the resin (B) accounts for 1% by weight to 50% by weight, where 100% by weight represents the total amount of the fine polymer particles (A) and the resin (B). In a case where the proportion between the fine polymer particles (A) and the resin (B) in the present latex falls within the above range, it is possible to efficiently collect, from the present latex, a coagulate which contains the fine polymer particles (A) and the resin (B).

From the viewpoint of efficient collection of the coagulate, the proportion between the fine polymer particles (A) and the resin (B) in the present latex is, where 100% by weight represents the total amount of the fine polymer particles (A) and the resin (B), (a) preferably the fine polymer particles (A) account for 60% by weight to 98% by weight and the resin (B) accounts for 2% by weight to 40% by weight, (b) more preferably the fine polymer particles (A) account for 65% by weight to 95% by weight and the resin (B) accounts for 5% by weight to 35% by weight, (c) more preferably the fine polymer particles (A) account for 70% by weight to 95% by weight and the resin (B) accounts for 5% by weight to 30% by weight, and (d) particularly preferably the fine polymer particles (A) account for 75% by weight to 95% by weight and the resin (B) accounts for 5% by weight to 25% by weight.

(1-5. Fine polymer particles (A) covered with resin (B))

With respect to the fine polymer particles (A) contained in the present latex, it is only necessary that part of the fine polymer particles (A) be covered with the resin (B), and the resin (B) does not need to cover the surfaces of all the fine polymer particles (A). In addition, with respect to the resin (B) contained in the present latex, part of the resin (B) may cover the surfaces of the fine polymer particles (A), and not the entire resin (B) need to cover the surfaces of the fine polymer particles (A). A "fine polymer particle (A) whose surface is covered with the resin (B)" is not limited to one fine polymer particle (A) (primary particles), and may be a collection of two or more fine polymer particles (A) (secondary particles). In other words, the resin (B) may cover one fine polymer particle (A) or may cover a collection of two or more fine polymer particles (A) so as to wrap the collection together. In a case where the resin (B) covers a collection of two or more fine polymer particles (A) so as to wrap the collection together, part of the surface of each fine polymer particle (A), rather than the entire surface, is covered with the resin (B). Such an aspect is also an aspect of the present invention. Even in a case where the resin (B) is present between a fine polymer particle (A) and another fine polymer particle (A) in the form of a collection (secondary particles) of two or more fine polymer particles (A), the resin (B) may also cover at least part of the surfaces of the fine polymer particles (A). Such an aspect is also an aspect of the present invention. From the viewpoint of removing the impurities, in an embodiment of the present invention, it is preferable that the surfaces of the individual fine polymer particles (A) be independently covered with the resin (B), and the fine polymer particles (A) be dispersed in the solvent of the latex.

In the present latex, the proportion of the fine polymer particles (A) whose surfaces are covered with the resin (B) is preferably not less than 50% by weight, more preferably not less than 80% by weight, more preferably not less than 95% by weight, and particularly preferably not less than 99% by weight, with respect to 100% by weight of the fine polymer particles (A) contained in the latex. The present latex, in which the proportion of the fine polymer particles (A) whose surfaces are covered with the resin (B) falls within the above ranges has an advantage that impurities can be easily removed in the subsequent rinsing step.

In the present latex, the fine polymer particles (A) covered with the resin (B) (hereinafter also simply referred to as "covered particles (A)") have a volume-average particle size of 1.030 X$\mu$m to 4.000 X$\mu$m, where X is a volume-average particle size of the fine polymer particles (A) before the fine polymer particles (A) are covered with the resin (B). In a case where the volume-average particle size of the covered particles (A) falls within the above range, it is possible to efficiently collect, from the present latex, a coagulate which contains the fine polymer particles (A) and the resin (B).

From the viewpoint of efficient collection of the coagulate, the volume-average particle size of the covered particles (A) is preferably 1.030 X$\mu$m to 3.500 X$\mu$m, more preferably 1.030 X$\mu$m to 3.000 X$\mu$m, more preferably 1.030 X$\mu$m to 2.500 X$\mu$m, more preferably 1.030 X$\mu$m to 2.000 X$\mu$m, more preferably 1.030 X$\mu$m to 1.800 X$\mu$m, more preferably 1.030 X$\mu$m to 1.600 X$\mu$m, more preferably 1.030 X$\mu$m to 1.400 X$\mu$m, and particularly preferably 1.040 X$\mu$m to 1.200 X$\mu$m.

(1-6. Physical properties of latex (permeability of solution V))

The solution V obtained by the operations below from the present latex has a permeability of preferably not less than 30%, more preferably not less than 45%, more preferably not less than 50%, and particularly preferably not less than 70% at 546 nm. The permeability of the solution V at 546 nm can be measured with use of, for example, an ultraviolet-visible spectrophotometer.

The high permeability of the solution V is intended to mean that (a) the amount of a polymer particle(s) (A) present in the solution V in the form of a primary particle or very small secondary particles (an aggregate of primary particles, i.e., a coagulate) is small and (b) there are many fine polymer particles (A) present in the solution V in the form of large secondary particles (coagulate). In other words, the latex resulting in a solution V which has a permeability of not less than 30% at 546 nm has an advantage of being able to efficiently provide a coagulate containing the fine polymer particles (A) and the resin (B).

In the present specification, the solution V is obtained by the following operations:

(1) a coagulant is added to the latex to obtain a mixture, and the mixture is mixed for 2 minutes to 60 minutes;
(2) the mixture is separated into the coagulate and a water component; and
(3) 1 g of the resultant coagulate is added to 30 g of ion exchanged water, and the resultant mixture (solution) is shaken for 10 minutes.

It should be noted that an amount of the coagulant added in (1) is sufficient for a permeability, at 546 nm, of the water component obtained in (2) to be not less than 30%.

In the above (1), the type of the coagulant is not limited to any particular one, and is, for example, sodium sulfate. In the above (1), the amount of the coagulant is not particularly limited, provided that the amount of the coagulant is sufficient for the permeability, at 546 nm, of the water component obtained by separating the latex into the water component and the coagulate to be not less than 30%. Such an amount varies depending on the type of the fine polymer particles (A) and the like, and can be adjusted as appropriate. For example, 20 parts by weight of an aqueous solution of the coagulant containing the coagulant at a concentration of 15% (weight/weight%) with respect to 100 parts by weight of the latex. In the above (1), the method of mixing the mixture is not limited to any particular one. Examples of the method encompass a method in which the resultant mixture is stirred with use of a spatula in a beaker. That is, examples of the operation in the (1) encompass a step of adding, to 100 parts by weight of the latex, 20 parts by weight of an aqueous sodium sulfate solution containing sodium sulfate at a concentration of 15% (weight/weight%) and using a spatula in a beaker to stir the resultant mixture for 2 minutes. In a case where the water component is white and turbid and the permeability of the water component is less than 30% at 546 nm, the operation from (1) may be carried out with respect to a new latex with use of an increased amount of the coagulant. Instead of the aqueous sodium sulfate solution, an aqueous calcium chloride solution containing calcium chloride at a concentration of 35% (weight/weight%) may be used. Note that the permeability of the water component obtained in (2) at 546 nm can be measured with use of, for example, an ultraviolet-visible spectrophotometer.

In the above (2), the mixture is separated such that the post-separation coagulate has a water content of not less than 50% at 23°C and a relative humidity of 50%. From the weight of the coagulate at 23°C and a relative humidity of 50% (pre-drying weight) and from the weight of the coagulate after the coagulate has been dried at 170°C for 20 minutes (post-drying weight), the water content of the coagulate can be calculated by the following formula:

$$\text{Water content (\%) of coagulate} = \{(\text{pre-drying weight} - \text{post-drying weight})/\text{post-drying weight}\} \times 100.$$

In the above (2), a method of separating the mixture into the coagulate and a water component is not limited to any particular one, provided that the water content of the obtained coagulate is not less than 50% at 23°C and a relative humidity of 50%. Examples of the method encompass methods such as centrifugal separation, filtration, static separation, and press dehydration. In the above (2), the water component is a mixture which contains water as a main component and contains an emulsifying agent, the fine polymer particles (A) which have not coagulated, the resin (B) which have not coagulated, and the like.

In the above (3), the method of shaking the mixture is not limited to any particular one. Examples of the method encompass a method in which Shaker SA31 (manufactured by Yamato Scientific Co., Ltd.) is used to shake the mixture at a speed of 10 for 10 minutes. The permeability of the solution V obtained by the shaking is measured, after the shaking of the mixture (solution) is ended, between (i) a time point at which the mixture (solution) has been left to stand for 1 minute and (ii) a time point at which the mixture has been left to stand for another 1 minute.

In addition, the coagulate obtained in the above (2) (which can also be referred to as a "coagulate produced in the above (1)") does not break as a result of a weak force such as a force applied by mixing with a spatula as in the mixing in the above (1), but may break if a strong force is applied as in the shaking in the above (3). That is, there are cases where the permeability of the solution V at 546 nm in the above (3) may be less than 30% even if the permeability of the water component at 546 nm in the above (2) is not less than 30%.

[2. Method of producing latex (first production method)]

A method of producing the present latex is not limited to any particular one, but is preferably includes the following aspect: a method including a resin mixing step of mixing a resin (B) with a latex precursor containing fine polymer particles (A) and a shearing step of applying shearing stress to a mixture obtained in the resin mixing step.

In the present specification, the "method of producing the present latex" may also be referred to as "first production method".

The first production method includes the aforementioned resin mixing step and the shearing step and thus can easily and efficiently provide the present latex. In addition, the first production method does not use an organic solvent, and therefore has an advantage of imposing a small environmental load. The first production method is also a part of a production method for obtaining a resin composition described later. By carrying out the first production method, a coagulate satisfying the following (a) to (c) can be obtained efficiently and with a small environmental load during the production process to obtain the resin composition described later. (a) Containing fine polymer particles (A) and resin (B); (b) containing few impurities; and (c) excellent in dispersibility of the fine polymer particles (A). That is, by carrying out the first production method, it is possible to obtain, efficiently and with a small environmental load, a resin composition which has few impurities and which has excellent dispersibility of the fine polymer particles (A) through the production method of obtaining the resin composition described later.

The following description will discuss the steps relating to the first production method. For matters other than those detailed below, the disclosures in [1. Latex] section apply as appropriate.

(2-1. Resin mixing step)

The resin mixing step is a step of mixing the resin (B) with the latex precursor. The resin mixing step can also be referred to as a step of adding the resin (B) to the latex precursor and then mixing a resultant mixture. The resin mixing step can also be referred to as a step of mixing the fine polymer particles (A) and the resin (B).

The latex precursor is a solution which, as described above, does not contain the resin (B), and contains a solvent and the fine polymer particles (A), and in which the fine polymer particles (A) are present in such a manner as to be dispersed in the solvent. The description in (1-2. Method of producing fine polymer particles (A)) applies as appropriate to the method of producing the latex precursor.

A method of adding the resin (B) to the latex precursor can be achieved by various methods, which are not particularly limited. Examples thereof encompass: (a) a method in which the resin (B) is directly added to the latex precursor; and (b) a method in which a solution in which the resin (B) has been dissolved is added to the latex precursor. A "solution in which the resin (B) has been dissolved" can also be referred to as "emulsified product in which the resin (B) has been dispersed in water". "Emulsified product" may also be referred to as "emulsified liquid" or "aqueous emulsion".

In the resin mixing step, an emulsified product obtained by dispersing the resin (B) in water is preferably added to the latex precursor. With this feature, it is possible to uniformly disperse the resin (B) in the latex precursor containing the fine polymer particles (A). As a result, through the subsequent shearing step, it is possible to obtain a large amount of the fine polymer particles (A) whose surfaces are covered with the resin (B), that is, to easily and more efficiently obtain the above-described present latex.

A means to mix the latex precursor and the resin (B) is not limited to any particular one. Examples of the method encompass: stirring the latex precursor and the resin (B); mixing with a kneader; mixing with an extruder; and mixing with a self-turning mixer.

In the resin mixing step, the amount of the fine polymer particles (A) in the latex precursor and the amount of the resin (B) mixed with the latex precursor are not particularly limited. The resin mixing step includes (a) preferably the step of mixing 1% by weight to 70% by weight of the fine polymer particles (A) and 30% by weight to 99% by weight of the resin (B), (b) more preferably the step of mixing 1% by weight to 65% by weight of the fine polymer particles (A) and 35% by weight to 99% by weight of the resin (B), (c) more preferably the step of mixing 1% by weight to 60% by weight of the fine polymer particles (A) and 40% by weight to 99% by weight of the resin (B), (d) more preferably the step of mixing 1% by weight to 55% by weight of the fine polymer particles (A) and 45% by weight to 99% by weight of the resin (B), (e) even more preferably the step of mixing 1% by weight to 50% by weight of the fine polymer particles (A) and 50% by weight to 99% by weight of the resin (B), (f) still even more preferably the step of mixing 1% by weight to 45% by weight of the fine polymer particles (A) and 55% by weight to 99% by weight of the resin (B), and (g) particularly preferably the step of mixing 1% by weight to 40% by weight of the fine polymer particles (A) and 60% by weight to 99% by weight of the resin (B), with respect to 100% by weight of the total of the fine polymer particles (A) and the resin (B). In a case where the resin mixing step has the above feature, it is possible to obtain a latex containing a large amount of the fine polymer particles (A) whose surfaces are covered with the resin (B) through the subsequent shearing step. It should be noted that the proportion between the amount of the fine polymer particles (A) in the latex precursor and the amount of the resin (B) mixed with the latex precursor can also be referred to as a proportion between the fine polymer particles (A) and the resin (B) in a mixture obtained in the resin mixing step, that is, a mixture supplied to a shearing device in the shearing step described later.

(2-2. Shearing step)

The shearing step is a step of applying shearing stress to the mixture which has been obtained in the resin mixing step. The shearing step can also be referred to as a step of applying shearing stress to the mixture obtained in the resin mixing step, so as to cover the surfaces of the fine polymer particles (A) with the resin (B). That is, the present latex can be obtained by the shearing step.

A method of applying shearing stress to the mixture is not limited to any particular one, and various techniques can be employed. Examples the method encompass: a method of stirring the latex at 3000 rpm to 25000 rpm with use of a homomixer; a method of stirring the latex at 500 rpm to 12000 rpm with use of a high shearing emulsifier; and a method of using a high pressure homogenizer to stir the latex. In a case where a homomixer is used to obtain a latex that contains a large amount of fine polymer particles (A) whose surfaces are covered with the resin (B), the latex is stirred at preferably 5000 rpm to 25000 rpm, preferably 7000 rpm to 20000 rpm, and more preferably 8000 rpm to 20000 rpm. In a case where a high shearing emulsifier is used to stir the latex to obtain a latex that contains a large amount of fine polymer particles (A) whose surfaces are covered with the resin (B), the latex is stirred at preferably 1000 rpm to 12000 rpm, preferably 2000 rpm to 20000 rpm, and more preferably 2500 rpm to 20000 rpm.

Modes of the shearing step include, at a stage prior to the resin mixing step, (a) a mode in which shearing stress is applied, in advance, to the latex precursor which contains the fine polymer particles (A) and which has not been mixed with the resin (B) and/or (b) a mode in which shearing stress is applied to the resin (B) in advance. The modes of the shearing step may further include a mode in which shearing stress is applied to both (i) the latex precursor containing the fine polymer particles (A) and (ii) the resin (B) in advance before the resin mixing step. These methods are preferable in that it is possible to obtain a latex containing a large amount of fine polymer particles (A) whose surfaces are covered with the resin (B).

In a case where the viscosity of the resin (B) is high, the viscosity of the resin (B) is preferably adjusted to an optimum viscosity. The optimum viscosity of the resin (B) is, for example, more preferably 100 mPa·s to 750,000 mPa.s, more preferably 150 mPa·s to 700,000 mPa·s, more preferably 200 mPa·s to 350,000 mPa·s, more preferably 250 mPa·s to 300,000 mPa.s, more preferably 300 mPa·s to 50,000 mPa·s, even more preferably 350 mPa·s to 30,000 mPa·s, and particularly preferably 400 mPa·s to 15,000 mPa·s. A method of adjusting the viscosity of the resin (B) is not limited to any particular one, and examples of the method encompass a method in which the temperature of the resin (B) is adjusted (e.g. a method in which the temperature of the latex is adjusted). Setting the viscosity of the resin (B) to an optimum value makes it possible to prevent pressure during transfer from becoming excessively high and to efficiently carry out the shearing step. As a result, it is possible to efficiently obtain a latex that contains a larger amount of fine polymer particles (A) whose surfaces are covered with the resin (B).

The temperature of the mixture in the shearing step is not particularly limited. The temperature of the mixture to be subjected to the shearing step is, for example, preferably 10°C to 90°C, more preferably 15°C to 80°C, and more preferably 20°C to 70°C, and particularly preferably 20°C to 60°C. The temperature of the mixture obtained by the shearing step is, for example, preferably 10°C to 90°C, more preferably 15°C to 80°C, and more preferably 20°C to 70°C, and particularly preferably 20°C to 60°C. In a case where the temperature of the mixture to be subjected to the shearing step and/or the temperature of the mixture obtained by the shearing step fall(s) within the above ranges, the following advantages are achieved: (a) the deterioration of the fine polymer particles (A) is suppressed; and (b) it is possible to obtain a latex that contains a larger amount of fine polymer particles (A) whose surfaces are covered with the resin (B). It should be noted that the "temperature of the mixture to be subjected to the shearing step" can also be referred to as the "temperature of the mixture before the shearing step". The "temperature of the mixture obtained by the shearing step" can also be referred to as the "temperature of the mixture after the shearing step" and can also be referred to as the "temperature of the mixture after the shearing step and before the separating step". The separating step will be discussed later.

The shearing step can be carried out in various modes, and is not limited to any particular ones. Examples of the modes encompass: (i) a mode in which the shearing step is carried out in a batch manner by providing a shearing device (emulsifier or the like, e.g. high shearing emulsifier such as colloid mill) in a container in which the mixture having been obtained in the resin mixing step is introduced; (ii) a mode in which the mixture obtained in the shearing step is circulated so as to carry out the step of causing the mixture to pass through a shearing device (emulsifier or the like) a plurality of times, (iii) a mode in which the resin mixing step and the shearing step are continuously carried out; (iv) a step of applying a shearing stress to the mixture having been obtained in the resin mixing step, by providing a shearing device (emulsifier or the like) to a flow path into which a flow path through which the latex precursor or the mixture passes and a flow path through which the resin (B) passes are merged; (v) a mode in which, in the mode (iv), the mixture having been obtained in the shearing step is caused to pass through a shearing device (emulsifier etc.) a plurality of times; and (vi) a mode in which the mixture having been passed through the shearing device (emulsifier etc.) in the (iii)-(v) is separated into an aggregate and a latex and then a shearing stress is applied to the latex at least once.

The shearing step preferably includes a step of applying shearing stress to a mixture obtained in the resin mixing step, such that the following (Formula 1) is satisfied:

$$Y \leq 32 \ \dots \ (Formula\ 1)$$

where Y is obtained by the following (Formula 2):

$$Y = [\{total\ amount\ of\ fine\ polymer\ particles\ (A)\ and\ resin\ (B)\ contained\ in\ latex\} \ /\ \{weight\ of\ latex\}] \times 100\ \dots\ (Formula\ 2).$$

It should be noted that the latex is, for example, obtained in the separating step described later.

The inventors of the present invention independently discovered that, by reducing the total amount of the fine polymer particles (A) and the resin (B) contained in the latex with respect to the weight of the latex, it is possible to obtain a latex containing a larger amount of the fine polymer particles (A) whose surfaces are covered with the resin (B).

In a case where the shearing step includes a step of applying a shearing stress to the mixture obtained in the resin mixing step such that the above (Formula 1) is satisfied, there is an advantage that the shearing step makes it possible to obtain a latex containing a larger amount of the fine polymer particles (A) whose surfaces are covered with the resin (B).

The shearing step includes a step of applying a shearing stress to the mixture obtained in the resin mixing step, so as to satisfy more preferably $Y \leq 30$, even more preferably $Y \leq 28$, and particularly preferably $Y \leq 26$. The above feature brings about an advantage of being able to obtain a latex containing a larger amount of the fine polymer particles (A) whose surfaces are covered with the resin (B).

The shearing step more preferably includes a step of applying shearing stress to a mixture obtained in the resin mixing step, such that the following (Formula 4) is satisfied:

$$10 \leq Y \ \dots \ (Formula\ 4).$$

The above feature brings about an advantage of being able to obtain a latex containing a larger amount of fine polymer particles (A) whose surfaces are covered with the resin (B).

The shearing step includes a step of applying shearing stress to the mixture obtained in the resin mixing step, so as to satisfy more preferably 12 ≤ Y, more preferably 14 ≤ Y, more preferably 16 ≤ Y, more preferably 18 ≤ Y, more preferably 20 ≤ Y, and particularly preferably 22 ≤ Y. The above feature brings about an advantage of being able to obtain a latex containing an even larger amount of fine polymer particles (A) whose surfaces are covered with the resin (B).

For example, the above-described (Formula 1) and/or the above-described (Formula 4) can be satisfied by adjusting the following items as appropriate:

a shearing device; the clearance of the shearing device; the amount (kg) of mixture to which shearing stress is to be applied per unit time (h) (hereinafter also referred to as "processing amount"); the period of time in which the mixture is retained in the shearing device (hereinafter also referred to as "retention time"); the rotation speed of the shearing device; the proportion between the fine polymer particles (A) and the resin (B) in the mixture to be provided in the shearing device; the temperature of the mixture in the shearing step; the concentration of the fine polymer particles (A) in the latex precursor; and the like. The proportion between the fine polymer particles (A) and the resin (B) in the mixture to be provided in the shearing device and the temperature of the mixture in the shearing step is as already discussed.

The clearance of the shearing device is not limited to any particular one. The clearance of the shearing device is, for example, preferably 10 μm to 3000 μm, more preferably 20 μm to 2000 μm, even more preferably 50 μm to 1500 μm, and particularly preferably 100 μm to 1000 μm. The above feature brings about an advantage of being able to obtain a latex containing a large amount of the fine polymer particles (A) whose surfaces are covered with the resin (B). "Clearance of the shearing device" as used herein is intended to mean a gap between the stirrer blade provided within the shearing device and the shearing device wall surface (in a case where the shearing device is a colloid mill, a gap between the rotor and the stator).

The processing amount is not particularly limited. The processing amount is, for example, preferably 1 kg/h to 50000 kg/h, more preferably 10 kg/h to 25000 kg/h, more preferably 100 kg/h to 10000 kg/h, and even more preferably 100 kg/h to 5000 kg/h. The above feature brings about an advantage of being able to obtain a latex containing a large amount of the fine polymer particles (A) whose surfaces are covered with the resin (B).

The retention time is not particularly limited. The retention time is, for example, preferably 0.1 s to 12 s, more preferably 0.1 s to 10 s, more preferably 0.5 s to 8 s, even more preferably 0.8 s to 5 s, and particularly preferably 1 s to 4 s. The above feature brings about an advantage of being able to obtain a latex containing a large amount of the fine polymer particles (A) whose surfaces are covered with the resin (B). In a case where the shearing step is carried out a plurality of times, in other words, in a case where the mixture is passed through (processed by) the shearing device a plurality of times, the retention time is intended to mean the total time during which the mixture has been retained in the shearing device.

The rotation speed of the shearing device is not particularly limited. The rotation speed of the shearing device is, for example, 1000 rpm to 6000 rpm, more preferably 1500 rpm to 5000 rpm, even more preferably 2000 rpm to 4000 rpm, and particularly preferably 2500 rpm to 4000 rpm. The above feature brings about an advantage of being able to obtain a latex containing a large amount of the fine polymer particles (A) whose surfaces are covered with the resin (B). "The rotation speed of the shearing device" can also be referred to as "rotation speed of the stirrer blade provided in the shearing device". "The rotation speed of the shearing device" can also be referred as the rotation speed of the rotor in a case where the shearing device is a colloid mill.

The concentration of the fine polymer particles (A) in the latex precursor is not particularly limited. The concentration of the fine polymer particles (A) in the latex precursor is, for example, preferably 1% by weight to 70% by weight, more preferably 5% by weight to 60% by weight, even more preferably 10% by weight to 50% by weight, with respect to 100% by weight of the latex precursor. The above feature brings about an advantage of being able to obtain a latex containing a large amount of the fine polymer particles (A) whose surfaces are covered with the resin (B). "The concentration of the fine polymer particles (A) in the latex precursor" can be adjusted, as appropriate, by changing the amount of the solvent (e.g. water) used, the amount of the monomer used etc. in the process of producing the fine polymer particles (A).

(2-3. Separating step)

The first production method preferably further includes, after the shearing step, a step of separating the mixture obtained in the shearing step into: a resin composition which is a coagulate containing the fine polymer particles (A) and the resin (B); and a latex. In other words, the separating step in the first production method can also be referred to as a step of obtaining (a) the resin composition which is a coagulate containing the fine polymer particles (A) and the resin (B) and (b) the latex in accordance with an embodiment of the present invention.

A method of separating the mixture into a coagulate and a latex is not limited to any particular one. Examples of the method encompass methods such as filtration and press dehydration.

The separating step is optional in the method of producing the latex in accordance with an embodiment of the present invention. Without carrying out the separating step, the mixture obtained in the shearing step can be used as the latex in accordance with an embodiment of the present invention.

[3. Method of producing resin composition (second production method)]

A method of producing a resin composition in accordance with an embodiment of the present invention includes: a resin mixing step of mixing a resin (B) with a latex precursor containing fine polymer particles (A); a shearing step of applying a shearing stress to a mixture obtained in the resin mixing step; a coagulant adding step of adding a coagulant to a mixture obtained in the shearing step; and a mixing step of mixing a mixture obtained in the coagulant adding step. The mixing step includes a step of mixing the mixture obtained in the coagulant adding step such that a coagulate, which is obtained by separating the mixture obtained in the mixing step into the coagulate and a water component, contains not less than 20% by weight of the fine polymer particles (A) with respect to 100% by weight of the coagulate. The fine polymer particles (A) have a graft part that is constituted by a polymer that contains a structural unit derived from at least one type of monomer selected from the group consisting of aromatic vinyl monomers, vinyl cyanide monomers, and (meth)acrylate monomers. The resin (B) is, at 25°C, a liquid which has a viscosity of 100 mPa·s to 1,000,000 mPa·s, a semisolid, or a solid. The fine polymer particles (A) are contained in an amount of 1% by weight to 70% by weight and the resin (B) is contained in an amount of 30% by weight to 99% by weight with respect to 100% by weight of a total amount of the fine polymer particles (A) and the resin (B).

Hereinafter in the present specification, the "method of producing a resin composition in accordance with an embodiment of the present invention" may also be referred to as "second production method".

The second production method includes the above-described resin mixing step and shearing step, similarly to the first production method. Therefore, it can be said that the second production method includes the first production method, and the second production method can produce the present latex as an intermediate product. In the second production method, a mixture containing the present latex is used to obtain a coagulate through the above-described coagulant adding step and the mixing step. Therefore, there is also an advantage that it is possible to take less emulsifying agent into the coagulate and obtain a coagulate that contains few amount of emulsifying agent-derived substances (impurities). In addition, the second production method does not use an organic solvent, and therefore has an advantage of imposing a small environmental load. Therefore, the second production method has an advantage that it is possible to provide, efficiently and with a small environmental load, a resin composition which has few impurities and which has excellent dispersibility of the fine polymer particles (A). "Being able to efficiently provide a resin composition" is also referred to as "improving productivity".

The following description will discuss the steps relating to the second production method. For matters other than those detailed below, the disclosures in [1. Latex] and [2. Method of producing latex (first production method)] sections apply as appropriate.

(3-1. Resin mixing step)

The resin mixing step is a step of mixing the resin (B) with the latex precursor. The resin mixing step in the second production method is similar to the resin mixing step in the first production method. In the second production method, the proportion between the amount of the fine polymer particles (A) in the latex precursor and the amount of the resin (B) mixed with the latex precursor can be identical to a proportion between the fine polymer particles (A) and the resin (B) in a mixture supplied to the mixing device in the mixing step in the second production method.

(3-2. Shearing step)

The shearing step is a step of applying a shearing stress to a mixture which has been obtained in the resin mixing step. The shearing step in the second production method is similar to the shearing step in the first production method. It should be noted that the mixture obtained in the shearing step can also be referred to as the present latex.

(3-3. Coagulant adding step)

The coagulant adding step is a step of adding a coagulant to the mixture obtained in the shearing step.

The coagulant is not limited to any particular one. The coagulant may be, for example, a substance having a property which can coagulate and flocculate the fine polymer particles (A) in the present latex. Examples of the coagulant encompass (a) inorganic acids (salts) and/or organic acids (salts), (b) aqueous solutions of inorganic acids (salts) and/or organic acids (salts), and (c) polymer coagulants. Examples of the inorganic acids encompass hydrochloric acid, sulfuric acid, nitric acid, phosphoric acid, and the like. Examples of the inorganic salt encompass sodium chloride, potassium chloride, lithium chloride, sodium bromide, potassium bromide, lithium bromide, potassium iodide, sodium iodide, potassium sulfate, sodium sulfate, ammonium sulfate, ammonium chloride, sodium nitrate, potassium nitrate, calcium chloride, ferrous sulfate, magnesium sulfate, zinc sulfate, copper sulfate, barium chloride, ferrous chloride, ferric chloride, magnesium chloride, ferric sulfate, aluminum sulfate, potassium alum, iron alum, and the like. Examples of the organic acids encompass acetic acid, formic acid, and the like. Examples of the organic acid salts (organic salts) encompass sodium acetate, calcium acetate, sodium formate, calcium formate, and the like. The polymer coagulant is not particularly limited, provided that the polymer coagulant is a polymer compound having a hydrophilic group and a hydrophobic group. The polymer coagulant may be, for example, any of anionic, cationic, and nonionic polymer coagulants. From the viewpoint of further heightening the functional effect of an embodiment of the present invention, the polymer coagulant is preferably a cationic polymer coagulant. An example of the cationic polymer coagulant is a polymer coagulant having a cationic group in molecules, i.e., a polymer coagulant which exhibits a cationic property when being dissolved in water. Specific examples of the cationic polymer coagulant encompass polyamines, polydicyandiamides, cationized starch, cation-based poly(meth)acrylamide, water-soluble aniline resin, polythiourea, polyethyleneimine, quaternary ammonium salts, polyvinylpyridines, chitosan, and the like. The above coagulants may be used alone or in combination of two or more. As the coagulant, among these compounds, an aqueous solution of a monovalent or bivalent inorganic salt or inorganic acid of sodium chloride, potassium chloride, sodium sulfate, ammonium chloride, calcium chloride, magnesium chloride, magnesium sulfate, barium chloride, hydrochloric acid, sulfuric acid, or the like can be suitably used. A method of adding a coagulant is not limited to any particular one, and examples thereof encompass (a) a method in which the total amount of a coagulant to be added is added simultaneously in a short period of time, (b) a method in which the total amount of the coagulant to be added is separated into several parts and is added in several divided doses over a certain period of time, or (c) a method in which the total amount of the coagulant to be added is added continuously in small amounts in several parts.

The amount of the coagulant to be added can be 1 part by weight to 50 parts by weight with respect to 100 parts by weight of the mixture. The amount of the coagulant is preferably 2 parts by weight to 30 parts by weight, and more preferably 3 parts by weight to 20 parts by weight. Note that the amount of the coagulant to be added can be varied, as appropriate, depending on the type of the latex.

It should be noted that, between the shearing step and the coagulant adding step, there may be carried out a separating step of separating the mixture obtained in the shearing step into the coagulate and a water component. In a case where the separating step is carried out, the coagulant adding step may be a step of adding the coagulant to the water component obtained in the separating step. It should be noted that a water component obtained by subjecting the mixture obtained in the shearing step to the separating step can also be referred to as the present latex. The separating step may be similar to the separating step in the first production method, and a description thereof is omitted.

Note that, as a variation of the second production method, instead of carrying out the coagulant adding step, a freezing step of freezing the mixture obtained in the shearing step may be carried out. A thawing step of thawing the latex frozen in the freezing step may be carried out. When the mixture after the freezing step is used in the mixing step described later, it is possible to prepare a resin composition which is a coagulate containing the fine polymer particles (A) and the resin (B), as in the case where the mixture after the coagulant adding step is used. In a case where the freezing step is carried out, the thawing step may be carried out before the mixing step, or the mixing step may be started at a stage midway through the thawing step.

(3-4. Mixing Step)

The mixing step is a step of mixing the mixture obtained in the coagulant adding step. The mixing step can also be referred to as a step of preparing a resin composition which is a coagulate containing the fine polymer particles (A) and the resin (B), with use of the mixture obtained in the coagulant adding step.

A method of mixing the mixture obtained in the coagulant adding step is not limited to any particular one, and various techniques can be employed. Examples of the method encompass: a method of stirring the mixture at 3000 rpm to 25000 rpm with use of a homomixer; a method of stirring the mixture at 500 rpm to 12000 rpm with use of a high shearing emulsifier; a method of stirring the mixture with use of a high pressure homogenizer; and a method of stirring the mixture at 100 rpm to 2000 rpm with use of a pin mixer (e.g. pin mixer with rotor pins and stator pins). To obtain a larger amount of the resin composition which is a coagulate containing the fine polymer particles (A) and the resin (B), in a case where a homomixer is used, the mixture is stirred preferably at 5000 rpm to 25000 rpm, preferably at 7000 rpm to 20000 rpm, and more preferably at 8000 rpm to 20000 rpm. To stir the mixture to obtain a larger amount of the resin composition which is a coagulate containing the fine polymer particles (A) and the resin (B), in a case where a high shearing emulsifier is used, the mixture is stirred preferably at 1000 rpm to 12000 rpm, preferably at 2000 rpm to 20000 rpm, and more preferably at 2500 rpm to 20000 rpm. In a case where the mixture is stirred with a pin mixer, the mixture is stirred preferably at 150 rpm to 1500 rpm, preferably at 150 rpm to 1000 rpm, and more preferably at 150 rpm to 500 rpm.

In a case where the viscosity of the resin (B) is high, the viscosity of the resin (B) is preferably adjusted to an optimum viscosity. The optimum viscosity of the resin (B) is, for example, more preferably 100 mPa·s to 750,000 mPa·s, more preferably 150 mPa·s to 700,000 mPa.s, more preferably 200 mPa·s to 350,000 mPa·s, more preferably 250 mPa·s to 300,000 mPa·s, more preferably 300 mPa·s to 50,000 mPa·s, even more preferably 350 mPa·s to 30,000 mPa·s, and particularly preferably 400 mPa·s to 15,000 mPa·s. A method of adjusting the viscosity of the resin (B) is not limited to any particular one, and examples of the method encompass a method in which the temperature of the resin (B) is adjusted (e.g. a method in which the temperature of the mixture obtained in the coagulant adding step is adjusted). Setting the viscosity of the resin (B) to an optimum value makes it possible to prevent a pressure during transfer from becoming excessively high and to efficiently carry out the mixing step. As a result, it is possible to obtain a resin composition which is a coagulate containing the fine polymer particles (A) and the resin (B) in a larger amount and more efficiently.

The mixing step is preferably carried out in the presence of a gas-liquid interface. With this feature, it is possible to obtain a resin composition which is a coagulate containing the fine polymer particles (A) and the resin (B) in a larger amount and more efficiently. In order to carry out the mixing step in the presence of the gas-liquid interface, air bubbles (also referred to as air or bubbles) may be present in the mixture obtained in the coagulant adding step. In other words, the mixing step is preferably carried out while mixing the mixture obtained in the coagulant adding step and a gas (for example, air, carbon dioxide, and nitrogen).

The temperature of the mixture in the mixing step is not particularly limited. The temperature of the mixture to be subjected to the mixing step is, for example, preferably 10°C to 90°C, more preferably 15°C to 80°C, even more preferably 20°C to 70°C, and particularly preferably 20°C to 60°C. The temperature of the mixture obtained in the mixing step is, for example, preferably 10°C to 90°C, more preferably 15°C to 80°C, even more preferably 20°C to 70°C, and particularly preferably 20°C to 60°C. In a case where the temperature of the mixture to be subjected to the mixing step and/or the temperature of the mixture obtained in the mixing step fall(s) within the above ranges, the following advantages are achieved: (a) the deterioration of the fine polymer particles (A) is suppressed; and (b) it is possible to obtain a larger amount of the resin composition which is a coagulate containing the fine polymer particles (A) and the resin (B). It should be noted that "the temperature of the mixture to be subjected to the mixing step" can also be referred to as "the temperature of the mixture before the mixing step". "The temperature of the mixture obtained in the mixing step" can also be referred to as "the temperature of the mixture after the mixing step" and can also be referred to as "the temperature of the mixture after the mixing step and before the separating step". The separating step in the second production method will be discussed later.

The mixing step can be carried out in various modes, and is not particularly limited. Examples of the modes encompass: (i) a mode in which a mixing device (e.g. emulsifier) is placed in a container in which the mixture obtained in the coagulant adding step has been introduced and the mixing step is carried out in a batch manner; (ii) a mode in which the mixture obtained in the mixing step is circulated, so that a step of passing the mixture through the mixing device (e.g. emulsifier) is carried out a plurality of times; (iii) a mode in which the coagulant adding step and the mixing step are carried out continuously; (iv) a step in which a mixing device (e.g. emulsifier) is placed at a flow path into which a flow path through which the mixture obtained in the sharing step passes and a flow path through which the coagulant passes are merged and a mixture obtained in the coagulant adding step is mixed, (v) a mode in which, in the mode (iv), the mixture obtained in the mixing step is passed through the mixing device (e.g. emulsifier) a plurality of times, and (v) a mode in which, in the modes (iii)-(v), the mixture having passed through the mixing device (e.g. emulsifier) is separated into a coagulate and a water component, and then the water component is passed through the mixing device at least once. Examples of the mixing device encompass high shearing emulsifiers such as homomixers, high pressure homogenizers, and pin mixers.

The mixing step is preferably a step of mixing the mixture obtained in the coagulant adding step such that a coagulate, which is obtained by separating the mixture obtained in the mixing step into the coagulate and a water component, contains not less than 20% by weight of the fine polymer particles (A) with respect to 100% by weight of the coagulate.

The inventors of the present invention independently discovered the following findings: There is an advantage that the productivity is improved by mixing the mixture obtained in the coagulant adding step such that a coagulate, which is obtained by separating the mixture obtained in the mixing step into the coagulate and a water component, contains not less than 20% by weight of the fine polymer particles (A) with respect to 100% by weight of the coagulate.

The mixing step includes a step of mixing the mixture obtained in the coagulant adding step such that a coagulate, which is obtained by separating the mixture obtained in the mixing step into the coagulate and a water component, contains the fine polymer particles (A) in an amount of preferably not less than 20% by weight, more preferably not less than 23% by weight, even more preferably not less than 27% by weight, and particularly preferably not less than 29% by weight, with respect to 100% by weight of the coagulate. The above feature brings about an advantage of improving productivity.

For example, the coagulate which is obtained by separating the mixture obtained in the mixing step into the coagulate and the water component can preferably contain not less than 20% by weight of the fine polymer particles (A) with respect to 100% by weight of the coagulate by adjusting the following items as appropriate: the mixing method, the mixing device, the number of times of mixing, the mixing time, the time during which the mixture is retained in the mixing device (hereinafter also referred to as retention time), the rotation speed of the mixing device, the temperature of the mixture in the mixing step, the proportion between the fine polymer particles (A) and the resin (B) in the mixture to be supplied to the mixing device and the like, when mixing the mixture obtained in the coagulant adding step. The temperature of the mixture in the mixing step has been described previously.

The mixing step preferably includes a step of mixing the mixture obtained in the coagulant adding step such that a coagulate, which is obtained by separating the mixture obtained in the mixing step into the coagulate and the water component, has a water content of not more than 45% by weight with respect to 100% by weight of the coagulate.

The inventors of the present invention independently discovered the following findings: There is an advantage that it is possible to efficiently remove the impurities by mixing the mixture obtained in the coagulant adding step such that a coagulate, which is obtained by separating the mixture obtained in the mixing step into the coagulate and the water component, has a water content of not more than 45% by weight with respect to 100% by weight of the coagulate.

The mixing step includes a step of mixing the mixture obtained in the coagulant adding step such that a coagulate, which is obtained by separating the mixture obtained in the mixing step into the coagulate and the water component, has a water content of more preferably not more than 40% by weight, even more preferably not more than 35% by weight, and particularly preferably not more than 30% by weight with respect to 100% by weight of the coagulate. The above feature brings about an advantage of being able to efficiently remove an impurity.

For example, the water content of the coagulate which is obtained by separating the mixture obtained in the mixing step into the coagulant and the water component can be not more than 45% by weight with respect to 100% by weight of the coagulate by adjusting the following items as appropriate: the mixing method, the mixing device, the number of times of mixing, the mixing time, the time during which the mixture is retained in the mixing device (hereinafter also referred to as retention time), the rotation speed of the mixing device, the temperature of the mixture in the mixing step, the proportion between the fine polymer particles (A) and the resin (B) in the mixture to be supplied to the mixing device and the like, when mixing the mixture obtained in the coagulant adding step. The temperature of the mixture in the mixing step has been described previously.

The number of times of mixing is not limited to any particular one, and can be, for example, 1 to 10, but preferably 1 to 6, and more preferably 1 to 4. The above feature brings about (a) an advantage of being able to obtain a larger amount of the resin composition which is a coagulate containing the fine polymer particles (A) and the resin (B) and (b) an advantage of improving productivity.

The mixing time is not limited to any particular one, for example, preferably not less than 1 second, more preferably not less than 3 seconds, even more preferably not less than 5 seconds, and particularly preferably not less than 10 seconds. The above feature brings about an advantage of being able to obtain a larger amount of the resin composition which is a coagulate containing the fine polymer particles (A) and the resin (B).

The retention time is not particularly limited. The retention time is, for example, preferably 0.1 s to 60 s, more preferably 0.5 s to 50 s, even more preferably 1 s to 40 s, and particularly preferably 5 s to 30 s. The above feature brings about (a) an advantage of being able to obtain a larger amount of the resin composition which is a coagulate containing the fine polymer particles (A) and the resin (B) and (b) an advantage of removing the impurities efficiently. In a case where the mixing step is carried out a plurality of times, in other words, in a case where the mixture obtained in the coagulant adding step is passed through (processed by) the mixing device a plurality of times, the retention time is intended to mean the total time during which the mixture is retained in the mixing device.

The rotation speed of the mixing device is not particularly limited. The rotation speed of the mixing device is, for example, preferably from 150 rpm to 1500 rpm, more preferably from 150 rpm to 1000 rpm, even more preferably from 150 rpm to 500 rpm, and particularly preferably from 150 rpm to 300 rpm. The above feature brings about (a) an advantage of being able to obtain a larger amount of the resin composition which is a coagulate containing the fine polymer particles (A) and the resin (B) and (b) an advantage of removing the impurities efficiently. The "rotation speed of the mixing device" can also be referred to as the rotation speed of the rotation axis included in the mixing device. In a case where the mixing device is a pin mixer having rotor pins and stator pins, for example, "the rotation speed of the mixing device" can be also referred to as the rotation speed of the rotation axis having rotor pins and stator pins.

The mixing step preferably includes a step of mixing the mixture obtained in the coagulant adding step with use of a pin mixer having rotor pins and stator pins. Furthermore, the mixing step preferably includes a step of mixing the mixture obtained in the coagulant adding step such that "beating number" represented by the following (Formula 3) is not less than 5000 times.

$$[\text{Beating number}] = (\text{number of times rotor pins and stator pins interlace per rotation [times/rev]}) \times (\text{rotation speed [rev/minute]}) \times (\text{retention time [minute]}) \ldots (\text{Formula 3})$$

The unit of rotation speed "rev/minute" is also referred to as "rpm".

The inventors of the present invention independently discovered that when the mixture obtained in the coagulant adding step is mixed under a condition that "beating number" represented by (Formula 3) is large (for example, not less than 5000 times), it is possible to obtain a larger amount of a resin composition which is a coagulate containing the fine polymer particles (A) and the resin (B).

The beating number in the mixing step is preferably not less than 5000 times, more preferably not less than 7500 times, even more preferably not less than 10000 times, and particularly preferably not less than 15000 times. The above feature brings about (a) an advantage of being able to obtain a larger amount of the resin composition which is a coagulate containing the fine polymer particles (A) and the resin (B) and (b) an advantage of improving productivity.

(3-5. Separating step)

The second production method preferably further includes, after the mixing step, a separating step of separating the mixture obtained in the mixing step into: a resin composition which is a coagulate containing the fine polymer particles (A) and the resin (B); and a water component.

In order to distinguish between the separating step carried out between the shearing step and the coagulant adding step in the first and second production methods and the separating step carried out after the mixing step in the second production method, the separating step carried out between the shearing step and the coagulant adding step may be referred to as "first separating step", and the separating step carried out after the mixing step may be referred to as "second separating step".

The second separating step can also be referred to as a step of removing water in the mixture obtained in the mixing step to obtain the resin composition which is a coagulate containing the fine polymer particles (A) and the resin (B).

A method of separating the coagulate and the water component is not limited to any particular one. Examples of the method encompass methods such as filtration and press dehydration. In the separating step, the water component is a mixture which contains water as a main component and also contains, for example, an emulsifying agent, the fine polymer particles (A) which have not been coagulated, and the resin (B).

It is preferable for the second separating step to include a step of adjusting the water content of the coagulate to range from 5% by weight to 45% by weight with respect to 100% by weight of the coagulate. Setting the water content of the coagulate to be within such a range brings about the following advantages. That is, when the obtained resin composition is blended into a thermosetting resin, viscosity does not become excessively high, so that handling is made easy. Note that, in the present specification, the water content of the coagulate (resin composition) is a value measured with use of a moisture measuring device.

(3-6. Rinsing step)

It is preferable for the second production method to further include a step of rinsing the resin composition which is a coagulate obtained in the mixing step. By rinsing the resin composition which is a coagulate, a coagulate which contains a small amount of contaminants and the like can be obtained. In the rinsing step, the coagulate is more preferably rinsed with water, even more preferably rinsed with ion exchanged water or pure water.

The rinsing step may be carried out in such a manner that the separating step is not carried out after the mixing step and the mixture obtained in the mixing step is added with rinse water to rinse the coagulate. Alternatively, the rinsing step may be carried out in such a manner that after the separating step carried out after the mixing step, rinse water is added to the coagulate obtained in the separating step to rinse the coagulate.

The rinsing step preferably includes a step of mixing a mixture of the coagulate and rinse water such that, in a post-rinsing coagulate (resin composition) obtained by separating a mixture obtained in the rinsing step into the post-rinsing coagulate and a post-rinsing water component, amounts of sulfur (S) and phosphorus (P) which are derived from the coagulant and an emulsifying agent are not more than 5000 ppm with respect to a weight of the post-rinsing coagulate. The above feature brings about an advantage of being able to obtain a coagulate that contains a smaller amount of contaminants and the like.

The amounts of S and P which are derived from the coagulant and the emulsifying agent in the post-rinsing coagulate are preferably smaller, for example, preferably not more than 5000 ppm, more preferably not more than 4000 ppm, even more preferably not more than 3000 ppm, and particularly preferably not more than 2000 ppm with respect to the weight of the post-rinsing coagulate.

For example, the amounts of S and P which are derived from the coagulant and the emulsifying agent in the post-rinsing coagulate can be not more than 5000 ppm with respect to the weight of the post-rinsing coagulate, by adjusting the following items as appropriate: the mixing method, the mixing device, the number of times of mixing, the mixing time (also referred to as rinsing time), the time in which the mixture is retained in the mixing device (hereinafter also referred to as retention time), the rotation speed of the mixing device, the amount of rinse water, the temperature of the rinse water, the proportion between the fine polymer particles (A) and the resin (B) in the mixing device, and the like, when mixing the mixture of the coagulate and the rinse water.

The mixing method in the rinsing step is not limited to any particular one, and examples thereof encompass the following methods: (a) a method of shearing and stirring the mixture with use of a stirrer, homomixer, a high shearing emulsifier, or the like; (b) a method of kneading the mixture with use of a kneader; (c) a method of mixing the mixture with use of a self-turning mixer; and (d) a method of mixing the mixture with a pin mixer (e.g., a pin mixer having rotor pins and stator pins). Examples of the kneader encompass various types of kneaders such as batch type kneaders, continuous type kneaders, and extruders.

The number of times of mixing is not limited to any particular one, and can be, for example, 1 to 10, but preferably 1 to 6, and more preferably 1 to 4.

The rinsing step preferably includes a step of mixing the mixture of the coagulate and rinse water for not less than 2 seconds. In other words, the mixing time in the rinsing step is preferably not less than 2 seconds. The mixing time is more preferably not less than 5 seconds, even more preferably not less than 10 seconds, and particularly preferably not less than 15 seconds. The above feature brings about an advantage of being able to obtain a coagulate that contains a smaller amount of contaminants and the like. Note that in a case where the number of times of mixing is not less than two, the mixing time is the total time of each mixing time.

The retention time is not particularly limited. The retention time is, for example, preferably 2 seconds to 30 seconds, more preferably 2 seconds to 20 seconds, even more preferably 2 seconds to 15 seconds, and particularly preferably 2 seconds to 10 seconds. The above feature brings about an advantage of being able to obtain a coagulate that contains a smaller amount of contaminants and the like. In a case where the rinsing step is carried out a plurality of times, in other words, in a case where the mixture of the coagulate and rinse water is passed through (processed by) the mixing device a plurality of times, the retention time is intended to mean the total time during which the mixture is retained in the mixing device.

The rotation speed of the mixing device is not particularly limited. The rotation speed of the mixing device is, for example, preferably from 150 rpm to 1500 rpm, more preferably from 150 rpm to 1000 rpm, even more preferably from 150 rpm to 500 rpm, and particularly preferably from 150 rpm to 300 rpm. The above feature brings about an advantage of being able to obtain a coagulate that contains a smaller amount of contaminants and the like.

The rinsing step preferably includes a step of mixing the mixture of the coagulate and rinse water with use of a pin mixer having rotor pins and stator pins. Furthermore, the rinsing step preferably includes a step of mixing the mixture of the coagulate and rinse water such that "beating number" represented by the above (Formula 3) is not less than 25000 times. The inventors of the present invention independently discovered that when the mixture of the coagulate and the rinse water is mixed under a condition that "beating number" represented by (Formula 3) is large (for example, not less than 25000 times), it is possible to move a large amount of contaminants such as an emulsifying agent from the resin composition which is a coagulate containing the fine polymer particles (A) and the resin (B) into the rinse water, that is, it is possible to efficiently rinse the coagulate.

The beating number in the rinsing step is more preferably not less than 27000 times, even more preferably not less than 30000 times, and particularly preferably not less than 32000 times. The above feature brings about an advantage of being able to obtain a coagulate that contains a smaller amount of contaminants and the like.

The amount of the rinse water is not limited to any particular one, and may be, for example, 0.5 parts by weight to 1000 parts by weight, with respect to 1 part by weight of the coagulate (resin composition), but is preferably 1.0 part by weight to 500 parts by weight, more preferably 1.5 parts by weight to 200 parts by weight.

The temperature of rinse water is not limited. Rinse water can be, for example, water at room temperature or water warmer than room temperature. The temperature of the rinse water can be, for example, 10°C to 100°C, but is preferably 15°C to 90°C, more preferably 20°C to 85°C, and particularly preferably 25°C to 60°C. Water warmer than room temperature is preferred because such warmer water is more effective in rinsing. Note that in a case where the coagulate (resin composition) is deteriorated by heat, the resin composition is rinsed at preferably a lower temperature and rinsed for preferably a shorter period of time.

In particular, the temperature of the water used in the rinsing step is preferably not higher than 60°C. In a case where the temperature at which the resin composition is rinsed is not higher than 60°C, the resin composition has a viscosity which allows impurities to be most easily washed away. This allows an improvement in rinsing efficiency. Generally, as the viscosity of an object to be rinsed becomes lower, rinsing efficiency becomes higher. In other words, generally, at high temperatures at which the viscosity of an object to be rinsed becomes low, rinsing efficiency is improved. However, as a result of diligent research, the inventors of the present invention independently discovered that, according to the rinsing step of the present production method, in a case where the temperature during rinsing is equal to or lower than a predetermined temperature, surprisingly, the viscosity becomes higher than that at high temperatures and the rinsing efficiency is improved.

In the rinsing step, it is preferable that the total amount of S and P which are derived from the coagulant and the emulsifying agent in the coagulate be removed by not less than 10% in single rinsing. In other words, it is preferable that the total amount of S and P which are derived from the coagulant and the emulsifying agent in the post-rinsing coagulate become less than 90% by weight in single rinsing with respect to the total amount of 100% by weight of S and P which are derived from the coagulant and the emulsifying agent in the pre-rinsing coagulate. In addition, the total amount of S and P which are derived from the coagulant and the emulsifying agent in the coagulate are removed more preferably by not less than 15%, even more preferably by not less than 20%, particularly preferably by not less than 25%, and most preferably by not less than 30% in single rinsing.

Note that "single rinsing" in the rinsing step is intended to mean a process from mixing the coagulate and the rinse water to separating the resultant mixture into a coagulate (resin composition) and a water component. In other words, even if the number of times of mixing, the rotation speed of the mixing device, the beating number, and the number of times the mixture is passed through the mixing device are a plurality of times, the mixture is regarded as rinsed once, provided that separation of the mixture into a coagulate and a water component is once.

The method of separating the mixture obtained in the rinsing step into a post-rinsing coagulate (resin composition) and a water component is not particularly limited. Examples of the method encompass wiping away rinse water used in rinsing, filtration under reduced pressure, oil-water separation, and press dehydration. A "method of separating a mixture obtained in the rinsing step into a post-rinsing coagulate and a water component" can also be referred to as a "method of removing water used for rinsing (post-rinsing water) from a mixture obtained in the rinsing step".

(Other steps)

In addition to the foregoing steps, the method may include a step of devolatilizing/drying the resin composition, which is the obtained coagulate, by heating. Such a step can be achieved by any of various methods which are not particularly limited. Examples of the methods encompass heating and vacuum devolatilization.

[4. Method of producing resin composition (third production method)]

A method of producing a resin composition in accordance with another embodiment of the present invention includes: a resin mixing step of mixing a resin (B) with a latex precursor containing fine polymer particles (A); a shearing step of applying a shearing stress to a mixture obtained in the resin mixing step; a coagulate collecting step of collecting a coagulate from the mixture obtained in the shearing step; and a rinsing step of rinsing the coagulate obtained in the coagulate collecting step. The rinsing step includes a step of mixing a mixture of the coagulate and rinse water such that, in a post-rinsing coagulate obtained by separating a mixture obtained in the rinsing step into the post-rinsing coagulate and a post-rinsing water component, an amount of S and P derived from an emulsifying agent are not more than 2000 ppm with respect to a weight of the post-rinsing coagulate. The fine polymer particles (A) preferably has a graft part which is constituted by a polymer containing, as one or more structural units, one or more structural units derived from at least one type of monomer selected from the group consisting of aromatic vinyl monomers, vinyl cyanide monomers, and (meth)acrylate monomers. The resin (B) is, at 25°C, a liquid which has a viscosity of 100 mPa·s to 1,000,000 mPa·s, a semisolid, or a solid. The fine polymer particles (A) are contained in an amount of 1% by weight to 70% by weight and the resin (B) is contained in an amount of 30% by weight to 99% by weight, where 100% by weight represents the total amount of the fine polymer particles (A) and the resin (B).

Hereinafter in the present specification, the "method of producing a resin composition in accordance with another embodiment of the present invention" may also be referred to as "third production method".

The third production method brings about the advantage of being able to obtain a resin composition that contains a small amount of emulsifying agent-derived substances (impurities).

The following description will discuss the steps relating to the third production method. For matters other than those detailed below, the disclosures in [1. Latex], [2. Method of producing latex (first production method)], and [3. Method of producing resin composition (second production method)] sections apply as appropriate.

(4-1. Resin mixing step)

The resin mixing step is a step of mixing the resin (B) with the latex precursor. The resin mixing step in the third production method is similar to the resin mixing step in the first production method.

(4-2. Shearing step)

The shearing step is a step of applying shearing stress to a mixture which has been obtained in the resin mixing step. The shearing step in the third production method is similar to the shearing step in the first production method.

(4-3. Coagulate collecting step)

The coagulate collecting step is a step of collecting a coagulate from the mixture obtained in the shearing step. In other words, the coagulate collecting step can also be referred to as a step of removing the latex from the mixture obtained in the shearing step and obtaining the resin composition, which is a coagulate containing the fine polymer particles (A) and the resin (B). Therefore, the specific aspects of the coagulate collecting step is similar to those of the first separating step and/or the second separating step.

(4-4. Rinsing step)

The rinsing step in the third rinsing method is a step of rinsing the resin composition, which is a coagulate obtained in the coagulate collecting step. In the rinsing step, the coagulate is more preferably rinsed with water, further preferably rinsed with ion exchanged water or pure water.

The rinsing step in the third rinsing method preferably includes a step of mixing a mixture of the coagulate and rinse water such that, in a post-rinsing coagulate obtained by separating a mixture obtained in the rinsing step into the post-rinsing coagulate and a post-rinsing water component, amounts of S and P derived from an emulsifying agent are not more than 2000 ppm with respect to a weight of the post-rinsing coagulate. The above feature brings about an advantage of being able to obtain a coagulate that contains a smaller amount of contaminants and the like.

The amounts of S and P derived from the emulsifying agent in the post-rinsing coagulate are preferably smaller, for example, preferably not more than 2000 ppm, more preferably not more than 1500 ppm, even more preferably not more than 1000 ppm, and particularly preferably not more than 500 ppm with respect to the weight of the post-rinsing coagulate.

For example, the amounts of S and P derived from the emulsifying agent in the post-rinsing coagulate can be not more than 2000 ppm with respect to the weight of the post-rinsing coagulate by adjusting, for example, the following items as appropriate. The mixing method, the mixing device, the number of times of mixing, the mixing time (also referred to as a rising time), the time in which the mixture is retained in the mixing device (hereinafter also referred to as a retention time), the rotation speed of the mixing device, the temperature of the mixture in the mixing step, the amount of rinse water, the temperature of rinse water, and the proportion between the fine polymer particles (A) and the resin (B) in the resin mixing step (which can also be referred to as the proportion between the fine polymer particles (A) and the resin (B) in the mixture to be supplied to the mixing device), when mixing the mixture of the coagulate and the rinse water.

For individual aspects of the mixing method, the mixing device, the number of times of mixing, the mixing time, the retention time, the rotation speed of the mixing device, and "beating number" represented by the above (Formula 3), the amount of rinse water, and the temperature of rinse water in the rinsing step of the third production method, the disclosures concerning individual aspects in the section (3-6. Rinsing step) of (3. Method of producing resin composition (second production method)) can be applied as appropriate.

For methods of separating the mixture obtained in the rinsing step into a post-rinsing coagulate (resin composition) and a water component, the disclosure of the section (3-6. Rinsing step) of (3. Method of producing resin composition (second production method)) can be applied as appropriate.

[5. Resin composition]

A resin composition in accordance with an embodiment of the present invention contains: fine polymer particles (A) which have a graft part that is constituted by a polymer that contains, as one or more structural units, one or more structural units derived from at least one type of monomer selected from the group consisting of aromatic vinyl monomers, vinyl cyanide monomers, and (meth)acrylate monomers; and a resin (B) which is, at 25°C, a liquid that has a viscosity of 100 mPa·s to 1,000,000 mPa·s, a semisolid, or a solid, wherein the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B), the resin composition substantially does not contain an organic solvent, the resin composition contains sulfur (S) in an amount of not more than 2000 ppm, dispersibility of the fine polymer particles (A) in a resin composition W is not more than 0 μm, when evaluated in accordance with JIS K5101 with use of a grind gauge, wherein the resin composition W is prepared such that the fine polymer particles (A) are contained in an amount of 5% by weight and the resin (B) is contained in an amount of 95% by weight, where 100% by weight represents a total amount of the fine polymer particles (A) and the resin (B), and a standard deviation of a particle size distribution of the fine polymer particles (A) in a solution Z is not more than 0.250, wherein the solution Z is prepared by mixing a mixture of 1 part by weight of the resin composition W and 1000 parts by weight of the organic solvent with use of Shaker SA31 (Yamato Scientific Co., Ltd.) at a speed of 10 for 30 minutes, and the particle size distribution is measured with use of ZETASIZER NANO ZSP (manufactured by Malvern Panalytical Ltd.) and is indicated by a scattering intensity. A "resin composition in accordance with an embodiment of the present invention" may be hereinafter referred to as a "present resin composition".

In addition, it is preferable that the present resin composition contain P in an amount of not more than 2000 ppm. It is more preferable that the present resin composition contain S and P in a total amount of not more than 2000 ppm. Further, it is preferable that the present resin composition contain calcium (Ca), magnesium (Mg), iron (Fe), zinc (Zn), barium (Ba), and aluminum (Al) each in an amount of not more than 2000 ppm.

The present resin composition hardly contains an organic solvent. Therefore, the present resin composition has reduced environmental impact, and also less adversely affects human bodies. That the ion content of the resin composition is low means that the resin composition contains few impurities and/or contaminants (water-soluble compounds) which are derived from an emulsifying agent, a flocculant (inorganic salt), and/or metallic soap. Therefore, the present resin composition is suitable for use in electronic materials and the like. This is because corrosion, insulation failure, and/or migration of substrate wiring and/or a lead of an element is/are caused depending on the ion content. The present resin composition can be obtained by, for example, the above-described method of producing a resin composition.

(5-1. Dispersibility)

The present resin composition is preferably arranged such that the dispersibility of the fine polymer particles (A) in the resin composition W is not more than 0 μm, when evaluated in accordance with JIS K5101 with use of a grind gauge. The resin composition W is prepared such that the fine polymer particles (A) and the resin (B) are contained in amounts of 5% by weight and 95% by weight, respectively, where 100% by weight represents the total amount of the fine polymer particles (A) and the resin (B). According to the present resin composition, the fine polymer particles (A) are uniformly dispersed in the resin (B). Thus, in a case where the present resin composition is mixed with a matrix resin, the fine polymer particles (A) can be well dispersed in the matrix resin. A specific method of evaluating the dispersibility will be described in detail in Examples below.

(5-2. Organic solvent)

The present resin composition contains substantially no organic solvents. The wording "contains substantially no organic solvents" means that the resin composition contains organic solvent(s) in an amount of not more than 100 ppm.

The amount of an organic solvent contained in the present resin composition (also referred to as a solvent content) is, with respect to the weight of the resin composition, preferably not more than 100 ppm, more preferably not more than 50 ppm, even more preferably not more than 25 ppm, and particularly preferably not more than 10 ppm. It can also be said that the amount of an organic solvent contained in the present resin composition is the amount of a volatile component (other than water) contained in the present resin composition. The amount of an organic solvent (volatile component) contained in the present resin composition can be determined, for example, as follows. That is, a given amount of the resin composition is heated with use of a hot air dryer or the like, the weight of the resin composition is measured before and after heating, and the weight lost in the heating is regarded as the amount of the organic solvent. Alternatively, the amount of an organic solvent (volatile component) contained in the present resin composition can also be determined by gas chromatography. In a case where the organic solvent is not used in the production of the present resin composition, the amount of the organic solvent contained in the obtained resin composition can be regarded as 0 ppm.

Examples of organic solvents substantially not contained in the present resin composition encompass (a) esters such as methyl acetate, ethyl acetate, propyl acetate, and butyl acetate, (b) ketones such as acetone, methyl ethyl ketone, diethyl ketone, and methyl isobutyl ketone, (c) alcohols such as ethanol, (iso)propanol, and butanol, (d) ethers such as tetrahydrofuran, tetrahydropyran, dioxane, and diethyl ether, (e) aromatic hydrocarbons such as benzene, toluene, and xylene, and (f) halogenated hydrocarbons such as methylene chloride and chloroform.

(5-3. Amount of S etc. contained)

The present resin composition contains S in an amount of preferably not more than 1500 ppm, more preferably not more than 1000 ppm, and more preferably not more than 500 ppm. Furthermore, the present resin composition contains P in an amount of preferably not more than 1500 ppm, more preferably not more than 1000 ppm, and particularly preferably not more than 500 ppm. Furthermore, the present resin composition contains S and P in a total amount of preferably not more than 1500 ppm, more preferably not more than 1000 ppm, and particularly preferably not more than 500 ppm. Furthermore, the present resin composition contains each of Ca, Mg, Fe, Zn, Ba, and Al in an amount of preferably not more than 1500 ppm, more preferably not more than 1000 ppm, and particularly preferably not more than 500 ppm.

The present resin composition is arranged such that the standard deviation of the particle size distribution of the fine polymer particles (A) in the solution Z is preferably not more than 0.250, more preferably not more than 0.230, more preferably not more than 0.200, and particularly preferably not more than 0.180, and most preferably not more than 0.160. It should be noted that the solution Z is prepared by mixing a mixture of 1 part by weight of the resin composition W and 1000 parts by weight of the organic solvent with use of Shaker SA31 (Yamato Scientific Co., Ltd.) at a speed of 10 for 30 minutes, and the particle size distribution is measured with use of ZETASIZER NANO ZSP (manufactured by Malvern Panalytical Ltd.) and is indicated by a scattering intensity.

(5-4. Fine polymer particles (A) and resin (B))

The fine polymer particles (A) and the resin (B) are similar to those described in Embodiment 1 (method of producing a resin composition), and the description of Embodiment 1 can apply. In particular, the fine polymer particles (A) are preferably constituted by a rubber-containing graft copolymer which has an elastic body and a graft part grafted to the elastic body. The elastic body preferably includes at least one type of elastic body selected from the group consisting of diene-based rubbers, (meth)acrylate-based rubbers, and polysiloxane rubber-based elastic bodies.

The resin (B) is preferably a thermosetting resin. In particular, the thermosetting resin is preferably at least one type of thermosetting resin selected from the group consisting of: ethylenically unsaturated monomers; epoxy resins; phenolic resins; polyol resins; and amino-formaldehyde resins (melamine resins).

According to the above feature, while the characteristics (heat resistance, rigidity, and the like) of a liquid thermosetting resin are maintained, the fracture toughness, the adhesion strength, the surface impact resistance, and the like can be improved.

[6. Resin composition (mixture of present resin composition and matrix resin)]

The present invention can also include, as an embodiment, a resin composition obtained by mixing the above-described resin composition and a matrix resin. In other words, the present resin composition contains the above-described resin composition and a matrix resin.

(6-1. Matrix resin)

As the matrix resin, a thermosetting resin can be suitably used. The thermosetting resin preferably includes at least one type of thermosetting resin selected from the group consisting of: resins each containing a polymer obtained by polymerization of an ethylenically unsaturated monomer; epoxy resins; phenolic resins; polyol resins; and amino-formaldehyde resins (melamine resins). Examples of the thermosetting resin also encompass resins each containing a polymer obtained by polymerization of an aromatic polyester raw material. Examples of the aromatic polyester raw material encompass radical-polymerizable monomers (such as an aromatic vinyl compound, a (meth)acrylic acid derivative, a vinyl cyanide compound, and a maleimide compound), dimethyl terephthalate, and alkylene glycol. These thermosetting resins may be used alone or in combination of two or more.

(Ethylenically unsaturated monomer)

The ethylenically unsaturated monomer is not limited to any particular one, provided that the ethylenically unsaturated monomer has at least one ethylenically unsaturated bond in its molecule.

Examples of the ethylenically unsaturated monomer encompass acrylic acid, $\alpha$-alkyl acrylic acids, $\alpha$-alkyl acrylic acid esters, $\beta$-alkyl acrylic acids, $\beta$-alkyl acrylic acid esters, methacrylic acid, esters of acrylic acid, esters of methacrylic acid, vinyl acetate, vinyl esters, unsaturated esters, polyunsaturated carboxylic acids, polyunsaturated esters, maleic acid, maleic acid esters, maleic anhydride, and acetoxy styrene. These ethylenically unsaturated monomers may be used alone or in combinations of two or more.

(Epoxy resins)

The epoxy resin is not particularly limited, provided that the epoxy resin contains at least one epoxy bond per molecule.

Specific examples of the epoxy resins encompass bisphenol A epoxy resin, bisphenol F epoxy resin, bisphenol AD epoxy resin, bisphenol S epoxy resin, glycidyl ester type epoxy resin, glycidyl amine type epoxy resin, novolac type epoxy resin, glycidyl ether epoxy resin of bisphenol A propylene oxide adduct, hydrogenated bisphenol A (or F) epoxy resin, fluorinated epoxy resin, rubber-modified epoxy resin containing polybutadiene or NBR, flame-resistant epoxy resin such as glycidyl ether of tetrabromo bisphenol A, p-oxybenzoic acid glycidyl ether ester type epoxy resin, m-aminophenol type epoxy resin, diaminodiphenylmethane-based epoxy resin, urethane-modified epoxy resin containing urethane bond, various types of alicyclic epoxy resin, glycidyl ether of a polyhydric alcohol, hydantoin-type epoxy resin, epoxidized unsaturated polymer such as petroleum resin, and amino-containing glycidyl ether resin. Examples of the polyhydric alcohol encompass N,N-diglycidyl aniline, N,N-diglycidyl-o-toluidine, triglycidyl isocyanurate, polyalkylene glycol diglycidyl ether, and glycerin. Other examples of the epoxy resins encompass an epoxy compound obtained by causing an addition reaction between one of the above epoxy resins and e.g. a bisphenol A (or F) or a polybasic acid. The epoxy resins are not limited to these examples, and a generally used epoxy resin can be used. These epoxy resins may be used alone or in combination of two or more.

Out of these epoxy resins, epoxy resins each of which has at least two epoxy groups in one molecule are preferable in that, e.g., such resins have high reactivity during curing of the resin composition and make it easy for an obtained cured product to create a three-dimensional mesh. In addition, out of the epoxy resins each of which has at least two epoxy groups in one molecule, epoxy resins each of which contains a bisphenol type epoxy resin as a main component are preferable, because they are economical and easily available.

(Phenolic resins)

The phenolic resins are not limited to any particular ones, provided that the phenolic resins are each a compound obtained through a reaction between a phenol and an aldehyde. The phenol is not limited to any particular one, and examples thereof encompass phenols such as phenol, ortho-cresol, meta-cresol, para-cresol, xylenol, para-tertiary butylphenol, para-octylphenol, para-phenylphenol, bisphenol A, bisphenol F, and resorcin. In particular, phenol and cresol are preferred as the phenol.

The aldehyde is not limited to any particular one, and examples thereof encompass formaldehyde, acetaldehyde, butylaldehyde, and acrolein, and mixtures thereof. Alternatively, substances which are sources of the above aldehydes or solutions of the above aldehydes can be used. The aldehyde is preferably formaldehyde because an operation for reacting the phenol and the aldehyde is easy.

The molar ratio (F/P) between the phenol (P) and the aldehyde (F) in a reaction between the phenol and the aldehyde (such a molar ratio may be hereinafter referred to as a "reaction molar ratio") is not limited to any particular one. In a case where an acid catalyst is used in the reaction, the reaction molar ratio (F/P) is preferably 0.4 to 1.0, more preferably 0.5 to 0.8. In a case where an alkali catalyst is used in the reaction, the reaction molar ratio (F/P) is preferably 0.4 to 4.0, more preferably 0.8 to 2.5. In a case where the reaction molar ratio is equal to or higher than the above lower limit, a yield is less likely to excessively decrease and the resulting phenolic resin is less likely to have a low molecular weight. On the contrary, in a case where the reaction molar ratio is equal to or lower than the above upper limit, the phenolic resin is less likely to have an excessively high molecular weight and an excessively high softening point, and it is therefore possible to achieve sufficient flowability during heating. Furthermore, in a case where the reaction molar ratio is equal to or lower than the above upper limit, the molecular weight is easily controlled, and gelation may be less likely to occur or a partially gelatinized product may be less likely to be formed, each of which results from the conditions under which the reaction takes place.

(Polyol resins)

The polyol resins are each a compound containing two or more active hydrogens as its terminal group(s), and are each bi- or more functional polyol with a molecular weight of about 50 to 20,000. Examples of the polyol resins encompass aliphatic alcohols, aromatic alcohols, polyether type polyols, polyester type polyols, polyolefin polyols, and acrylic polyols.

The aliphatic alcohols may be dihydric alcohols or trihydric or higher polyhydric alcohols (such as trihydric alcohols or tetrahydric alcohols). Examples of the dihydric alcohols encompass: alkylene glycols (in particular, alkylene glycols having about 1 to 6 carbon atoms) such as ethylene glycol, propylene glycol, 1,3-propanediol, 1,3-butanediol, 1,4-butanediol, 1,5-pentanediol, 1,6-hexanediol, 3-methyl-1,5-pentanediol, and neopentylglycol; and substances obtained through dehydrogenative condensation of two or more molecules (e.g., about two to six molecules) of any of the above alkylene glycols (such as diethylene glycol, dipropylene glycol, and tripropylene glycol). Examples of the trihydric alcohols encompass glycerin, trimethylolpropane, trimethylolethane, and 1,2,6-hexanetriol (in particular, trihydric alcohols having about 3 to 10 carbon atoms). Examples of the tetrahydric alcohols encompass pentaerythritol and diglycerin. Other examples encompass saccharides such as monosaccharides, oligosaccharides, and polysaccharides.

Examples of the aromatic alcohols encompass: bisphenols such as bisphenol A and bisphenol F; biphenyls such as dihydroxybiphenyl; polyhydric phenols such as hydroquinone and phenol-formaldehyde condensate; and naphthalenediol.

Examples of the polyether type polyols encompass: random copolymers and block copolymers obtained by ring-opening polymerization of ethylene oxide, propylene oxide, butylene oxide, styrene oxide, or the like in the presence of one or more active-hydrogen-containing initiators; and mixtures of these copolymers. Examples of the active-hydrogen-containing initiators used for the ring-opening polymerization to obtain the polyether type polyols encompass diols such as ethylene glycol, diethylene glycol, propylene glycol, dipropylene glycol, 1,3-butanediol, 1,4-butanediol, 1,6-hexanediol, neopentylglycol, and bisphenol A; triols such as trimethylolethane, trimethylolpropane, and glycerin; saccharides such as monosaccharides, oligosaccharides, and polysaccharides; sorbitol; and amines such as ammonia, ethylenediamine, urea, monomethyl diethanolamine, and monoethyl diethanolamine.

Examples of the polyester type polyols encompass polymers obtained by, in the presence of an esterification catalyst at a temperature falling within the range of 150°C to 270°C, polycondensation of, for example, (a) a polybasic acid, such as maleic acid, fumaric acid, adipic acid, sebacic acid, phthalic acid, dodecanedioic acid, isophthalic acid, or azelaic acid, and/or an acid anhydride thereof and (b) a polyhydric alcohol such as ethylene glycol, propylene glycol, 1,4-butanediol, 1,6-hexanediol, diethylene glycol, dipropylene glycol, neopentylglycol, or 3-methyl-1,5-pentanediol. Examples of the polyester type polyols further encompass (a) polymers obtained by ring-opening polymerization of ε-caprolactone, valerolactone, or the like; and (b) active hydrogen compounds containing two or more active hydrogens, such as polycarbonate diol and castor oil.

Examples of the polyolefin type polyols encompass polybutadiene polyol, polyisoprene polyol, and hydrogenated versions thereof.

Examples of the acrylic polyols encompass: copolymers of, for example, (a) a hydroxyl group-containing monomer such as hydroxyethyl (meth)acrylate, hydroxybutyl (meth)acrylate, or vinylphenol and (b) a general-purpose monomer such as n-butyl (meth)acrylate or 2-ethylhexyl (meth)acrylate; and mixtures thereof.

Out of these polyol resins, the polyether type polyols are preferred, because the resin composition to be obtained has a lower viscosity and has excellent workability, and the resin composition can provide a cured product which is well balanced between its hardness and toughness. Further, out of these polyol resins, the polyester type polyols are preferred, because the resin composition to be obtained can provide a cured product which has excellent adhesiveness.

(Amino-formaldehyde resins)

The amino-formaldehyde resins are not limited to any particular ones, provided that the amino-formaldehyde resins are each a compound obtained through a reaction between an amino compound and an aldehyde in the presence of an alkaline catalyst. Examples of the amino compound encompass: melamine; 6-substituted guanamines such as guanamine, acetoguanamine, and benzoguanamine; amine-substituted triazine compounds such as CTU guanamine (3,9-bis[2-(3,5-diamino-2,4,6-triazaphenyl)ethyl]-2,4,8,10-tetraoxaspiro [5,5] undecane) and CMTU guanamine (3,9-bis[(3,5-diamino-2,4,6-triazaphenyl) methyl]-2,4,8, 10-tetraoxaspiro[5,5]undecane); and ureas such as urea, thiourea, and ethyleneurea. Examples of the amino compound also encompass: (a) substituted melamine compounds which are different from melamine in that the hydrogen of an amino group is substituted by an alkyl group, an alkenyl group, and/or a phenyl group (described in Specification of United States Patent No. 5,998,573 (a Japanese family member thereof: Japanese Patent Application Publication Tokukaihei No. 9-143238)); and (b) substituted melamine compounds which are different from melamine in that the hydrogen of an amino group is substituted by a hydroxyalkyl group, a hydroxyalkyloxyalkyl group, and/or an aminoalkyl group (described in Specification of United States Patent No. 5,322,915 (a Japanese family member thereof: Japanese Patent Application Publication Tokukaihei No. 5-202157)). Out of the above-listed compounds, melamine, guanamine, acetoguanamine and benzoguanamine, which are polyfunctional amino compounds, are preferable, and melamine is particularly preferable, as the amino compound, because they are industrially produced and inexpensive. The above-listed amino compounds may be used alone or in combination of two or more. In addition to these amino compounds, any of (a) phenols, such as phenol, cresol, alkylphenol, resorcin, hydroquinone, and/or pyrogallol, (b) anilines, and the like may be used.

Examples of the aldehyde encompass formaldehyde, paraformaldehyde, acetaldehyde, benzaldehyde, and furfural. Preferred aldehydes are formaldehyde and paraformaldehyde, because they are inexpensive and well react with the foregoing amino compound. In producing an amino-formaldehyde resin, it is preferable to use the aldehyde in the following amount: the amount of an effective aldehyde group in the aldehyde compound is preferably 1.1 mol to 6.0 mol, particularly preferably 1.2 mol to 4.0 mol, per mole of the amino compound.

(Physical properties of matrix resin)

The matrix resin is not particularly limited in terms of the properties thereof. The matrix resin preferably has a viscosity of 100 mPa·s to 1,000,000 mPa·s at 25°C. The viscosity of the matrix resin is more preferably not more than 50,000 mPa·s, even more preferably not more than 30,000 mPa·s, and particularly preferably not more than 15,000 mPa·s, at 25°C. According to the above feature, the matrix resin has an advantage of having excellent flowability. It can also be said that the matrix resin having a viscosity of 100 mPa·s to 1,000,000 mPa·s at 25°C is a liquid.

As the flowability of the matrix resin becomes greater, in other words, as the viscosity of the matrix resin becomes lower, it becomes more difficult to disperse, in the matrix resin, the fine polymer particles (A) in the form of primary particles. Conventionally, it has been extremely difficult to disperse, in the matrix resin (e.g. thermosetting resin) having a viscosity of not more than 1,000,000 mPa·s at 25°C, the fine polymer particles (A) in the form of the primary particles. However, the resin composition in accordance with an embodiment of the present invention has an advantage that the fine polymer particles (A) having the above feature are well dispersed in the matrix resin having a viscosity of not more than 1,000,000 mPa·s at 25°C.

Further, the viscosity of the matrix resin is more preferably not less than 100 mPa·s, even more preferably not less than 500 mPa·s, still more preferably not less than 1000 mPa·s, and particularly preferably not less than 1500 mPa·s at 25°C, because such a viscosity allows the matrix resin to get between the fine polymer particles (A) and thereby allows prevention of fusion between the fine polymer particles (A).

The matrix resin may have a viscosity of more than 1,000,000 mPa·s. The matrix resin may be a semisolid (semiliquid) or may be alternatively a solid. In a case where the matrix resin (C) has a viscosity of more than 1,000,000 mPa·s, the resultant resin composition has advantages that the resin composition is less sticky and easy to handle.

The matrix resin has an endothermic peak at preferably not higher than 25°C, more preferably not higher than 0°C, in its differential scanning calorimetry (DSC) thermogram. According to the above feature, the matrix resin has an advantage of having excellent flowability.

(6-2. Blending ratio between the present resin composition and matrix resins, etc.)

The blending ratio between the present resin composition and the matrix resin is as follows. Where 100% by weight represents the total amount of the present resin composition and the matrix resin, it is usually preferable that the amount of the present resin composition be 0.5% by weight to 50% by weight and the amount of the matrix resin be 50% by weight to 99.5% by weight, it is more preferable that the amount of the present resin composition be 1% by weight to 35% by weight and the amount of the matrix resin be 65% by weight to 99% by weight, it is particularly preferable that the amount of the present resin composition be 1.5% by weight to 25% by weight and the amount of the matrix resin be 75% by weight to 98.5% by weight, and it is most preferable that the amount of the present resin composition be 2.5% by weight to 20% by weight and the amount of the matrix resin be 80% by weight to 97.5% by weight.

In a case where the matrix resin is the thermosetting resin, the state of the matrix resin is not limited to any particular one, provided that the matrix resin is flowable when mixed with the present resin composition. The matrix resin may be a solid at a room temperature. In terms of achieving workability, the matrix resin is preferably a liquid at room temperature.

The temperature at which the present resin composition is mixed with such a matrix resin is generally the temperature at which the matrix resin can flow. However, in a case where the resin (B) can flow at the temperature at which the matrix resin can flow, it is easy to uniformly mix the resin (B) and the matrix resin. On the contrary, in a case where the matrix resin is a liquid and an epoxy resin contained in the present resin composition to be added to the matrix resin is a solid, it is difficult to uniformly mix the matrix resin and the present resin composition. Note that, in the present specification, in a case where the matrix resin is a liquid at 25°C, it is understood that "the viscosity of the matrix resin at 25°C is equal to or higher than the viscosity of the resin (B) at 25°C".

(6-3. Other components)

In terms of achieving an anti-blocking property and improving the dispersibility in the matrix resin, a mixture of the present resin composition and the matrix resin preferably further contains an anti-blocking agent. The anti-blocking agent is not limited to any particular one, provided that the anti-blocking agent brings about the foregoing effects. Examples of the anti-blocking agent encompass: anti-blocking agents composed of inorganic fine particles, such as fine particles of silicon dioxide, titanium oxide, aluminum oxide, zirconium oxide, aluminum silicate, diatomaceous earth, zeolite, kaolin, talc, calcium carbonate, calcium phosphate, barium sulfate, or magnesium hydrosilicate; anti-blocking agents composed of organic fine particles; and fat-based and/or oil-based anti-blocking agents such as polyethylene wax, higher fatty acid amides, metal soap, and silicone oil. Out of these anti-blocking agents, anti-blocking agents composed of fine particles are preferable, anti-blocking agents composed of organic fine particles are more preferable, and anti-blocking agents composed of organic fine particles of a polymer containing at least one type of monomer unit selected from aromatic vinyl monomers, vinyl cyanide monomers, and (meth)acrylate monomers are particularly preferable.

An anti-blocking agent composed of fine particles, in general, is in the form of a dispersion composed of the fine particles and a medium in which the particles are dispersed or is in the form of a colloid. The fine particles in the anti-blocking agent have a volume-average particle size (Mv) of usually not more than 10 μm, preferably 0.05 μm to 10 μm. The amount of the anti-blocking agent contained is preferably 0.01% by weight to 5.0% by weight, more preferably 0.5% by weight to 3.0% by weight, with respect to the total weight of the present resin composition and the matrix resin.

The mixture of the present resin composition and the matrix resin may contain, as necessary, any other component which is different from the above-described components. Examples of the any other component encompass: curing agents; coloring agents such as pigments and colorants; extenders; ultraviolet ray absorbing agents; antioxidants; heat stabilizers (antigelling agents); plasticizing agents; leveling agents; defoaming agents; silane coupling agents; antistatic agents; flame retardants; lubricants; viscosity reducers; shrinkage reducing agents; inorganic filler; organic filler; thermoplastic resins; desiccants; and dispersion agents.

The anti-blocking agent and one or more additives (any other component) can be added, as appropriate, during any step of a method of producing the present resin composition. For example, the anti-blocking agent and one or more additives can be added to an aqueous suspension before or after flocculation of the fine polymer particles (A). Alternatively, the anti-blocking agent and one or more additives can be added to the present resin composition or the mixture of the present resin composition and the matrix resin.

The mixture of the present resin composition and the matrix resin may further contain a known thermosetting resin other than the matrix resin, and may further contain a known thermoplastic resin.

[7. Cured product]

A cured product in accordance with an embodiment of the present invention is obtained by curing the resin composition described in the section [5. Resin composition] or [6. Resin composition (mixture of present resin composition and matrix resin)]. In the present specification, the "cured product in accordance with an embodiment of the present invention" may also simply be referred to as a "present cured product".

The present cured product has the above-described feature. Therefore, even in a case where the resin composition is applied to a metal plate or the like and is then cured, rust is less likely to form. Moreover, the cured product has (a) an excellent surface appearance, (b) high rigidity and a high elastic modulus, and (c) excellent toughness and excellent adhesiveness.

[8. Other Uses]

The above-describe resin composition and the above-described mixture of the present resin composition and the matrix resin (hereinafter simply referred to as the present resin composition etc.) can be used in various applications, and the applications are not limited to any particular ones. The present resin composition etc. are each preferably used in applications such as, for example, adhesive agents, coating materials, binders for reinforcement fibers, composite materials, molding materials for 3D printers, sealants, electronic substrates, ink binders, wood chip binders, binders for rubber chips, foam chip binders, binders for castings, rock mass consolidation materials for floor materials and ceramics, and urethane foams. Examples of the urethane foams encompass automotive seats, automotive interior parts, sound absorbing materials, damping materials, shock absorbers (shock absorbing materials), heat insulating materials, and floor material cushions for construction.

The present resin composition etc. are more preferably used for, out of the above applications, adhesive agents, coating materials, binders for reinforcement fibers, composite materials, molding materials for 3D printers, sealants, and electronic substrates.

[Summary]

An embodiment of the present invention includes the following features.

< 1 > A latex comprising fine polymer particles (A) and a resin (B), in which:

the fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers;
the resin (B) is, at 25°C, a liquid which has a viscosity of 100 mPa·s to 1,000,000 mPa·s, a semisolid, or a solid;

surfaces of the fine polymer particles (A) are covered with the resin (B);
the fine polymer particles (A) covered with the resin (B) have a volume-average particle size of 1.030 X$\mu$m to 4.000 X$\mu$m,
where X is a volume-average particle size of the fine polymer particles (A) before the fine polymer particles (A) are covered with the resin (B); and
the fine polymer particles (A) are contained in an amount of 50% by weight to 99% by weight and the resin (B) is contained in an amount of 1% by weight to 50% by weight, where 100% by weight represents a total amount of the fine polymer particles (A) and the resin (B).

<2> The latex described in < 1>, in which a solution V has a permeability of not less than 30% at 546 nm, where the solution V is obtained by the following operations:

(1) a coagulant is added to the latex to obtain a mixture, and the mixture is mixed for 2 minutes to 60 minutes;
(2) the mixture is separated into the coagulate and a water component; and
(3) 1 g of the coagulate is added to 30 g of ion exchanged water to obtain a mixture, and the mixture is shaken for 10 minutes,

wherein an amount of the coagulant added in (1) is sufficient for a permeability, at 546 nm, of the water component obtained in (2) to be not less than 30%.

<3> A method of producing the latex described in <1>, including: a resin mixing step of mixing the resin (B) with a latex precursor containing the fine polymer particles (A); and a shearing step of applying shearing stress to a mixture obtained in the resin mixing step.

<4> The method described in <3>, further including: a separating step of separating a mixture obtained in the shearing step into a coagulate and the latex, in which

the shearing step includes a step of applying the shearing stress to the mixture obtained in the resin mixing step such that the following (Formula 1) is satisfied:

$$Y \leq 32 \ \dots \ (\text{Formula 1})$$

where Y is obtained by the following (Formula 2):

$$Y = [\{\text{total amount of fine polymer particles (A) and resin (B) contained in latex}\} / \{\text{weight of latex}\}] \times 100 \ \dots \ (\text{Formula 2}).$$

<5> The method described in <3> or <4>, in which the resin mixing step includes a step of mixing 1% by weight to 70% by weight of the fine polymer particles (A) and 30% by weight to 99% by weight of the resin (B), where 100% by weight represents a total amount of the fine polymer particles (A) and the resin (B).

<6> The method described in any one of <3> to <5>, in which a mixture obtained in the shearing step has a temperature of not higher than 70°C.

<7> A method of producing a resin composition, comprising:

a resin mixing step of mixing a resin (B) with a latex precursor containing fine polymer particles (A);
a shearing step of applying shearing stress to a mixture obtained in the resin mixing step;
a coagulant adding step of adding a coagulant to a mixture obtained in the shearing step; and
a mixing step of mixing a mixture obtained in the coagulant adding step, in which
the mixing step includes a step of mixing the mixture obtained in the coagulant adding step such that a coagulate, which is obtained by separating the mixture obtained in the mixing step into the coagulate and a water component, contains not less than 20% by weight of the fine polymer particles (A) with respect to 100% by weight of the coagulate,
the fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers;
the resin (B) is, at 25°C, a liquid which has a viscosity of 100 mPa·s to 1,000,000 mPa·s, a semisolid, or a solid; and
the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B).

<8> The method described in <7>, in which the mixing step includes a step of mixing the mixture obtained in the coagulant adding step such that the coagulate, which is obtained by separating the mixture obtained in the mixing step into the coagulate and the water component, has a water content of not more than 45% by weight, with respect to 100% by weight of the coagulate.

<9> The method described in <7> or <8>, in which the mixing step includes a step of mixing the mixture obtained in the coagulant adding step such that [beating number] represented by the following (Formula 3) is not less than 5000 times:

$$[\text{Beating number}] = (\text{number of times rotor pins and stator pins interlace per rotation [times/rev]}) \times (\text{rotation speed [rev/minute]}) \times (\text{retention time [minute]}) \ldots (\text{Formula 3})$$

<10> The method described in any one of <7> to <9>, further including:

a separating step of separating the mixture obtained in the mixing step into the coagulate and the water component; and
a rinsing step of rinsing the coagulate obtained in the separating step, in which
the rinsing step includes a step of mixing a mixture of the coagulate and rinse water such that, in a post-rinsing coagulate obtained by separating a mixture obtained in the rinsing step into the post-rinsing coagulate and a post-rinsing water component, amounts of sulfur (S) and phosphorus (P) which are derived from the coagulant and an emulsifying agent are not more than 5000 ppm with respect to a weight of the post-rinsing coagulate.

<11> A method of producing a resin composition, including:

a resin mixing step of mixing a resin (B) with a latex precursor containing fine polymer particles (A);
a shearing step of applying shearing stress to a mixture obtained in the resin mixing step;
a coagulate collecting step of collecting a coagulate obtained in the shearing step; and
a rinsing step of rinsing the coagulate obtained in the coagulate collecting step, in which
the rinsing step includes a step of mixing a mixture of the coagulate and rinse water such that, in a post-rinsing coagulate obtained by separating a mixture obtained in the rinsing step into the post-rinsing coagulate and a post-rinsing water component, an amount of sulfur (S) and phosphorus (P) derived from an emulsifying agent are not more than 2000 ppm with respect to a weight of the post-rinsing coagulate,
the fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers;
the resin (B) is, at 25°C, a liquid which has a viscosity of 100 mPa·s to 1,000,000 mPa·s, a semisolid, or a solid, and
the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B).

<12> The method described in <10> or <11>, in which the rinsing step includes a step of mixing the mixture of the coagulate and the rinse water such that [beating number] represented by the following (Formula 3) is not less than 25000 times:

$$[\text{Beating number}] = (\text{number of times rotor pins and stator pins interlace per rotation [times/rev]}) \times (\text{rotation speed [rev/minute]}) \times (\text{retention time [minute]}) \dots (\text{Formula 3})$$

<13> The method described in any one of <10> to <12>, in which the rinsing step includes a step of mixing the mixture of the coagulate and the rinse water for not less than 2 seconds.

<14> A resin composition including:

fine polymer particles (A) which have a graft part that is constituted by a polymer that contains, as one or more structural units, one or more structural units derived from at least one type of monomer selected from the group consisting of aromatic vinyl monomers, vinyl cyanide monomers, and (meth)acrylate monomers; and

a resin (B) which is, at 25°C, a liquid that has a viscosity of 100 mPa·s to 1,000,000 mPa·s, a semisolid, or a solid, in which

the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B),

the resin composition substantially does not contain an organic solvent,

the resin composition contains sulfur (S) in an amount of not more than 2000 ppm,

dispersibility of the fine polymer particles (A) in a resin composition W is not more than 0 $\mu$m, when evaluated in accordance with JIS K5101 with use of a grind gauge,

wherein

the resin composition W is prepared such that the fine polymer particles (A) are contained in an amount of 5% by weight and the resin (B) is contained in an amount of 95% by weight, where 100% by weight represents a total amount of the fine polymer particles (A) and the resin (B), and

a standard deviation of a particle size distribution of the fine polymer particles (A) in a solution Z is not more than 0.2500,

wherein

the solution Z is prepared by mixing a mixture of 1 part by weight of the resin composition W and 1000 parts by weight of the organic solvent with use of Shaker SA31 (Yamato Scientific Co., Ltd.) at a speed of 10 for 30 minutes, and

the particle size distribution is measured with use of ZETASIZER NANO ZSP (manufactured by Malvern Panalytical Ltd.) and is indicated by a scattering intensity.

Examples

The following description will discuss an embodiment of the present invention in more detail with reference to Examples and Comparative Examples. Note that the present invention is not limited to these examples. Note that the present invention is not limited to these examples. An embodiment of the present invention can be altered as appropriate within the scope of the gist disclosed herein. The present invention also includes, in its technical scope, embodiments achieved by altering the embodiment.

[Evaluation Methods]

First, the following description will discuss methods of evaluating the resin compositions produced in the Examples and Comparative Examples.

<Measurement of volume-average particle size>

Each of the following (a) to (c) were measured with use of Nanotrac WaveII-EX150 (manufactured by MicrotracBEL Corp.): (a) the volume-average particle size (Mv) of an elastic body dispersed in an aqueous suspension; (b) the volume-average particle size (Mv) of fine polymer particles (A) dispersed in a latex precursor; and (c) the average particle diameter (Mv) of fine polymer particles (A) covered with a resin (B) in a latex. A test specimen used for measurement was prepared by diluting the aqueous suspension, the latex precursor, or the latex in deionized water. When the measurement was made, the refractive index of water and the refractive index of the elastic body or the fine polymer particles (A) obtained in each of Production Examples were inputted, measurement time was set to 120 seconds, and the concentration of the test specimen was adjusted such that a load index fell within the range of 1 to 20.

<Measurement of viscosity>

The viscosity of the liquid epoxy resin (JER828, manufactured by Mitsubishi Chemical Corporation), which was the resin (B) used in each of Examples and Comparative Examples below, or the viscosity of a resin composition obtained in each of Examples and Comparative Examples below was measured. A device used was a digital viscometer DV-II+Pro manufactured by BROOKFIELD FIELD. Further, a spindle CPE-52 was used for some viscosity ranges. The viscosity was measured at a temperature of 25°C, while a shear rate was changed as necessary. As a result, the viscosity of the liquid epoxy resin, which was the resin (B), was 12,000 mPa·s.

1. Formation of elastic body by polymerization

Production Example 1-1: Preparation of aqueous suspension (R-1) that contains elastic body containing polybutadiene rubber as main component

Into a pressure-resistant polymerization apparatus were introduced 200 parts by weight of deionized water, 0.03 parts by weight of tripotassium phosphate, 0.002 parts by weight of disodium ethylenediaminetetraacetate (EDTA), 0.001 parts by weight of ferrous sulfate heptahydrate, and 1.55 parts by weight of sodium dodecylbenzenesulfonate (SDBS) as an emulsifying agent. Next, while the materials thus introduced were stirred, gas in the pressure-resistant polymerization apparatus was replaced with nitrogen, so as to sufficiently remove oxygen from the inside of the pressure-resistant polymerization apparatus. After that, 100 parts by weight of butadiene (Bd) was introduced into the pressure-resistant polymerization apparatus, and the temperature inside the pressure-resistant polymerization apparatus was raised to 45°C. After that, 0.03 parts by weight of paramenthane hydroperoxide (PHP) was introduced into the pressure-resistant polymerization apparatus, and then 0.10 parts by weight of sodium formaldehyde sulfoxylate (SFS) was introduced into the pressure-resistant polymerization apparatus. Polymerization was then started. Polymerization was then started. At the time 15 hours had elapsed from the start of the polymerization, residual monomers not used in the polymerization were removed by devolatilization under reduced pressure, and thereby the polymerization was ended. During the polymerization, PHP, EDTA, and ferrous sulfate heptahydrate were each added to the pressure-resistant polymerization apparatus in discretionarily selected amounts and discretionarily selected points in time. By the polymerization, an aqueous suspension (R-1), which contained an elastic body containing polybutadiene rubber as a main component, was obtained. The volume-average particle size of the elastic body contained in the obtained aqueous suspension (R-1) was 90 nm.

Production Example 1-2: Preparation of aqueous suspension (R-2) that contains elastic body containing polybutadiene rubber as main component

Into a pressure-resistant polymerization apparatus were introduced 7 parts by weight of a solid content of the aqueous suspension (R-1) obtained in Production Example 1-1, 200 parts by weight of deionized water, 0.03 parts by weight of tripotassium phosphate, 0.002 parts by weight of EDTA, and 0.001 parts by weight of ferrous sulfate heptahydrate. Next, while the materials thus introduced were stirred, gas in the pressure-resistant polymerization apparatus was replaced with nitrogen, so as to sufficiently remove oxygen from the inside of the pressure-resistant polymerization apparatus. After that, 93 parts by weight of Bd was introduced into the pressure-resistant polymerization apparatus, and the temperature inside the pressure-resistant polymerization apparatus was raised to 45°C. After that, 0.02 parts by weight of PHP was introduced into the pressure-resistant polymerization apparatus, and then 0.10 parts by weight of SFS was introduced into the pressure-resistant polymerization apparatus. Polymerization was then started. At the time 30 hours had elapsed from the start of the polymerization, residual monomers not used in the polymerization were removed by devolatilization under reduced pressure, and thereby the polymerization was ended. During the polymerization, PHP, EDTA, ferrous sulfate heptahydrate, and SDBS were each added to the pressure-resistant polymerization apparatus in discretionarily selected amounts and discretionarily selected points in time. By the polymerization, an aqueous suspension (R-2), which contained an elastic body containing polybutadiene rubber as a main component, was obtained. The volume-average particle size of the elastic body contained in the obtained aqueous suspension (R-2) was 195 nm.

2. Preparation of fine polymer particles (A) (formation of graft part by polymerization)

Production Example 2-1: Preparation of latex precursor (L-1) containing fine polymer particles

Into a glass reaction vessel were introduced 250 parts by weight of the aqueous suspension (R-2) (including 87 parts by weight of the elastic body containing polybutadiene rubber as a main component) and 50 parts by weight of deionized water. The glass reaction vessel had a thermometer, a stirrer, a reflux condenser, a nitrogen inlet, and a monomer adding device. Gas in the glass reaction vessel was replaced with nitrogen, and the materials thus introduced were stirred at 60°C. Next, 0.004 parts by weight of EDTA, 0.001 parts by weight of ferrous sulfate heptahydrate, and 0.20 parts by weight of SFS were added to the glass reaction vessel, and a resulting mixture was stirred for 10 minutes. Thereafter, a mixture of 12.5 parts by weight of methyl methacrylate (MMA), 0.5 parts by weight of styrene (St), and 0.035 parts by weight of t-butyl hydroperoxide (BHP) was added continuously to the glass reaction vessel over 80 minutes. Then, 0.013 parts by weight of BHP was added to the glass reaction vessel, and the resultant mixture in the glass reaction vessel was stirred for another hour so as to finish polymerization. Through the above operations was obtained a latex precursor (L-1) containing fine polymer particles (A) and an emulsifying agent. Not less than 99% by weight of the monomer component had been polymerized. The volume-average particle size of the fine polymer particles (A) contained in the obtained latex precursor (L-1) was 200 nm. The solid concentration (concentration of the fine polymer particles (A)) in the obtained latex precursor (L-1) was 30% with respect to 100% by weight of the latex precursor.

(Example 1)

100 kg of a latex precursor (L-1) was mixed with 45 kg of a liquid epoxy resin (JER828, manufactured by Mitsubishi Chemical Corporation, viscosity of 12,000 mPa·s at 25°C) which was the resin (B), to obtain a mixture (resin mixing step). Next, a shearing stress was applied to the obtained mixture (145 kg) to obtain a mixture of a coagulate (resin composition (A)) containing fine polymer particles (A) and the resin (B) and a water component (latex) in which the fine polymer particles (A) whose surfaces were covered with the resin (B) were dispersed (shearing step). In the shearing step, a high shearing emulsifier (colloid mill; clearance between the stirrer blade and the device wall surface was 840 μm) was used as the shearing device. The conditions for the mixing were such that the shearing device had a rotation speed of 3600 rev/min and the retention time of the mixture in the shearing device was 1.1 seconds. The temperature of the mixture obtained in the shearing step in Example 1 was 50°C.

The mixture obtained in the shearing step was separated into 68 kg of a coagulate and 77 kg of a latex (first separating step). The proportion of the fine polymer particles (A) and the resin (B) in the latex was 91% by weight of the fine polymer particles (A) and 9% by weight of the resin (B) with respect to 100% by weight of the total of amount of the fine polymer particles (A) and the resin (B) in the latex. The solid concentration (i.e., Y value obtained by (Formula 2)) in 100% by weight of the latex was 29% by weight. Note that, in the present specification, the solid concentration of the latex or the water component was measured by drying the latex or the water component at 120°C in an oven for 60 minutes.

The volume-average particle size of the fine polymer particles (A) (covered particles) covered with the resin (B), which were dispersed in the latex, was measured, and was found to be 210 nm, which was 1.050 times the volume-average particle size of the fine polymer particles (A) contained in the latex precursor (L-1).

20 parts by weight of a 15% aqueous sodium sulfate solution was added as a coagulant to 100 parts by weight of the latex obtained in Example 1, and the resulting mixture was stirred with use of a spatula in a beaker for 2 minutes. The resulting mixture was then separated into a coagulate (resin composition (B)) and a water component. The permeability of the obtained water component at 546 nm was measured with an ultraviolet-visible spectrophotometer, and was found to be not less than 30%.

1 g of the coagulate (resin composition (B)) obtained by the above separation was put in 30 g of ion exchanged water, and shaken at a speed of 10 for 10 minutes with use of Shaker SSA31 (manufactured by Yamato Scientific Co., Ltd.) to obtain a solution V. The obtained solution V was measured with the ultraviolet-visible spectrophotometer to measure a permeability at the wavelength of 546 nm, which was found to be 93%. In the measurement of the permeability of the water component and the solution V, ion exchanged water was used as a control with the permeability of 100%. Table 1 summarizes the results.

Furthermore, 1 g of the coagulate (resin composition (B)) obtained by the above separation was dried in a vacuum dryer at 50°C for 24 hours. The dried coagulate (resin composition (B)) was embedded in an epoxy resin to obtain a solid, and an ultrathin section of 100 nm in thickness was prepared with use of an ultramicrotome (UC6 manufactured by Leica) from the obtained solid. The prepared ultrathin section was stained with ruthenium tetroxide ($RuO_4$), and then observed with a transmission electron microscopy (TEM, H-7650, manufactured by Hitachi High Tech Co., Ltd.) at an acceleration voltage of 100 kV and a magnification of 200,000 times. The elastic body of the fine polymer particles (A) and the resin (B) were stained with $RuO_4$ and so were shown in black in TEM photographs. In contrast, the graft part of the fine polymer particles (A) was not stained with $RuO_4$ and so was shown in white in TEM photographs.

As a result of the observation, it was confirmed that the resin (B) (black) was present between the graft part (white) of the fine polymer particles (A) and the graft part (white) of the adjacent fine polymer particles (A). From the above result, it can be confirmed that, in the latex obtained in Example 1, the fine polymer particles (A) were present in the form of covered particles covered with the resin (B).

(Example 2)

The resin mixing step and the shearing step were carried out in the same manner as in Example 1, except that the amount of the liquid epoxy resin used, which was the resin (B), was changed to 30 kg and the retention time of the obtained mixture (130 kg) in the shearing device was changed to 1.3 seconds, to obtain a mixture of a coagulate (resin composition (A)) and a water component (latex). The temperature of the mixture obtained in the shearing step in Example 2 was 50°C.

The mixture obtained in the shearing step was separated into 52 kg of a coagulate and 78 kg of a latex (first separating step). The proportion of the fine polymer particles (A) and the resin (B) in the latex was 87% by weight of the fine polymer particles (A) and 13% by weight of the resin (B) with respect to 100% by weight of the total amount of the fine polymer particles (A) and the resin (B) in the latex. The solid concentration (i.e., Y value obtained by (Formula 2)) in 100% by weight of the latex was 29% by weight.

The volume-average particle size of the covered particles dispersed in the latex was measured and was found to be 210 nm, which was 1.050 times the volume-average particle size of the fine polymer particles (A) contained in the latex precursor (L-1).

20 parts by weight of a 15% aqueous sodium sulfate solution was added as a coagulant to 100 parts by weight of the latex obtained in Example 2, and the resulting mixture was stirred with use of a spatula in a beaker for 2 minutes. The resulting mixture was then separated into a coagulate (resin composition (B)) and a water component. The permeability of the obtained water component at 546 nm was measured with an ultraviolet-visible spectrophotometer, and was found to be not less than 30%.

Next, the solution V was prepared with use of 1 g of the coagulate (resin composition (B)) obtained by the above separation in the same manner as in Example 1, and the permeability of the obtained solution V at the wavelength of 546 nm was measured with an ultraviolet-visible spectrophotometer, which was found to be 90%. Table 1 summarizes the results.

(Comparative Example 1)

The resin mixing step and the shearing step were carried out in the same manner as in Example 1, except that the amount of the liquid epoxy resin used, which was the resin (B), was changed to 0 kg and the retention time of the mixture in the shearing device was changed to 1.7 seconds. That is, when a shearing stress was applied to 100 kg of the latex precursor (L-1) in the same manner as in Example 1, no coagulate was obtained and the latex precursor remained. The temperature of the mixture obtained in the shearing step in Comparative Example 1 was 50°C.

20 parts by weight of a 15% aqueous sodium sulfate solution was added as a coagulant to 100 parts by weight of the latex precursor after the shearing step, and the resulting mixture was stirred with use of a spatula in a beaker for 2 minutes. The resulting mixture was then separated into a coagulate (resin composition (B)) and a water component. The permeability of the obtained water component at 546 nm was measured with an ultraviolet-visible spectrophotometer, and was found to be not less than 30%.

Next, the solution V was prepared in the same manner as in Example 1 with use of 1 g of the coagulate (resin composition (B)) obtained by the above separation. The obtained solution V was measured with the ultraviolet-visible spectrophotometer to measure a permeability at the wavelength of 546 nm, which was found to be 0%. Table 1 summarizes the results.

Furthermore, an ultrathin section of 100 nm in thickness was produced in the same manner as in Example 1 with use of 1 g of the coagulate (resin composition (B)) obtained by the above separation. As a result of observing the produced ultrathin section with use of TEM in the same manner as in Example 1, the graft part (white) of the fine polymer particles (A) and the graft part (white) of the adjacent fine polymer particles (A) were observed in close contact with each other as a single line, and no boundary therebetween could be observed.

[Table 1]

| | Ratio (% by weight) between fine polymer particles (A) and resin (B) in mixture obtained by resin mixing step | | Volume-average particle size ratio (covered particles/ fine polymer particles (A)) | Ratio [% by weight] of content in latex | | Y value | Permeability [%] of solution X |
| --- | --- | --- | --- | --- | --- | --- | --- |
| | Fine polymer particles (A) | Resin (B) | | Fine polymer particles (A) | Resin (B) | | |
| Example 1 | 40 | 60 | 1.050 | 91 | 9 | 29 | 93 |
| Example 2 | 50 | 50 | 1.050 | 87 | 13 | 29 | 90 |
| Comparative Example 1 | 100 | 0 | - | - | - | - | 0 |

(Example 3)

50 kg of a latex precursor (L-1) was mixed with 22.5 kg of a liquid epoxy resin (JER828, manufactured by Mitsubishi Chemical Corporation), which was the resin (B), to obtain a mixture (resin mixing step). Next, a shearing stress was applied to the obtained mixture (72.5 kg) to obtain a mixture of a coagulate (resin composition (A)) containing the fine polymer particles (A) and the resin (B) and a water component (latex) in which the fine polymer particles (A) whose surfaces were covered with the resin (B) were dispersed (shearing step). In the shearing step, a high shearing emulsifier (clearance between the stirrer blade and the device wall surface was 840 $\mu$m) was used as the shearing device. The conditions for the mixing were such that the shearing device had a rotation speed of 3600 rev/min and the retention time of the mixture in the shearing device was 2.3 seconds. The temperature of the mixture obtained in the shearing step in Example 3 was 50°C.

(a) A part (20 to 50 g) of the mixture obtained in the shearing step was separated into a resin composition which was a coagulate containing the fine polymer particles (A) and the resin (B) and a latex, and (b) the total remaining amount (about 72.5 kg) was used to prepare a resin composition (C), which is described later. The proportion of the fine polymer particles (A) and the resin (B) in the latex obtained by the above separation was 80% by weight of the fine polymer particles (A) and 20% by weight of the resin (B) with respect to 100% by weight of the total amount of the fine polymer particles (A) and the resin (B) in the latex. The solid concentration (i.e., Y value obtained by (Formula 2)) in 100% by weight of the latex was 15% by weight.

The volume-average particle size of the covered particles dispersed in the latex obtained by the above separation was measured and was found to be 220 nm, which was 1.100 times the volume-average particle size of the fine polymer particles (A) contained in the latex precursor (L-1).

Furthermore, 20 parts by weight of a 15% aqueous sodium sulfate solution was added as a coagulant to 100 parts by weight of the latex obtained by the above separation, and the resulting mixture was stirred with use of a spatula in a beaker for 2 minutes. The resulting mixture was then separated into a coagulate (resin composition (B)) and a water component. The permeability of the obtained water component at 546 nm was measured with an ultraviolet-visible spectrophotometer, and was found to be not less than 30%.

Next, the solution V was prepared in the same manner as in Example 1 with use of 1 g of the coagulate (resin composition (B)) obtained by the above separation. The obtained solution V was measured with the ultraviolet-visible spectrophotometer to measure a permeability at the wavelength of 546 nm, which was found to be 91%.

To the total remaining amount (about 72.5 kg) of the mixture obtained in the shearing step, 10 kg of a 15% aqueous sodium sulfate solution was added as a coagulant, and a shearing stress was applied to the resulting mixture. Here, a high shearing emulsifier (clearance between the stirrer blade and the device wall surface was 840 $\mu$m) was used as the shearing device. The conditions for the mixing were such that the shearing device had a rotation speed of 3600 rev/min and the retention time of the mixture in the shearing device was 2.0 seconds. The resulting mixture was then separated into a coagulate (resin composition (C)) and a water component. The resulting resin composition (C) was observed, and a uniform appearance without lumps was found. Table 2 summarizes the results.

(Example 4)

The resin mixing step and the shearing step were carried out in the same manner as in Example 3, except that the amount of the latex precursor (L-1) used was changed to 100 kg and the retention time of the obtained mixture (122.5 kg) in the shearing device was changed to 1.1 seconds, to obtain a mixture of a coagulate (resin composition (A)) and a water component (latex). The temperature of the mixture obtained in the shearing step in Example 4 was 50°C.

(a) A part (20 to 50 g) of the mixture obtained in the shearing step was separated into a resin composition which was a coagulate containing the fine polymer particles (A) and the resin (B) and a latex, and (b) the total remaining amount (about 122.5 kg) was used to prepare the resin composition (C), which is described later. The proportion of the fine polymer particles (A) and the resin (B) in the latex obtained by the above separation was 88.5% by weight of the fine polymer particles (A) and 11.5% by weight of the resin (B) with respect to 100% by weight of the total amount of the fine polymer particles (A) and the resin (B) in the latex. The solid concentration (i.e., Y value obtained by (Formula 2)) in 100% by weight of the latex was 32% by weight.

The volume-average particle size of the covered particles dispersed in the latex obtained by the above separation was measured and was found to be 220 nm, which was 1.100 times the volume-average particle size of the fine polymer particles (A) contained in the latex precursor (L-1).

Furthermore, 20 parts by weight of a 15% aqueous sodium sulfate solution was added as a coagulant to 100 parts by weight of the latex obtained by the above separation, and the resulting mixture was stirred with use of a spatula in a beaker for 2 minutes. The resulting mixture was then separated into a coagulate (resin composition (B)) and a water component. The permeability of the obtained water component at 546 nm was measured with an ultraviolet-visible spectrophotometer, and was found to be not less than 30%.

Next, the solution V was prepared in the same manner as in Example 1 with use of 1 g of the coagulate (resin composition (B)) obtained by the above separation. The obtained solution V was measured with the ultraviolet-visible spectrophotometer to measure a permeability at the wavelength of 546 nm, which was found to be 93%.

To the total remaining amount (about 122.5 kg) of the mixture obtained in the shearing step, 30 kg of a 15% aqueous sodium sulfate solution was added as a coagulant, and a shearing stress was applied to the resulting mixture. Here, a high shearing emulsifier (clearance between the stirrer blade and the device wall surface was 840 μm) was used as the shearing device. The conditions for the mixing were such that the shearing device had a rotation speed of 3600 rev/min and the retention time of the mixture in the shearing device was 1.0 second. The resulting mixture was then separated into a coagulate (resin composition (C)) and a water component. The resulting resin composition (C) was observed, and a uniform appearance without lumps was found. Table 2 summarizes the results.

(Comparative Example 2)

The resin mixing step and the shearing step were carried out in the same manner as in Example 3, except that the amount of the latex precursor (L-1) used was changed to 1000 kg, the amount of the liquid epoxy resin used, which was the resin (B), was changed to 450 kg, and the retention time of the obtained mixture (1450 kg) in the shearing device was changed to 0.1 second, to obtain a mixture of a coagulate (resin composition (A)) and a water component (latex).

(a) A part (20 to 50 g) of the mixture obtained in the shearing step was separated into a resin composition which was a coagulate containing the fine polymer particles (A) and the resin (B) and a latex, and (b) the total remaining amount (about 1450 kg) was used to prepare the resin composition (C), which is described later. The proportion of the fine polymer particles (A) and the resin (B) in the latex obtained by the above separation was 86% by weight of the fine polymer particles (A) and 14% by weight of the resin (B) with respect to 100% by weight of the total amount of the fine polymer particles (A) and the resin (B) in the latex. The solid concentration (i.e., Y value obtained by (Formula 2)) in 100% by weight of the latex was 35% by weight.

The volume-average particle size of the covered particles dispersed in the latex obtained by the above separation was measured and was found to be 205 nm, which was 1.025 times the volume-average particle size of the fine polymer particles (A) contained in the latex precursor (L-1).

Furthermore, 20 parts by weight of a 15% aqueous sodium sulfate solution was added as a coagulant to 100 parts by weight of the latex obtained by the above separation, and the resulting mixture was stirred with use of a spatula in a beaker for 2 minutes. The resulting mixture was then separated into a coagulate (resin composition (B)) and a water component. The permeability of the obtained water component at 546 nm was measured with an ultraviolet-visible spectrophotometer, and was found to be not less than 30%.

Next, the solution V was prepared in the same manner as in Example 1 with use of 1 g of the coagulate (resin composition (B)) obtained by the above separation. The obtained solution V was measured with the ultraviolet-visible spectrophotometer to measure a permeability at the wavelength of 546 nm, which was found to be 20%.

To the total remaining amount (about 1450 kg) of the mixture obtained in the shearing step, 300 kg of a 15% aqueous sodium sulfate solution was added as a coagulant, and a shearing stress was applied to the resulting mixture. Here, a high shearing emulsifier (clearance between the stirrer blade and the device wall surface was 840 μm) was used as the shearing device. The conditions for the mixing were such that the shearing device had a rotation speed of 3600 rev/min and the retention time of the mixture in the shearing device was 0.1 second. The resulting mixture was then separated into a coagulate (resin composition (C)) and a water component. The resulting resin composition (C) was observed, and a non-uniform appearance with lumps was found. Table 2 summarizes the results.

(Comparative Example 3)

The resin mixing step and the shearing step were carried out in the same manner as in Example 3, except that, in the shearing step, the clearance between the stirrer blade and the device wall surface in the sharing device (high shearing emulsifier) was changed to 1200 $\mu$m, the rotation speed of the shearing device was changed to 1800rev/min, and the retention time of the mixture (72.5 kg) in the shearing device was changed to 1.1 seconds, to obtain a mixture of a coagulate (resin composition (A)) and a water component (latex).

(a) A part (20 to 50 g) of the mixture obtained in the shearing step was separated into a resin composition which was a coagulate containing the fine polymer particles (A) and the resin (B) and a latex, and (b) the total remaining amount (about 72.5 kg) was used to prepare a resin composition (C), which is described later. The proportion of the fine polymer particles (A) and the resin (B) in the latex obtained by the above separation was 76% by weight of the fine polymer particles (A) and 24% by weight of the resin (B) with respect to 100% by weight of the total amount of the fine polymer particles (A) and the resin (B) in the latex. The solid concentration (i.e., Y value obtained by (Formula 2)) in 100% by weight of the latex was 38% by weight.

The volume-average particle size of the covered particles dispersed in the latex obtained by the above separation was measured and was found to be 205 nm, which was 1.025 times the volume-average particle size of the fine polymer particles (A) contained in the latex precursor (L-1).

Furthermore, 20 parts by weight of a 15% aqueous sodium sulfate solution was added as a coagulant to 100 parts by weight of the latex obtained by the above separation, and the resulting mixture was stirred with use of a spatula in a beaker for 2 minutes. The resulting mixture was then separated into a coagulate (resin composition (B)) and a water component. The permeability of the obtained water component at 546 nm was measured with an ultraviolet-visible spectrophotometer, and was found to be not less than 30%.

Next, the solution V was prepared in the same manner as in Example 1 with use of 1 g of the coagulate (resin composition (B)) obtained by the above separation. The obtained solution V was measured with the ultraviolet-visible spectrophotometer to measure a permeability at the wavelength of 546 nm, which was found to be 15%.

To the total remaining amount (about 72.5 kg) of the mixture obtained in the shearing step, 30 kg of a 15% aqueous sodium sulfate solution was added as a coagulant, and a shearing stress was applied to the resulting mixture. Here, a high shearing emulsifier (clearance between the stirrer blade and the device wall surface was 840 $\mu$m) was used as the shearing device. The conditions for the mixing were such that the shearing device had a rotation speed of 3600 rev/min and the retention time of the mixture in the shearing device was 1.0 second. The resulting mixture was then separated into a coagulate (resin composition (C)) and a water component. The resulting resin composition (C) was observed, and a non-uniform appearance with lumps was found. Table 2 summarizes the results.

[Table 2]

| | Ratio (% by weight) between fine polymer particles (A) and resin (B) in mixture obtained by resin mixing step | | Volume-average particle size ratio (covered particles/ fine polymer particles (A)) | Ratio [% by weight] of content in latex | | Y value | Permeability [%] of solution 3: | Appearance of resin composition (C) |
|---|---|---|---|---|---|---|---|---|
| | Fine polymer particles (A) | Resin (B) | | Fine polymer particles (A) | Resin (B) | | | |
| Example 3 | 40 | 60 | 1.100 | 80 | 20 | 15 | 91 | Uniform |
| Example 4 | 57 | 43 | 1.100 | 88.5 | 115 | 32 | 93 | Uniform |
| Comparative Example 2 | 40 | 60 | 1.025 | 86 | 14 | 35 | 20 | Non-uniform |
| Comparative Example 3 | 40 | 60 | 1.025 | 76 | 24 | 38 | 15 | Non-uniform |

(Example 5)

10 kg of the latex precursor (L-1) was mixed with 4.5 kg of a liquid epoxy resin (JER828, manufactured by Mitsubishi Chemical Corporation) which was the resin (B), to obtain a mixture (resin mixing step). Next, a shearing stress was applied to the obtained mixture (14.5 kg) to obtain a mixture of a coagulate (resin composition (A)) containing the fine polymer particles (A) and the resin (B) and a water component (latex) in which the fine polymer particles (A) whose surfaces were covered with the resin (B) were dispersed (shearing step). In the shearing step, a high shearing emulsifier (clearance between the stirrer blade and the device wall surface was 840 μm) was used as the shearing device. The conditions for the mixing were such that the shearing device had a rotation speed of 3600 rev/min and the retention time of the mixture in the shearing device was 11.4 seconds. The temperature of the mixture obtained in the shearing step in Example 5 was 50°C.
(a) A part (20 to 50 g) of the mixture obtained in the shearing step was separated into a resin composition which was a coagulate containing the fine polymer particles (A) and the resin (B) and a latex, and (b) the total remaining amount (about 14.5 kg) was used in a coagulant adding step which is described later. The proportion of the fine polymer particles (A) and the resin (B) in the latex obtained by the above separation was 91% by weight of the fine polymer particles (A) and 9% by weight of the resin (B) with respect to 100% by weight of the total amount of the fine polymer particles (A) and the resin (B) in the latex. The solid concentration (i.e., Y value obtained by (Formula 2)) in 100% by weight of the latex was 17% by weight.
The volume-average particle size of the covered particles dispersed in the latex obtained by the above separation was measured and was found to be 240 nm, which was 1.200 times the volume-average particle size of the fine polymer particles (A) contained in the latex precursor (L-1).
Furthermore, 20 parts by weight of a 15% aqueous sodium sulfate solution was added as a coagulant to 100 parts by weight of the latex obtained by the above separation, and the resulting mixture was stirred with use of a spatula in a beaker for 2 minutes. The resulting mixture was then separated into a coagulate (resin composition) and a water component. The permeability of the obtained water component at 546 nm was measured with an ultraviolet-visible spectrophotometer, and was found to be not less than 30%. Next, the solution V was prepared in the same manner as in Example 1 with use of 1 g of the coagulate (resin composition) obtained by the above separation. The obtained solution V was measured with the ultraviolet-visible spectrophotometer to measure a permeability at the wavelength of 546 nm, which was found to be 93%.
To the total remaining amount (about 14.5 kg) of the mixture obtained in the shearing step, 2 kg of a 15% aqueous sodium sulfate solution was added as a coagulant to obtain a mixture (coagulant adding step). The obtained mixture was then mixed with use of a pin mixer as a mixing device (the number of interlacing rotor pins and stator pins per rotation was 1600 times/rev) at a rotation speed of 300 rev/min and with a retention time of the mixture in the mixing device being 12 seconds (mixing step). In the above mixing step, the beating number represented by (Formula 3) was 96000 times.
The mixture obtained in the mixing step was separated into a coagulate (resin composition (C)) and a water component (C) (second separating step). The solid concentration of the obtained water component (C) was 0.03% by weight. The amount of the fine polymer particles (A) contained in 100% by weight of the coagulate (resin composition (C)) was 29.6% by weight. On the other hand, the water content of the coagulate (resin composition (C)) was 26% by weight. In each of Examples and Comparative Examples, the water content of the coagulate (resin composition) was measured with use of a moisture measuring device. The coagulate (resin composition (C)) contained 40% by weight of the fine polymer particles (A) and 60% by weight of the resin (B) with respect to 100% by weight of the total amount of the fine polymer particles (A) and the resin (B). Table 3 summarizes the results.

(Example 6)

The resin mixing step and the shearing step were carried out in the same manner as in Example 5, except that the amount of the latex precursor (L-1) used was changed to 400 kg, the amount of the liquid epoxy resin used, which was the resin (B), was changed to 180 kg, and the retention time of the obtained mixture (580 kg) in the shearing device was changed to 1.1 seconds, to obtain a mixture of a coagulate (resin composition (A)) and a water component (latex). The temperature of the mixture obtained in the shearing step was 50°C.
(a) A part (20 to 50 g) of the mixture obtained in the shearing step was separated into a resin composition which was a coagulate containing the fine polymer particles (A) and the resin (B) and a latex, and (b) the total remaining amount (about 580 kg) was used in the coagulant adding step which is described later. The proportion of the fine polymer particles (A) and the resin (B) in the latex obtained by the above separation was 87% by weight of the fine polymer particles (A) and 13% by weight of the resin (B) with respect to 100% by weight of the total amount of the fine polymer particles (A) and the resin (B) in the latex. The solid concentration (i.e., Y value obtained by (Formula 2)) in 100% by weight of the latex was 29% by weight.

The volume-average particle size of the covered particles dispersed in the latex obtained by the above separation was measured and was found to be 240 nm, which was 1.200 times the volume-average particle size of the fine polymer particles (A) contained in the latex precursor (L-1).

Furthermore, 20 parts by weight of a 15% aqueous sodium sulfate solution was added as a coagulant to 100 parts by weight of the latex obtained by the above separation, and the resulting mixture was stirred with use of a spatula in a beaker for 2 minutes. The resulting mixture was then separated into a coagulate (resin composition) and a water component. The permeability of the obtained water component at 546 nm was measured with an ultraviolet-visible spectrophotometer, and was found to be not less than 30%. Next, the solution V was prepared in the same manner as in Example 1 with use of 1 g of the coagulate (resin composition) obtained by the above separation. The obtained solution V was measured with the ultraviolet-visible spectrophotometer to measure a permeability at the wavelength of 546 nm, which was found to be 92%.

To the total remaining amount (about 580 kg) of the mixture obtained in the shearing step, 80 kg of 15% aqueous sodium sulfate solution was added as a coagulant to obtain a mixture (coagulant adding step). The obtained mixture was then mixed with use of a pin mixer as a mixing device (the number of interlacing rotor pins and stator pins per rotation was 1600 times/rev) at a rotation speed of 300 rev/min and with a retention time of the mixture in the mixing device being 1.2 seconds (mixing step). In the above mixing step, the beating number represented by (Formula 3) was 9600 times.

The mixture obtained in the mixing step was separated into a coagulate (resin composition (C)) and a water component (C) (second separating step). The solid concentration of the obtained water component (C) was 0.15% by weight. The amount of the fine polymer particles (A) contained in 100% by weight of the coagulate (resin composition (C)) was 28.4% by weight. On the other hand, the water content of the coagulate (resin composition (C)) was 29% by weight. The coagulate (resin composition (C)) contained 40% by weight of the fine polymer particles (A) and 60% by weight of the resin (B) with respect to 100% by weight of the total amount of the fine polymer particles (A) and the resin (B). Table 3 summarizes the results.

(Example 7)

The resin mixing step and the shearing step were carried out in the same manner as in Example 5, except that the amount of the latex precursor (L-1) used was changed to 300 kg, the amount of the liquid epoxy resin used, which was the resin (B), was changed to 135 kg, and the retention time of the obtained mixture (435 kg) in the shearing device was changed to 0.4 seconds, to obtain a mixture of a coagulate (resin composition (A)) and a water component (latex). The temperature of the mixture obtained in the shearing step was 50°C.

(a) A part (20 to 50 g) of the mixture obtained in the shearing step was separated into a resin composition which was a coagulate containing the fine polymer particles (A) and the resin (B) and a latex, and (b) the total remaining amount (about 435 kg) was used in the coagulant adding step which is described later. The proportion of the fine polymer particles (A) and the resin (B) in the latex obtained by the above separation was 85% by weight of the fine polymer particles (A) and 15% by weight of the resin (B) with respect to 100% by weight of the total amount of the fine polymer particles (A) and the resin (B) in the latex. The solid concentration (i.e., Y value obtained by (Formula 2)) in 100% by weight of the latex was 32% by weight.

Furthermore, the volume-average particle size of the covered particles dispersed in the latex obtained by the above separation was measured and was found to be 208 nm, which was 1.040 times the volume-average particle size of the fine polymer particles (A) contained in the latex precursor (L-1).

Furthermore, 20 parts by weight of a 15% aqueous sodium sulfate solution was added as a coagulant to 100 parts by weight of the latex obtained by the above separation, and the resulting mixture was stirred with use of a spatula in a beaker for 2 minutes. The resulting mixture was then separated into a coagulate (resin composition) and a water component. The permeability of the obtained water component at 546 nm was measured with an ultraviolet-visible spectrophotometer, and was found to be not less than 30%. Next, the solution V was prepared in the same manner as in Example 1 with use of 1 g of the coagulate (resin composition) obtained by the above separation. The obtained solution V was measured with the ultraviolet-visible spectrophotometer to measure a permeability at the wavelength of 546 nm, which was found to be 89%.

To the total remaining amount (about 435 kg) of the mixture obtained in the shearing step, 60 kg of a 15% aqueous sodium sulfate solution was added as a coagulant to obtain a mixture (coagulant adding step). The obtained mixture was then mixed with use of a pin mixer as a mixing device (the number of interlacing rotor pins and stator pins per rotation was 1600 times/rev) at a rotation speed of 300 rev/min and with a retention time of the mixture in the mixing device being 0.4 seconds (mixing step). In the above mixing step, the beating number represented by (Formula 3) was 3200 times.

The mixture obtained in the mixing step was separated into a coagulate (resin composition (C)) and a water component (C) (second separating step). The solid concentration of the obtained water component (C) was 0.50% by weight. The amount of the fine polymer particles (A) contained in 100% by weight of the coagulate (resin composition (C)) was 27.5% by weight. On the other hand, the water content of the coagulate (resin composition (C)) was 31% by weight. The coagulate (resin composition (C)) contained 40% by weight of the fine polymer particles (A) and 60% by weight of the resin (B) with respect to 100% by weight of the total amount of the fine polymer particles (A) and the resin (B). Table 3 summarizes the results.

(Example 8)

The resin mixing step, the shearing step, the coagulant adding step, and the mixing step were carried out in the same manner as in Example 6, except that the retention time for the mixture (580 kg) obtained in the resin mixing step to reside in the shearing device in the shearing step was changed to 1.1 seconds, the mixture (about 580 kg) obtained in the coagulant adding step was mixed at the rotation speed of the mixing device being 100rev/ min and with the retention time of the mixture in the mixing device being 1.2 seconds, and the beating number represented by (Formula 3) was changed to 3200 times.

(a) A part (20 to 50 g) of the mixture obtained in the shearing step was separated into a resin composition which was a coagulate containing the fine polymer particles (A) and the resin (B) and a latex, and (b) the total remaining amount (about 580 kg) was used in the coagulant adding step which is described later. The proportion of the fine polymer particles (A) and the resin (B) in the latex obtained by the above separation was 87% by weight of the fine polymer particles (A) and 13% by weight of the resin (B) with respect to 100% by weight of the total amount of the fine polymer particles (A) and the resin (B) in the latex. The solid concentration (i.e., Y value obtained by (Formula 2)) in 100% by weight of the latex was 29% by weight.

The volume-average particle size of the covered particles dispersed in the latex obtained by the above separation was measured and was found to be 215 nm, which was 1.080 times the volume-average particle size of the fine polymer particles (A) contained in the latex precursor (L-1).

Furthermore, 20 parts by weight of a 15% aqueous sodium sulfate solution was added as a coagulant to 100 parts by weight of the latex obtained by the above separation, and the resulting mixture was stirred with use of a spatula in a beaker for 2 minutes. The resulting mixture was then separated into a coagulate (resin composition) and a water component. The permeability of the obtained water component at 546 nm was measured with an ultraviolet-visible spectrophotometer, and was found to be not less than 30%. Next, the solution V was prepared in the same manner as in Example 1 with use of 1 g of the coagulate (resin composition) obtained by the above separation. The obtained solution V was measured with the ultraviolet-visible spectrophotometer to measure a permeability at the wavelength of 546 nm, which was found to be 90%.

The mixture obtained in the mixing step was separated into a coagulate (resin composition (C)) and a water component (C) (second separating step). The solid concentration of the obtained water component (C) was 0.40% by weight. The amount of the fine polymer particles (A) contained in 100% by weight of the coagulate (resin composition (C)) was 27.9% by weight. On the other hand, the water content of the coagulate (resin composition (C)) was 30% by weight. The coagulate (resin composition (C)) contained 40% by weight of the fine polymer particles (A) and 60% by weight of the resin (B) with respect to 100% by weight of the total amount of the fine polymer particles (A) and the resin (B). Table 3 summarizes the results.

[Table 3]

EP 4 223 810 A1

53

| | Ratio [% by weight] in amount of use in resin mixing step | | Volume-average particle size ratio (covered particles/fine polymer particles (A)) | Ratio [% by weight] of content in latex | | Y value | Permeability [%] of solution X | Beating number [Number of times] | Content [% by weight] in water component (C) | Water content [% by weight] of resin composition (C) | Amount [% by weight] of fine polymer particles (A) in 100% by weight of resin composition (C) | Ratio [% by weight] of content in resin composition (C) | |
|---|---|---|---|---|---|---|---|---|---|---|---|---|---|
| | Fine polymer particles (A) | Resin (B) | | Fine polymer particles (A) | Resin (B) | | | | Solid content | | | Fine polymer particles (A) | Resin (B) |
| Example 5 | 40 | 60 | 1.200 | 91 | 9 | 17 | 93 | 96000 | 0.03 | 26 | 29.6 | 40 | 60 |
| Example 6 | 40 | 60 | 1.200 | 87 | 13 | 29 | 92 | 9600 | 0.15 | 29 | 28.4 | 40 | 60 |
| Example 7 | 40 | 60 | 1.040 | 85 | 15 | 32 | 89 | 3200 | 0.50 | 31 | 27.5 | 40 | 60 |
| Example 8 | 40 | 60 | 1.080 | 87 | 13 | 29 | 90 | 3200 | 0.40 | 30 | 27.9 | 40 | 60 |

(Example 9)

A mixture (255 kg) of 75 kg of the resin composition (C) obtained in Example 6 and 180 kg of ion exchanged water (rinse water) was mixed with use of a pin mixer as a mixing device (the number of interlacing rotor pins and stator pins per rotation was 1600 times/rev) at a rotation speed of 300 rev/min and with a retention time of the mixture in the mixing device being 7.5 seconds (rinsing step). In the above rinsing step, the beating number represented by (Formula 3) was 60000 times.

The mixture obtained in the above rinsing step was separated into a coagulate (resin composition (D)) and a water component (D). After the resin composition (D) was dried at 120°C for 60 minutes, the amount of S contained in the resin composition (D) was measured with an X-ray fluorescence analyzer SPECTROXEPOS (manufactured by SPECTRO), and was found to be 300 ppm. The coagulate (resin composition (D)) contained 40% by weight of the fine polymer particles (A) and 60% by weight of the resin (B) with respect to 100% by weight of the total amount of the fine polymer particles (A) and the resin (B). Table 4 summarizes the results.

(Example 10)

The rinsing step was carried out in the same manner as in Example 9, except that the amount of the resin composition (C) used was changed to 150 kg, the amount of the ion exchanged water used was changed to 360 kg, the retention time of the mixture (510kg) in the mixing device was changed to 3.8 seconds, and the beating number represented by (Formula 3) was changed to 30000.

The mixture obtained in the above rinsing step was separated into a coagulate (resin composition (D)) and a water component (D). The amount of S contained in the resin composition (D) was measured in the same manner as in Example 9, and was found to be 400 ppm. The coagulate (resin composition (D)) contained 40% by weight of the fine polymer particles (A) and 60% by weight of the resin (B) with respect to 100% by weight of the total amount of the fine polymer particles (A) and the resin (B). Table 4 summarizes the results.

(Example 11)

The rinsing step was carried out in the same manner as in Example 9, except that the amount of the resin composition (C) used was changed to 225 kg, the amount of the ion exchanged water used was changed to 540 kg, the retention time of the mixture (765 kg) in the mixing device was changed to 2.5 seconds, and the beating number represented by (Formula 3) was changed to 20000.

The mixture obtained in the above rinsing step was separated into a coagulate (resin composition (D)) and a water component (D). The amount of S contained in the resin composition (D) was measured in the same manner as in Example 9, and was found to be 1200 ppm. The coagulate (resin composition (D)) contained 40% by weight of the fine polymer particles (A) and 60% by weight of the resin (B) with respect to 100% by weight of the total amount of the fine polymer particles (A) and the resin (B). Table 4 summarizes the results.

(Example 12)

The rinsing step was carried out in the same manner as in Example 10, except that the rotation speed was changed to 200rev/min, the retention time of the mixture (510 kg) in the mixing device was changed to 3.8 seconds, and the beating number represented by (Formula 3) was changed to 20000.

The mixture obtained in the above rinsing step was separated into a coagulate (resin composition (D)) and a water component (D). The amount of S contained in the resin composition (D) was measured in the same manner as in Example 9, and was found to be 1100 ppm. The coagulate (resin composition (D)) contained 40% by weight of the fine polymer particles (A) and 60% by weight of the resin (B) with respect to 100% by weight of the total amount of the fine polymer particles (A) and the resin (B). Table 4 summarizes the results.

It should be noted that S in the resin composition (D) obtained in Examples 9 through 12 was derived from the coagulant and the emulsifying agent. In addition, the emulsifying agent used in the process of preparing the latex precursor (L-1) did not contain P, and the coagulant used in Example 6 did not contain P, either. Therefore, the amount of P contained in the resin composition (D) obtained in Examples 9 through 12 can be regarded as 0 ppm.

[Table 4]

| | Amount [kg] of use in rinsing step | | Beating number [Number of times] | S content [ppm] of resin composition (D) | Ratio [% by weight] of content in resin composition (D) | |
| | Resin composition (C) | Ion exchanged water | | | Fine polymer particles (A) | Resin (B) |
|---|---|---|---|---|---|---|
| Example 9 | 75 | 180 | 60000 | 300 | 40 | 60 |
| Example 10 | 150 | 360 | 30000 | 400 | 40 | 60 |
| Example 11 | 225 | 540 | 20000 | 1200 | 40 | 60 |
| Example 12 | 150 | 360 | 20000 | 1100 | 40 | 60 |

(Example 13)

400 kg of the latex precursor (L-1) was mixed with 180 kg of a liquid epoxy resin (JER828, manufactured by Mitsubishi Chemical Corporation) which was the resin (B), to obtain a mixture (resin mixing step). Next, a shearing stress was applied to the obtained mixture (580 kg) to obtain a mixture of a coagulate (resin composition (A)) containing the fine polymer particles (A) and the resin (B) and a water component (latex) in which the fine polymer particles (A) whose surfaces were covered with the resin (B) were dispersed (shearing step). In the shearing step, a high shearing emulsifier (clearance between the stirrer blade and the device wall surface was 840 $\mu$m) was used as the shearing device. In the shearing step, the mixture was passed through the high shearing emulsifier 10 times in total. The conditions for the shearing device in the shearing step were such that the shearing device had a rotation speed of 3600 rev/min in each of the 10-times shearing step, and the retention time of the mixture in the shearing device was 1.0 second (i.e. 10 seconds in total). The temperature of the mixture obtained in the shearing step in Example 13 was 50°C.

A part of the mixture obtained in the shearing step was separated into: a resin composition which was a coagulate containing the fine polymer particles (A) and the resin (B); and a latex. The volume-average particle size of the covered particles dispersed in the latex obtained by the separation was measured and was found to be 280 nm, which was 1.400 times the volume-average particle size of the fine polymer particles (A) contained in the latex precursor (L-1). The proportion of the fine polymer particles (A) and the resin (B) in the latex obtained by the separation was 81% by weight of the fine polymer particles (A) and 19% by weight of the resin (B) with respect to 100% by weight of the total amount of the fine polymer particles (A) and the resin (B) in the latex. The solid concentration (i.e., Y value obtained by (Formula 2)) in 100% by weight of the latex was 6% by weight.

Furthermore, 20 parts by weight of a 15% aqueous sodium sulfate solution was added as a coagulant to 100 parts by weight of the latex obtained by the above separation, and the resulting mixture was stirred with use of a spatula in a beaker for 2 minutes. The resulting mixture was then separated into a coagulate (resin composition) and a water component. The permeability of the obtained water component at 546 nm was measured with an ultraviolet-visible spectrophotometer, and was found to be not less than 30%. Next, the solution V was prepared in the same manner as in Example 1 with use of 1 g of the coagulate (resin composition) obtained by the above separation. The obtained solution V was measured with the ultraviolet-visible spectrophotometer to measure a permeability at the wavelength of 546 nm, which was found to be 91%.

The coagulate (resin composition (A)) was collected from the mixture obtained in the above shearing step (coagulate collecting step). A mixture (255 kg) of 75 kg of the collected coagulate (resin composition (A)) and 180 kg of ion exchanged water (rinse water) was mixed with use of a pin mixer (the number of interlacing rotor pins and stator pins per rotation was 1600 times/rev) at a rotation speed of 300 rev/min and with a retention time of the mixture in the mixing device being 7.5 seconds (rinsing step). In the above rinsing step, the beating number represented by (Formula 3) was 60000 times.

The mixture obtained in the above rinsing step was separated into a coagulate (resin composition (E)) and a water component (E). After the resin composition (E) was dried at 120°C for 60 minutes, the amount of S contained in the resin composition (E) was measured with an X-ray fluorescence analyzer SPECTROXEPOS (manufactured by SPECTRO), and was found to be 200 ppm. The coagulate (resin composition (E)) contained 40% by weight of the fine polymer particles (A) and 60% by weight of the resin (B) with respect to 100% by weight of the total amount of the fine polymer particles (A) and the resin (B). Table 5 summarizes the results.

(Example 14)

The resin mixing step, the shearing step, the separation step, and the rinsing step were carried out in the same manner as in Example 13, except that, in the rinsing step, the amount of the resin composition (A) used was changed to 225 kg, the amount of the ion exchanged water used was changed to 450 kg, the retention time of the mixture (675kg) in the mixing device was changed to 0.5 seconds, and the beating number represented by (Formula 3) was changed to 20000 times.

The mixture obtained in the above rinsing step was separated into a coagulate (resin composition (E)) and a water component (E). The amount of S contained in the resin composition (D) was measured in the same manner as in Example 13, and was found to be 400 ppm. The coagulate (resin composition (E)) contained 40% by weight of the fine polymer particles (A) and 60% by weight of the resin (B) with respect to 100% by weight of the total amount of the fine polymer particles (A) and the resin (B). Table 5 summarizes the results.

It should be noted that S in the resin composition (D) obtained in Examples 13 and 14 was derived from the emulsifying agent. In addition, the emulsifying agent used in the process of preparing the latex precursor (L-1) did not contain P, and no coagulant was used. Therefore, the amount of P contained in the resin composition (D) obtained in Examples 13 and 14 can be regarded as 0 ppm.

[Table 5]

| | Volume-average particle size ratio (covered particles/fine polymer particles (A)) | Ratio [% by weight] of content in latex | | Y value | Permeability [%] of solution X | Amount [kg] of use in rinsing step | | Beating number [Number of times] | S content [ppm] of resin composition (E) | Ratio [% by weight] of content in resin composition (E) | |
| | | Fine polymer particles (A) | Resin (B) | | | Resin composition (A) | Ion exchanged water | | | Fine polymer particles (A) | Resin (B) |
|---|---|---|---|---|---|---|---|---|---|---|---|
| Example 13 | 1.400 | 81 | 19 | 6 | 91 | 75 | 180 | 60000 | 200 | 40 | 60 |
| Example 14 | 1.400 | 81 | 19 | 6 | 91 | 225 | 450 | 20000 | 400 | 40 | 60 |

(Evaluation of resin composition)

For each of the resin compositions (D) obtained in Examples 9 through 12 and the resin compositions (E) obtained in Examples 13 and 14, organic solvent content, dispersibility, and the standard deviation of a particle size distribution was found by the methods below.

<Measurement of organic solvent content of resin composition>

The organic solvent content of the resin composition was measured with use of gas chromatography (GC-2014, manufactured by Shimadzu Corporation).

<Evaluation of dispersibility>

The resin (B) was further added to the resin composition to obtain a resin composition W in which the amount of the fine polymer particles (A) contained in 100% by weight of the resin composition was 5% by weight. The dispersibility of the fine polymer particles (A) in the resin (B) in the resin composition W thus obtained was evaluated in accordance with JIS K5101 with use of a grind gauge. Specifically, evaluation was made as follows. The composition was placed on a grind gauge, the composition on a gauge was scraped with use of a metal scraper, and the state of dispersion was visually checked. The point on the scale of the grind gauge, at which there are 5 to 10 particles (which became apparent by scraping) within a range 3 mm in width, was read. It should be noted that the lower an obtained value is, the more excellent the dispersibility is.

<Standard deviation of particle size distribution>

A mixture of 1 part by weight of the resin composition W and 1000 parts by weight of MEK as an organic solvent was mixed with use of Shaker SA31 (Yamato Scientific Co., Ltd.) at a speed of 10 for 30 minutes to prepare a solution Z. For the obtained solution Z, ZETASIZER NANO ZSP (manufactured by Marvern Panalytical Ltd.) was used to measure the particle size distribution indicated by the scattering intensity, and the standard deviation (number of samples n = 13) was calculated.

Table 6 shows the results.

[Table 6]

|  | Organic solvent [ppm] | Dispersibility [μm] | Standard deviation of particle size distribution |
|---|---|---|---|
| Example 9 | 0 | 0 | 0.087 |
| Example 10 | 0 | 0 | 0.095 |
| Example 11 | 0 | 0 | 0.064 |
| Example 12 | 0 | 0 | 0.095 |
| Example 13 | 0 | 0 | 0.156 |
| Example 14 | 0 | 0 | 0.135 |

Industrial Applicability

With an embodiment of the present invention, it is possible to efficiently obtain fine polymer particles having excellent dispersibility. Therefore, an embodiment of the present invention is preferably used in applications such as, for example, adhesive agents, coating materials, binders for reinforcement fibers, composite materials, molding materials for 3D printers, sealants, electronic substrates, ink binders, wood chip binders, binders for rubber chips, foam chip binders, binders for castings, rock mass consolidation materials for floor materials and ceramics, and urethane foams.

**Claims**

1. A latex comprising fine polymer particles (A) and a resin (B), wherein:

the fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers;

the resin (B) is, at 25°C, a liquid which has a viscosity of 100 mPa·s to 1,000,000 mPa·s, a semisolid, or a solid;

surfaces of the fine polymer particles (A) are covered with the resin (B);

the fine polymer particles (A) covered with the resin (B) have a volume-average particle size of 1.030 X$\mu$m to 4.000 X$\mu$m,

where X is a volume-average particle size of the fine polymer particles (A) before the fine polymer particles (A) are covered with the resin (B); and

the fine polymer particles (A) are contained in an amount of 50% by weight to 99% by weight and the resin (B) is contained in an amount of 1% by weight to 50% by weight, where 100% by weight represents a total amount of the fine polymer particles (A) and the resin (B).

2. The latex according to claim 1, wherein

a solution V has a permeability of not less than 30% at 546 nm,
where the solution V is obtained by the following operations:

(1) a coagulant is added to the latex to obtain a mixture, and the mixture is mixed for 2 minutes to 60 minutes;
(2) the mixture is separated into the coagulate and a water component; and
(3) 1 g of the coagulate is added to 30 g of ion exchanged water to obtain a mixture, and the mixture is shaken for 10 minutes,

wherein an amount of the coagulant added in (1) is sufficient for a permeability, at 546 nm, of the water component obtained in (2) to be not less than 30%.

3. A method of producing the latex according to claim 1, comprising:

a resin mixing step of mixing the resin (B) with a latex precursor containing the fine polymer particles (A); and
a shearing step of applying shearing stress to a mixture obtained in the resin mixing step.

4. The method according to claim 3, further comprising:

a separating step of separating a mixture obtained in the shearing step into a coagulate and the latex, wherein the shearing step includes a step of applying the shearing stress to the mixture obtained in the resin mixing step such that the following (Formula 1) is satisfied:

$$Y \leq 32 \ \ldots \ (\mathrm{Formula} \ 1)$$

where Y is obtained by the following (Formula 2):

$$Y = [\{\text{total amount of fine polymer particles (A) and resin (B) contained in latex}\} / \{\text{weight of latex}\}] \times 100 \ \ldots \ (\mathrm{Formula} \ 2).$$

5. The method according to claim 3 or 4, wherein
the resin mixing step includes a step of mixing 1% by weight to 70% by weight of the fine polymer particles (A) and 30% by weight to 99% by weight of the resin (B), where 100% by weight represents a total amount of the fine polymer particles (A) and the resin (B).

6. The method according to any one of claims 3 to 5, wherein
a mixture obtained in the shearing step has a temperature of not higher than 70°C.

7. A method of producing a resin composition, comprising:

a resin mixing step of mixing a resin (B) with a latex precursor containing fine polymer particles (A);
a shearing step of applying shearing stress to a mixture obtained in the resin mixing step;

a coagulant adding step of adding a coagulant to a mixture obtained in the shearing step; and

a mixing step of mixing a mixture obtained in the coagulant adding step, wherein

the mixing step includes a step of mixing the mixture obtained in the coagulant adding step such that a coagulate, which is obtained by separating the mixture obtained in the mixing step into the coagulate and a water component, contains not less than 20% by weight of the fine polymer particles (A) with respect to 100% by weight of the coagulate,

the fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers,

the resin (B) is, at 25°C, a liquid which has a viscosity of 100 mPa·s to 1,000,000 mPa·s, a semisolid, or a solid, and

the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B).

8. The method according to claim 7, wherein

the mixing step includes a step of mixing the mixture obtained in the coagulant adding step such that the coagulate, which is obtained by separating the mixture obtained in the mixing step into the coagulate and the water component, has a water content of not more than 45% by weight, with respect to 100% by weight of the coagulate.

9. The method according to claim 7 or 8, wherein

the mixing step includes a step of mixing the mixture obtained in the coagulant adding step such that [beating number] represented by the following (Formula 3) is not less than 5000 times:

$$[\text{Beating number}] = (\text{number of times rotor pins and stator pins interlace per rotation [times/rev]}) \times (\text{rotation speed [rev/minute]}) \times (\text{retention time [minute]}) \ldots (\text{Formula 3})$$

10. The method according to any one of claims 7 to 9, further comprising:

a separating step of separating the mixture obtained in the mixing step into the coagulate and the water component; and

a rinsing step of rinsing the coagulate obtained in the separating step, wherein

the rinsing step includes a step of mixing a mixture of the coagulate and rinse water such that, in a post-rinsing coagulate obtained by separating a mixture obtained in the rinsing step into the post-rinsing coagulate and a post-rinsing water component, amounts of sulfur (S) and phosphorus (P) which are derived from the coagulant and an emulsifying agent are not more than 5000 ppm with respect to a weight of the post-rinsing coagulate.

11. A method of producing a resin composition, comprising:

a resin mixing step of mixing a resin (B) with a latex precursor containing fine polymer particles (A);

a shearing step of applying shearing stress to a mixture obtained in the resin mixing step;

a coagulate collecting step of collecting a coagulate obtained in the shearing step; and

a rinsing step of rinsing the coagulate obtained in the coagulate collecting step, wherein

the rinsing step includes a step of mixing a mixture of the coagulate and rinse water such that, in a post-rinsing coagulate obtained by separating a mixture obtained in the rinsing step into the post-rinsing coagulate and a post-rinsing water component, an amount of sulfur (S) and phosphorus (P) derived from an emulsifying agent are not more than 2000 ppm with respect to a weight of the post-rinsing coagulate,

the fine polymer particles (A) have a graft part that is constituted by a polymer that contains, as one or more structural units, one or more structural units derived from at least one type of monomer selected from the group consisting of aromatic vinyl monomers, vinyl cyanide monomers, and (meth)acrylate monomers,

the resin (B) is, at 25°C, a liquid which has a viscosity of 100 mPa·s to 1,000,000 mPa·s, a semisolid, or a solid, and

the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B).

12. The method according to claim 10 or 11, wherein
the rinsing step includes a step of mixing the mixture of the coagulate and the rinse water such that [beating number] represented by the following (Formula 3) is not less than 25000 times:

$$[\text{Beating number}] = (\text{number of times rotor pins}$$
$$\text{and stator pins interlace per rotation [times/rev]}) \times (\text{rotation}$$
$$\text{speed [rev/minute]}) \times (\text{retention time [minute]}) \ldots (\text{Formula}$$
$$3)$$

13. The method according to any one of claims 10 to 12, wherein
the rinsing step includes a step of mixing the mixture of the coagulate and the rinse water for not less than 2 seconds.

14. A resin composition comprising:

fine polymer particles (A) which have a graft part that is constituted by a polymer that contains, as one or more structural units, one or more structural units derived from at least one type of monomer selected from the group consisting of aromatic vinyl monomers, vinyl cyanide monomers, and (meth)acrylate monomers; and
a resin (B) which is, at 25°C, a liquid that has a viscosity of 100 mPa·s to 1,000,000 mPa·s, a semisolid, or a solid, wherein
the fine polymer particles (A) are contained in an amount of 1% by weight to 70% by weight and the resin (B) is contained in an amount of 30% by weight to 99% by weight, where 100% by weight represents a total amount of the fine polymer particles (A) and the resin (B),
the resin composition substantially does not contain an organic solvent,
the resin composition contains sulfur (S) in an amount of not more than 2000 ppm,
dispersibility of the fine polymer particles (A) in a resin composition W is not more than 0 $\mu$m, when evaluated in accordance with JIS K5101 with use of a grind gauge,
wherein
the resin composition W is prepared such that the fine polymer particles (A) are contained in an amount of 5% by weight and the resin (B) is contained in an amount of 95% by weight, where 100% by weight represents a total amount of the fine polymer particles (A) and the resin (B), and
a standard deviation of a particle size distribution of the fine polymer particles (A) in a solution Z is not more than 0.250,
wherein

the solution Z is prepared by mixing a mixture of 1 part by weight of the resin composition W and 1000 parts by weight of the organic solvent with use of Shaker SA31 (Yamato Scientific Co., Ltd.) at a speed of 10 for 30 minutes, and
the particle size distribution is measured with use of ZETASIZER NANO ZSP (manufactured by Malvern Panalytical Ltd.) and is indicated by a scattering intensity.

| | | |
|---|---|---|
| **INTERNATIONAL SEARCH REPORT** | International application No. | |
| | **PCT/JP2021/035899** | |

**A. CLASSIFICATION OF SUBJECT MATTER**

*C08F 279/02*(2006.01)i; *C08J 3/16*(2006.01)i; *C08J 3/205*(2006.01)i; *C08L 51/00*(2006.01)i; *C08L 101/00*(2006.01)i; *C08L 63/00*(2006.01)i

FI: C08L51/00; C08F279/02; C08L63/00 A; C08L101/00; C08J3/205; C08J3/16

According to International Patent Classification (IPC) or to both national classification and IPC

**B. FIELDS SEARCHED**

Minimum documentation searched (classification system followed by classification symbols)

C08F279/02; C08J3/16; C08J3/205; C08L51/00; C08L101/00; C08L63/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-132495 A (MITSUBISHI RAYON CO LTD) 07 July 2011 (2011-07-07) paragraphs [0064]-[0104] | 1-14 |
| A | JP 2015-078280 A (KANEKA CORP) 23 April 2015 (2015-04-23) paragraphs [0143]-[0170] | 1-14 |
| A | WO 2020/138263 A1 (KANEKA CORP) 02 July 2020 (2020-07-02) paragraphs [0348]-[0355] | 1-14 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 December 2021** | **21 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/035899**

| Patent document cited in search report | | | Publication date (day/month/year) | Patent family member(s) | Publication date (day/month/year) |
|---|---|---|---|---|---|
| JP | 2011-132495 | A | 07 July 2011 | (Family: none) | |
| JP | 2015-078280 | A | 23 April 2015 | (Family: none) | |
| WO | 2020/138263 | A1 | 02 July 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005028546 A
- JP 5339471 A
- WO 2006070664 A
- US 5998573 A
- JP 9143238 A
- US 5322915 A
- JP 5202157 A

**Non-patent literature cited in the description**

- Sanka Boshizai Handobukku (Antioxidant Handbook). Taiseisha, 25 October 1976
- Kobunshitenkazai handobukku (Polymeric additive Handbook). CMC Publishing Co., Ltd, 07 November 2010